# EUROPEAN PATENT APPLICATION

(11) **EP 2 921 531 A1**
(43) Date of publication of application: **23.09.2015**
(21) Application number: 13855644.4
(22) Date of filing: 13.11.2013
(51) Int. Cl.: C09B 67/44, B41J 2/01, B41M 5/00, C09D 11/00, C09D 17/00, C09B 47/20

(54) **COLORING COMPOSITION, INK JET RECORDING INK, INK JET RECORDING METHOD, INK JET PRINTER CARTRIDGE, AND INK JET RECORDING MATERIAL**

(30) Priority: 15.11.2012 JP 2012251692
(71) Applicant: Fujifilm Corporation, Minato-ku Tokyo 106-8620 (JP)
(72) Inventor: FUJIE Yoshihiko, Fujinomiya-shi Shizuoka 418-8666 (JP)
(74) Representative: Hoffmann Eitle
(86) International application number: PCT/JP2013/080720
(87) International publication number: WO 2014/077291

(57) **Abstract**

The present invention provides a coloring composition, an ink for inkjet recording, an inkjet recording method, an inkjet printer cartridge, and an inkjet recording material, which may have good ozone resistance while suppressing bronze gloss, and provide neutral grey or black with other yellow and magenta.

A coloring composition comprising, for example, a compound (1A), for example, a compound (2B), and, for example, a compound (3A).

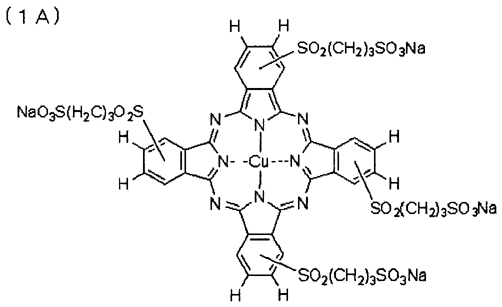

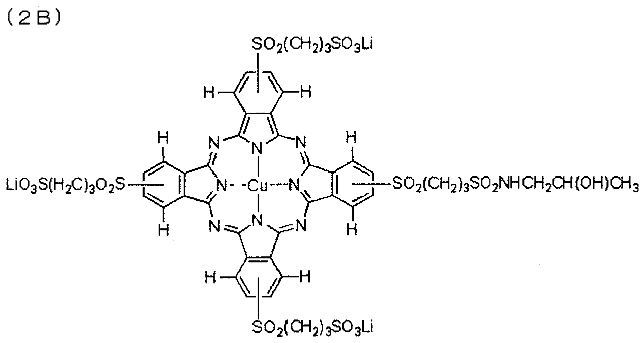

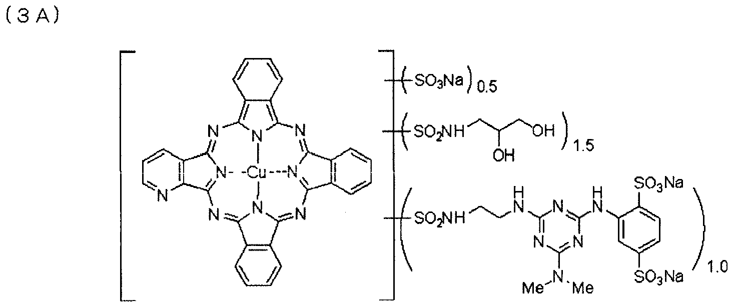

## Description

### Technical Field

The present invention relates to a coloring composition, an ink for inkjet recording, a method for inkjet recording, an inkjet printer cartridge, and an inkjet recording material, which may have good ozone resistance while suppressing bronze gloss and provide neutral grey or black when preparing composite grey or black with other yellow or magenta.

### Background Art

Recently, image-recording materials, in particular, materials for forming color images have been a mainstream, and specifically, recording materials for inkjet system, recording materials for a heat-sensitive transfer system, recording materials of electrophotographic system, transfer type silver halide photosensitive materials, printing inks, and recording pens have been widely used. In addition, in imaging elements such as CCDs for imaging devices, and in LCDs or PDPs for displays, color filters have been used for recording and reproducing color images.

In these color image recording materials or color filters, in order to reproduce or record full color images, dyes or pigments of three primary colors of a so-called subtractive color mixing method or additive color mixing method are used, but there is no fast colorant having absorption characteristics that can realize a preferred color reproduction range, and can withstand a variety of operating conditions. Thus, improvements are strongly desired.

An inkjet recording method is rapidly spread and more developed because material cost is low, high-speed recording is feasible, a noise is low while recording is performed, and color recording is easy.

The inkjet recording method includes a continuous manner that continuously disperses a liquid drop and an on-demand manner that disperses a liquid drop according to an image information signal. A discharging manner includes a manner that discharges a liquid drop by applying pressure by a piezo element, a manner that discharges a liquid drop by generating bubbles in ink by heat, a manner that uses an ultrasonic wave, and a manner that absorbs a liquid drop by electrostatic force and discharges it.

Further, an aqueous ink, an oily ink or a solid (melt type) ink is used as an ink for inkjet recording.

A colorant used as ink for inkjet recording needs to ensure favorable solubility or dispersity to a solvent, recording at a high concentration, favorable colors, fastness to light, heat, and active gas (NOₓ, SOₓ other than oxidative gas such as ozone) in an environment, excellent fastness to water or chemicals, good settlement to an image-receiving material, low spreading, excellent preservation as ink, non-toxicity, high purity, and availableness at low price.

Further, another required function of ink for inkjet recording is stability in ink discharge. Patent Document 1 describes using a phosphonate additive as a compound that can prevent ink or the like for inkjet recording from coagulating by heat.

However, it is very difficult to seek a dye that satisfies these requirements at a high level. In particular, a colorant having a good cyan color, a colorant having fastness to light, humidity, and heat, and when printing onto a water-like material having an ink receiving layer containing porous white inorganic pigment particles, a colorant having fastness to the oxidative gas such as ozone in the environment are strongly demanded. At the same time, a colorant having compatibility of ink storage stability is strongly demanded as described below.

A colorant structure of cyan used in such ink for inkjet recording includes phthalocyanine, anthraquinone, triphenylmethane, and the like, and the phthalocyanine compound having excellent color and light fastness has been used. However, since the structure does not have sufficient fastness to the oxidative gas, especially ozone, and the ink stability is not satisfied, improvement is demanded.

A phthalocyanine dye represented by Direct Blue 87 or Direct Blue 199 currently, commonly and widely used and also described in the publication, etc., is characterized by having an excellent light resistance compared with the magenta or yellow, but problems caused by the solubility of the dye tend to occur. For example, the dissolution failure occurred at the time of manufacturing causes a manufacturing trouble, or the insoluble material precipitated when preserving or using products causes problems as well. In particular, in the inkjet recording as described above, since the ink has poor storage stability such as precipitation of the dye, there is a problem in that clogging of the print head or discharge failure may occur, or the printed image may be significantly deteriorated.

Further, there is a significant problem that the colorant is easily discolored by oxidative gases such as ozone, which is often taken as recent environmental issues, and the print density is significantly decreasing.

Currently, the usage field of an inkjet recording is rapidly expanding, and the inkjet recording gets more and more widely used in households, SOHO, business field, and the like, which leads to exposure to a variety of using conditions or using environment. As a result, there occurs a problem in the ink storage stability due to the poor solubility of the cyan dye, or a problem of fading of the printed image due to exposure to light or active gases in the environment. Thus, a colorant and an ink composition having particularly good colors, an excellent fastness to light and active gases (NOₓ, SOₓ other than the oxidative gas such as ozone) in the environment, and having a high solubility are more and more strongly demanded.

Recently, as a phthalocyanine colorant to balance both color and the fastness to ozone and light, the phthalocyanine colorant having a particular sulfinyl group or a sulfonyl group is described in Patent Document 2, and the azaphthalocyanine colorant having sulfo group and a substituted sulfamoyl group is described in Patent Document 3. Regarding the phthalocyanine colorant, Patent Document 2 describes that a β-position substitution type (where each of R₁ to R₁₆ in Formula (IV) below is set to be positions 1 to 16, the one having a specific sulfonyl group or sulfinyl group at the 2- and/or 3-positions, 6- and/or 7-positions, 10-and/or 11-positions, and 14- and/or 15-positions) has excellent color and fastness to light and ozone, as compared with an α,β-position mixed type (there is no regularity in a substitution position of a substituent) as a substitution position of a substituent.

### Citation List

### Patent Documents

Patent Document 1: Japanese Patent Application Laid-Open No. 2002-317136
Patent Document 2: Japanese Patent Application Laid-Open No. 2002-249677
Patent Document 3: International Publication No. WO 2010/020802

### Summary of the Invention

However, among the phthalocyanine colorants described in Patent Document 2, with respect to the α,β-position mixed type, the ozone fastness and the print density are not sufficiently compatible. In the α,β-position mixed type as described above, the print density and the fastness are balanced by adjusting the ratio of substituted position of α-position (1, 4, 5, 8, 9, 12, 13 and 16-positions) versus β-position (2, 3, 6, 7, 10, 11, 14 and 15-positions) and controlling the association in a molecule. That is, since both have a trade-off relationship, one performance is not sufficient when the other performance is satisfied. Further, regarding the ink descried in Patent Document 1 and the azaphthalocyanine colorant described in Patent Document 3, it is found that the ozone fastness and the print density are not sufficiently compatible, and there is a room for further improvement for the print density.

In addition, the conventional ink described above cannot sufficiently suppress bronze gloss and it is difficult to obtain neutral color for grey and black printed with other pigments.

The present invention has been made in view of such circumstances, and an object thereof is to provide a color composition, an ink for inkjet printing, a method for inkjet recording, an inkjet printer cartridge, and an inkjet recording material, which may have good ozone resistance while suppressing bronze gloss and provide neutral grey or black when preparing composite grey or black with other yellow or magenta.

The present inventors have found that the aforementioned problems may be solved by a composition containing a first dye having weak associativity and superior print density, a second dye having strong association and good fastness, and a third dye having strong associativity, good fastness and low chroma as compared with a second coloring matrial. Generally, a cyan dye having high chroma is favorable in terms of color reproduction, but is unfavorable in terms of color when printing composite black with yellow, magenta and cyan colorants.

In the present invention, the first and second dyes having high chroma are mixed with the third dye having low chroma, thereby a color reproduction range having practically no problem is ensured, and in printing composite black with other yellow and magenta, neutral grey or black images can be obtained, which means that contrast functions are compatible. The effect obtained by using the first to third dyes was not predicted from each of individual spectrums. Although the functioning mechanism is unclear, a certain interaction or synergetic effect is considered to occur by using the first and second dyes in combination with the third dye.

The object of the present invention has been achieved by the following method.

[1] A coloring composition comprising a phthalocyanine dye represented by the following Formula (1), a phthalocyanine dye represented by the following Formula (2), and at least one dye selected from an azaphthalocyanine dye represented by the following Formula (12), a phthalocyanine dye represented by the following Formula (22), and Direct Blue 199. 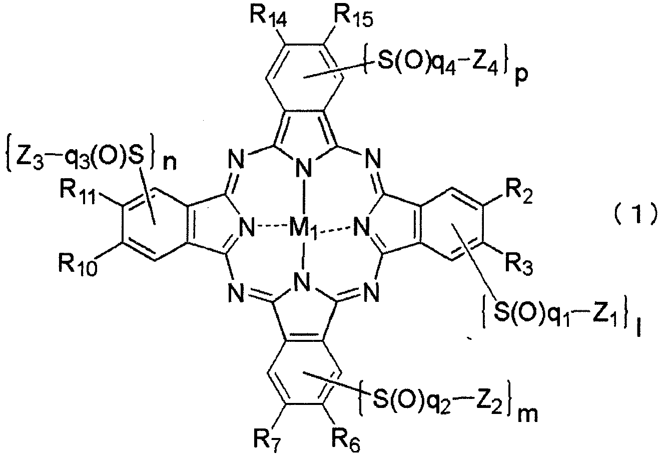 In Formula (1),
   R₂, R₃, R₆, R₇, R₁₀, R₁₁, R₁₄ and R₁₅ each independently represent a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxy group, an aryloxy group, an amide group, an arylamino group, a ureido group, a sulfamoylamino group, an alkylthio group, an arylthio group, an alkoxycarbonylamino group, a sulfonamide group, a carbamoyl group, a sulfamoyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imide group, a heterocyclic thio group, a phosphoryl group, an acyl group, or an ionic hydrophilic group. These groups may further have a substituent.
   Z₁, Z₂, Z₃ and Z₄ each independently represent a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group. However, at least one of Z₁, Z₂, Z₃ and Z₄ has an ionic hydrophilic group as a substituent.
   l, m, n, p, q₁, q₂, q₃ and q₄ each independently represent 1 or 2.
   M₁ represents a hydrogen atom, a metal element, a metal oxide, a metal hydroxide or a metal halide. 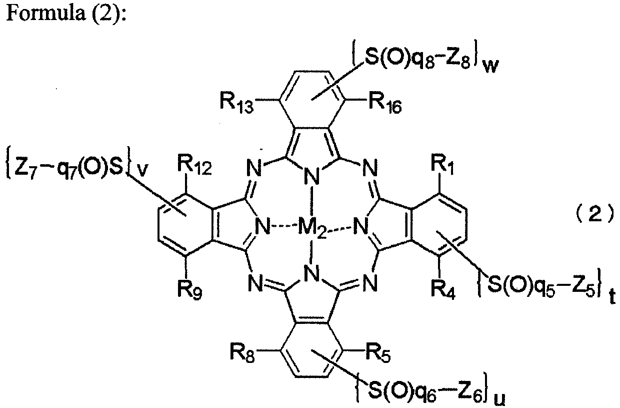 In Formula (2),
   R₁, R₄, R₅, R₈, R₉, R₁₂, R₁₃ and R₁₆ each independently represent a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxy group, an aryloxy group, an amide group, an arylamino group, a ureido group, a sulfamoylamino group, an alkylthio group, an arylthio group, an alkoxycarbonylamino group, a sulfonamide group, a carbamoyl group, a sulfamoyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imide group, a heterocyclic thio group, a phosphoryl group, an acyl group, or an ionic hydrophilic group. These groups may further have a substituent.
   Z₅, Z₆, Z₇, and Z₈ each independently represent a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group. However, at least one of Z₅, Z₆, Z₇ and Z₈ has an ionic hydrophilic group as a substituent.
   t, u, v, w, q₅, q₆, q₇ and q₈ each independently represent 1 or 2.
   M₂ represents a hydrogen atom, a metal element, a metal oxide, a metal hydroxide or a metal halide. 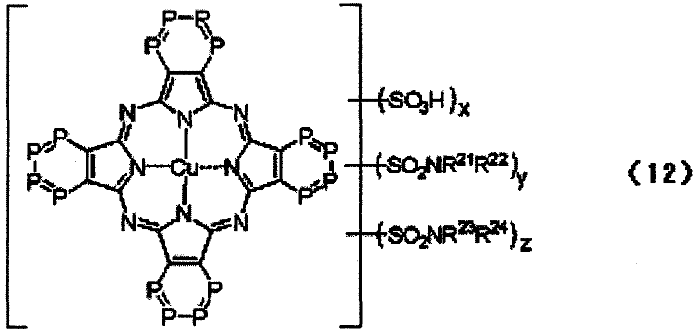 (In Formula (12),
   P's each independently represent a nitrogen atom or CH, and at least one of P's represents a nitrogen atom. However, in the four rings containing P's, the number of P's representing nitrogen atoms is 2 or less, respectively.
   R²¹ and R²² each independently represent a hydrogen atom or a substituted or unsubstituted alkyl group.
   R²³ represents a hydrogen atom or a substituted or unsubstituted hydrocarbon group.
   R²⁴ represents a substituted or unsubstituted hydrocarbon group.
   R²³ and R²⁴ may be bound to each other with a nitrogen atom to form a substituted or unsubstituted heterocyclic ring.
   x, y, and z each independently represent 0 to 4.
   x+y+z is 1 to 4.) 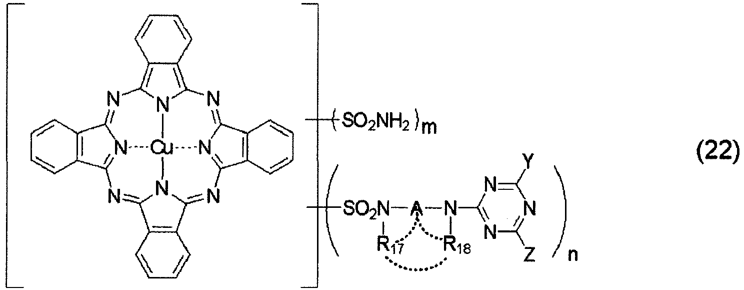 (In Formula (22),
   R₁₇ and R₁₈ each independently represent a hydrogen atom, a substituted or unsubstituted alkyl group, a substituted or unsubstituted cycloalkyl group, a substituted or unsubstituted aralkyl group, a substituted or unsubstituted aryl group, a substituted or unsubstituted heterocyclic group, or a substituted or unsubstituted alkenyl group. A represents a divalent linking group, and adjacent R₁₇, R₁₈, and A may be bound to each other to form a ring. Y and Z each independently represent a halogen atom, a hydroxyl group, a sulfonate group, a carboxyl group, an amino group, a substituted or unsubstituted alkoxy group, a substituted or unsubstituted cycloalkyloxy group, a substituted or unsubstituted aryloxy group, a substituted or unsubstituted heterocyclic oxy group, a substituted or unsubstituted aralkyloxy group, a substituted or unsubstituted alkenyloxy group, a substituted or unsubstituted alkylamino group, a substituted or unsubstituted cycloalkyl amino group, a substituted or unsubstituted arylamino group, a substituted or unsubstituted heterocyclic amino group, a substituted or unsubstituted aralkylamino group, a substituted or unsubstituted alkenyl amino group, a substituted or unsubstituted dialkylamino group, a substituted or unsubstituted alkylthio group, a substituted or unsubstituted arylthio group, a substituted or unsubstituted heterocyclic thio group, a substituted or unsubstituted aralkyl thio group, or a substituted or unsubstituted alkenylthio group. However, at least one of Y and Z has a sulfonate group, a carboxyl group, or an ionic hydrophilic group as a substituent. m and n are 1 to 3, and the sum of m and n is 2 to 4.)
[2] The coloring composition described in [1], wherein in the phthalocyanine dye represented by Formula (2), R₂, R₃, R₆, R₇, R₁₀, R₁₁, R₁₄ and R₁₅ are a hydrogen atom.
[3] The coloring composition described in [1] or [2], wherein in the phthalocyanine dye represented by Formula (2), R₁, R₄, R₅, R₈, R₉, R₁₂, R₁₃ and R₁₆ are a hydrogen atom.
[4] The coloring composition described in any one of [1] to [3], wherein in the phthalocyanine dye represented by Formula (1), Z₁, Z₂, Z₃, and Z₄ each independently represent a substituted or unsubstituted alkyl group, a substituted or unsubstituted aryl group, or a substituted or unsubstituted heterocylic group.
[5] The coloring composition described in any one of [1] to [4], wherein in the phthalocyanine dye represented by Formula (2), Z₅, Z₆, Z₇, and Z₈ each independently represent a substituted or unsubstituted alkyl group, a substituted or unsubstituted aryl group, or a substituted or unsubstituted heterocylic group.
[6] The coloring composition described in any one of [1] to [5], wherein in the phthalocyanine dye represented by Formula (2), Z₅, Z₆, Z₇, and Z₈ represent a substituted alkyl group, and at least one of the substituents possessed by the alkyl group is -SO₂NHR group (however, R represents a substituted or unsubstituted alkyl group or a substituted or unsubstituted phenyl group).
[7] The coloring composition described in any one of [1] to [6], wherein in the phthalocyanine dye represented by Formula (1), l, m, n and p are 1.
[8] The coloring composition described in any one of [1] to [7], wherein in the phthalocyanine dye represented by Formula (2), t, u, v and w are 1.
[9] The coloring composition described in any one of [1] to [8], wherein in the phthalocyanine dye represented by Formula (1), q₁, q₂, q₃ and q₄ are 2.
[10] The coloring composition described in any one of [1] to [9], wherein in the phthalocyanine dye represented by Formula (2), q₅, q₆, q₇ and q₈ are 2.
[11] The coloring composition described in any one of [1] to [10], wherein the mass ratio of the phthalocyanine dye represented by Formula (1) and the phthalocyanine dye represented by Formula (2), is 50/50 to 10/90.
[12] The coloring composition described in any one of [1] to [11], wherein the content of the phthalocyanine dye represented by Formula (1) is 1% by mass to 20% by mass.
[13] The coloring composition described in any one of [1] to [12], wherein the azaphthalocyanine dye represented by Formula (12) is an azaphthalocyanine dye represented by the following Formula (13-1) or the following Formula (13-2). 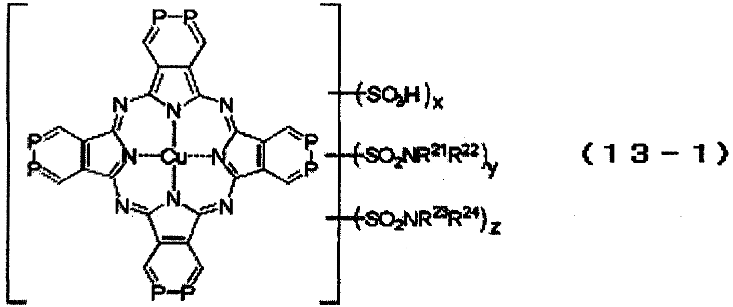 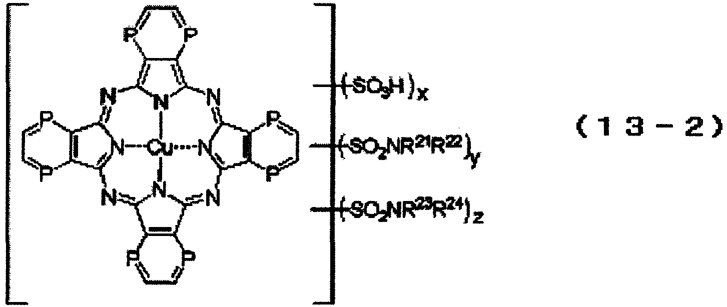 (In Formula (13-1) and Formula (13-2),
   P's each independently represent a nitrogen atom or CH, and at least one of P's represents a nitrogen atom.
   R²¹ and R²² each independently represent a hydrogen atom or a substituted or unsubstituted alkyl group.
   R²³ represents a hydrogen atom, a substituted or unsubstituted alkyl group, or a substituted or unsubstituted aryl group.
   R²⁴ represents a substituted or unsubstituted alkyl group, or a substituted or unsubstituted aryl group.
   x, y, and z each independently represent 0 to 4.
   x+y+z is 1 to 4).
[14] The coloring composition described in any one of [1] to [13], wherein in Formula (12), Formula (13-1), or Formula (13-2), R²³ represents a hydrogen atom, R²⁴ is a substituted alkyl group substituted with a substituent represented by the following Formula (T1). 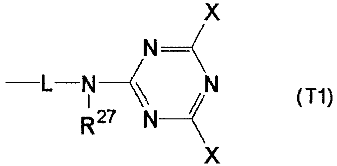 (In Formula (T1),
   L represents a single bond or a substituted or unsubstituted alkylene group.
   X's each independently represent a substituent selected from -OR²⁵, -SR²⁵, and - NR²⁵R²⁶; R²⁵ and R²⁶ each independently represent a hydrogen atom, a substituted or unsubstituted alkyl group, a substituted or unsubstituted aryl group, or a substituted or unsubstituted heterocyclic group; and at least one of R²⁵ and R²⁶ has an ionic hydrophilic group as a substituent. R²⁷ represents a hydrogen atom or a substituted or unsubstituted alkyl group).
[15] The coloring composition described in [14], wherein a substituent represented by Formula (T1) is a substituent represented by the following Formula (T2). 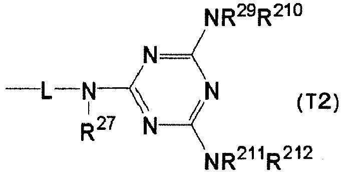 (In Formula (T2),
   L represents a single bond or a substituted or unsubstituted alkylene group.
   R²⁹, R²¹⁰, and R²¹¹ each independently represent a hydrogen atom, or a substituted or unsubstituted alkyl group, and R²¹² represents a substituted alkyl group, a substituted aryl group, or a substituted heterocyclic group, and has at least one ionic hydrophilic group as a substituent. R²⁷ represents a hydrogen atom or a substituted or unsubstituted alkyl group).
[16] The coloring composition described in any one of [1] to [15], wherein the phthalocyanine dye represented by Formula (22) is a phthalocyanine dye represented by the following Formula (22-1). 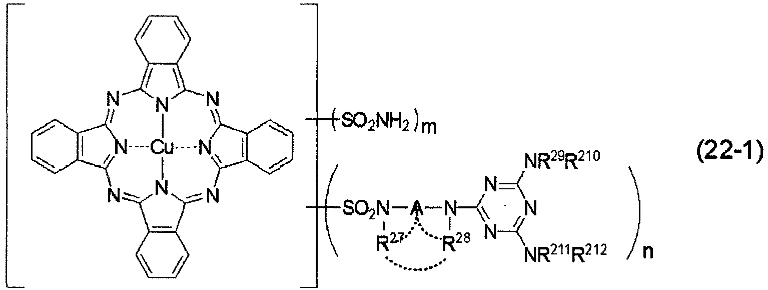 (In Formula (22-1),
   R²⁷ and R²⁸ each independently represent a hydrogen atom, a substituted or unsubstituted alkyl group, a substituted or unsubstituted cycloalkyl group, a substituted or unsubstituted aralkyl group, a substituted or unsubstituted aryl group, a substituted or unsubstituted heterocyclic group, or a substituted or unsubstituted alkenyl group. A represents a divalent linking group, and adjacent R²⁷, R²⁸, and A may be bound to each other to form a ring.
   R²⁹, R²¹⁰, and R²¹¹ each independently represent a hydrogen atom, or a substituted or unsubstituted alkyl group, and R²¹² represents a sulfonate group, a carboxyl group, a substituted alkyl group, a substituted aryl group, or a substituted heterocyclic group, and has at least one ionic hydrophilic group as a substituent. m and n are 1 to 3, and the sum of m and n is 2 to 4).
[17] An ink for inkjet recording comprising the coloring composition described in any one of [1] to [16].
[18] An inkjet recording method using the ink for inkjet recording described in [17].
[19] An ink cartridge refilled with the ink for inkjet recording described in [17].
[20] An inkjet recording material which forms a color image using the ink for inkjet recording described in [17].

According to the present invention, a coloring composition, an ink for inkjet recording, a method for inkjet recording, an inkjet printer cartridge, and an inkjet recording material, which may have good ozone resistance while suppressing bronze gloss and provide neutral grey or black when preparing composite grey or black with other yellow or magenta, are provided.

### Description of Embodiments

In the present invention, Group A of substituents is defined as follows.

### (Group A of Substituents)

A halogen atom (e.g., a chlorine atom, a bromine atom); a straight or a branched alkyl group having 1 to 12 carbon atoms, an aralkyl group having 7 to 18 carbon atoms, an alkenyl group having 2 to 12 carbon atoms, a straight or a branched alkynyl group having 2 to 12 carbon atoms, a cycloalkyl group having 3 to 12 carbon atoms, which may have a side chain, a cycloalkenyl group having 3 to 12 carbon atoms, which may have a side chain (specific examples of such groups include methyl, ethyl, propyl, isopropyl, t-butyl, 2-methanesulfonylethyl, 3-phenoxypropyl, trifluoromethyl, cyclopentyl); an aryl group (e.g., phenyl, 4-t-butylphenyl, 2,4-di-t-amylphenyl); a heterocyclic group (e.g., imidazolyl, pyrazolyl, triazolyl, 2-furyl, 2-thienyl, 2-pyrimidinyl, 2-benzothiazolyl); an alkyloxy group (e.g., methoxy, ethoxy, 2-methoxyethoxy, 2-methanesulfonyl-ethoxy); an aryloxy group (e.g., phenoxy, 2-methylphenoxy, 4-t-butylphenoxy, 3-nitrophenoxy, 3-t-butyloxycarbamoylphenoxy, 3-methoxycarbamoyl); an acylamino group (e.g., acetamide, benzamide, 4-(3-t-butyl-4-hydroxyphenoxy)butanamide); an alkylamino group (e.g., methylamino, butylamino, diethylamino, methylbutylamino); an anilino group (e.g., phenylamino, 2-chloroanilino); an ureido group (e.g., phenylureido, methylureido, N,N-dibutyl ureido); a sulfamoylamino group (e.g., N,N-dipropylsulfamoylamino); an alkylthio group (e.g., methylthio, octylthio, 2-phenoxyethylthio); an arylthio group (e.g., phenylthio, 2-butoxy-5-t-octylphenylthio, 2-carboxyphenylthio); an alkyloxycarbonylamino group (e.g., methoxycarbonylamino); a sulfonamide group (e.g., methanesulfonamide, benzenesulfonamide, p-toluenesulfonamide, octadecane); a carbamoyl group (e.g., N-ethylcarbamoyl, N,N-dibutylcarbamoyl); a sulfamoyl group (e.g., N-ethylsulfamoyl, N,N-dipropylsulfamoyl, N,N-diethylsulfamoyl); a sulfonyl group (e.g., methanesulfonyl, octanesulfonyl, benzenesulfonyl, toluenesulfonyl); an alkyloxycarbonyl group (e.g., methoxycarbonyl, butyloxy carbonyl); a heterocyclic oxy group (e.g., 1-phenyltetrazol-5-oxy, 2-tetrahydropyranyloxy); an azo group (e.g., phenylazo, 4-methoxyphenylazo, 4-pivaloylaminophenylazo, 2-hydroxy-4-propanoylphenylazo); an acyloxy group (e.g., acetoxy); a carbamoyloxy group (e.g., N-methylcarbamoyloxy, N-phenylcarbamoyloxy); a silyloxy group (e.g., trimethylsilyloxy, dibutylmethylsilyloxy); an aryloxycarbonylamino group (e.g., phenoxycarbonylamino); an imide group (e.g., N-succinimide, N-phthalimide); a heterocyclic thio group (e.g., 2-Benzothiazolylthio, 2,4-di-phenoxy-1,3,5-triazole-6-thio, 2-pyridyldithio); a sulfinyl group (e.g., 3-phenoxypropylsulfinyl); a phosphonyl group (e.g., phenoxyphosphonyl, octyloxy phosphonyl, phenyl phosphonyl); an aryloxycarbonyl group (e.g., phenoxycarbonyl); an acyl group (e.g., acetyl, 3-phenylpropanoyl, benzoyl); an ionic hydrophilic group (e.g., a carboxyl group, a sulfo group, and quaternary ammonium groups); and other cyano groups, a hydroxyl group, a nitro group, and an amino group.

The coloring composition of the present invention contains a phthalocyanine dye represented by the following Formula (1), a phthalocyanine dye represented by the following Formula (2), and at least one dye selected from an azaphthalocyanine dye represented by the following Formula (12), a phthalocyanine dye represented by the following Formula (22), and Direct Blue 199. It is considered that by combining the phthalocyanine dye represented by Formula (1), the phthalocyanine dye represented by Formula (2), and, as a third dye, at least one dye selected from the azaphthalocyanine dye represented by Formula (12), the phthalocyanine dye represented by Formula (22), and the Direct Blue 199, a certain interaction occurs and, as a result, an effect is exhibited, in which ozone resistance is improved, bronze gloss is suppressed, and neutral grey or black color is obtained when preparing composite grey or black with other yellow and magenta.

### [Phthalocyanine Dye Represented by Formula (1)]

First, the phthalocyanine dye represented by Formula (1) will be explained in detail.

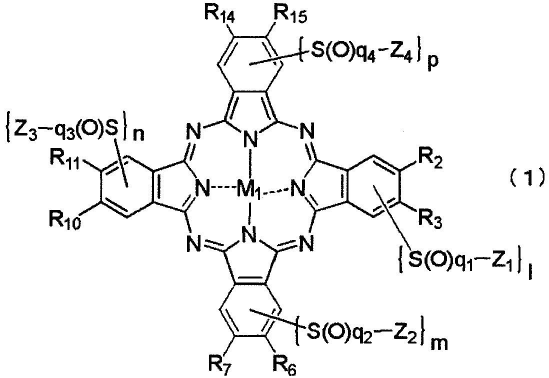

In Formula (1),
R₂, R₃, R₆, R₇, R₁₀, R₁₁, R₁₄ and R₁₅ each independently represent a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxy group, an aryloxy group, an amide group, an arylamino group, a ureido group, a sulfamoylamino group, an alkylthio group, an arylthio group, an alkoxycarbonylamino group, a sulfonamide group, a carbamoyl group, a sulfamoyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imide group, a heterocyclic thio group, a phosphoryl group, an acyl group, or an ionic hydrophilic group. These groups may further have a substituent.
Z₁, Z₂, Z₃ and Z₄ each independently represent a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group. However, at least one of Z₁, Z₂, Z₃ and Z₄ has an ionic hydrophilic group as a substituent
l, m, n, p, q₁, q₂, q₃ and q₄ each independently represent 1 or 2.
M₁ represents a hydrogen atom, a metal element, a metal oxide, a metal hydroxide, or a metal halide.

In Formula (1), R₂, R₃, R₆, R₇, R₁₀, R₁₁, R₁₄ and R₁₅ each independently represent a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxy group, an aryloxy group, an amide group, an arylamino group, a ureido group, a sulfamoylamino group, an alkylthio group, an arylthio group, an alkoxycarbonylamino group, a sulfonamide group, a carbamoyl group, a sulfamoyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imide group, a heterocyclic thio group, a phosphoryl group, an acyl group, or an ionic hydrophilic group. These groups may further have a substituent. The substituent may be Group A of substituents as described above.

Examples of the halogen atom represented by R₂, R₃, R₆, R₇, R₁₀, R₁₁, R₁₄ and R₁₅ include a fluorine atom, a chlorine atom and a bromine atom.

The alkyl group represented by R₂, R₃, R₆, R₇, R₁₀, R₁₁, R₁₄ and R₁₅ includes an alkyl group having a substituent and an unsubstituted alkyl group. The alkyl group is preferably an alkyl group having 1 to 12 carbon atoms when excluding the substituent. Examples of the substituent include a hydroxyl group, an alkoxy group, a cyano group, a halogen atom, and an ionic hydrophilic group. Examples of the alkyl group include methyl, ethyl, butyl, isopropyl, t-butyl, hydroxyethyl, methoxyethyl, cyanoethyl, trifluoromethyl, 3-sulfopropyl, and 4-sulfobutyl.

The cycloalkyl group represented by R₂, R₃, R₆, R₇, R₁₀, R₁₁, R₁₄ and R₁₅ includes a cycloalkyl group having a substituent and an unsubstituted cycloalkyl group. The cycloalkyl group is preferably a cycloalkyl group having 5 to 12 carbon atoms when excluding the substituent. Examples of the substituent include an ionic hydrophilic group. Examples of the cycloalkyl group include a cyclohexyl group.

The alkenyl group represented by R₂, R₃, R₆, R₇, R₁₀, R₁₁, R₁₄ and R₁₅ includes an alkenyl group having a substituent and an unsubstituted alkenyl group. The alkenyl group is preferably an alkenyl group having 2 to 12 carbon atoms when excluding the substituent. Examples of the substituent include an ionic hydrophilic group. Examples of the alkenyl group include a vinyl group, an allyl group, or the like.

The aralkyl group represented by R₂, R₃, R₆, R₇, R₁₀, R₁₁, R₁₄ and R₁₅ includes an aralkyl group having a substituent and an unsubstituted aralkyl group. The aralkyl group is preferably an aralkyl group having 7 to 12 carbon atoms when excluding the substituent. Examples of the substituent include an ionic hydrophilic group. Examples of the aralkyl group include a benzyl group and a 2-phenethyl group.

The aryl group represented by R₂, R₃, R₆, R₇, R₁₀, R₁₁, R₁₄ and R₁₅ includes an aryl group having a substituent and an unsubstituted aryl group. The aryl group is preferably an aryl group having 6 to 12 carbon atoms when excluding the substituent is preferred. Examples of the substituent include an alkyl group, an alkoxy group, a halogen atom, alkylamino group, and an ionic hydrophilic group. Examples of the aryl group include phenyl, p-tolyl, p-methoxyphenyl, o-chlorophenyl, and m-(3-sulfopropylamino)phenyl.

The heterocyclic group represented by R₂, R₃, R₆, R₇, R₁₀, R₁₁, R₁₄ and R₁₅ includes a heterocyclic group having a substituent and an unsubstituted heterocyclic group. The heterocyclic group is preferably a 5-membered or 6-membered heterocyclic group. Examples of the substituent include an ionic hydrophilic group. Examples of the heterocyclic group include a 2-piridyl group, a 2-thienyl group, and a 2-furyl group.

The alkylamino group represented by R₂, R₃, R₆, R₇, R₁₀, R₁₁, R₁₄ and R₁₅ includes an alkylamino group having a substituent and an unsubstituted alkylamino group. The alkylamino group is preferably an alkylamino group having 1 to 6 carbon atoms when excluding the substituent. Examples of the substituent include an ionic hydrophilic group. Examples of the alkylamino group include a methylamino group and a diethylamino group.

The alkoxy group represented by R₂, R₃, R₆, R₇, R₁₀, R₁₁, R₁₄ and R₁₅ includes an alkoxy group having a substituent and an unsubstituted alkoxy group. The alkoxy group is preferably an alkoxy group having 1 to 12 carbon atoms when excluding the substituent. Examples of the substituent include an alkoxy group, a hydroxyl group, and an ionic hydrophilic group. Examples of the alkoxy group include a methoxy group, an ethoxy group, an isopropoxy group, a methoxyethoxy group, a hydroxyethoxy group, and a 3-carboxypropoxy group.

The aryloxy group represented by R₂, R₃, R₆, R₇, R₁₀, R₁₁, R₁₄ and R₁₅ includes an aryloxy group having a substituent and an unsubstituted aryloxy group. The aryloxy group is preferably an aryloxy group having 6 to 12 carbon atoms when excluding the substituent. Examples of the substituent include an alkoxy group and an ionic hydrophilic group. Examples of the aryloxy group include a phenoxy group, a p-methoxyphenoxy group, and an o-methoxyphenoxy group.

The amide group represented by R₂, R₃, R₆, R₇, R₁₀, R₁₁, R₁₄ and R₁₅ includes an amide group having a substituent and an unsubstituted amide group. The amide group is preferably an amide group having 2 to 12 carbon atoms when excluding the substituent. Examples of the substituent include an ionic hydrophilic group. Examples of the amide group include an acetamide group, a propionamide group, a benzamide group, and a 3,5-disulfobenzamide group.

The arylamino group represented by R₂, R₃, R₆, R₇, R₁₀, R₁₁, R₁₄ and R₁₅ includes an arylamino group having a substituent and an unsubstituted arylamino group. The arylamino group is preferably an arylamino group having 6 to 12 carbon atoms when excluding the substituent. Examples of the substituent include a halogen atom and an ionic hydrophilic group. Examples of the arylamino group include an anilino group and a 2-chloroanilino group.

The ureido group represented by R₂, R₃, R₆, R₇, R₁₀, R₁₁, R₁₄ and R₁₅ includes an ureido group having a substituent and an unsubstituted ureido group. The ureido group is preferably an ureido group having 1 to 12 carbon atoms when excluding the substituent. Examples of the substituent include an alkyl group and an aryl group. Examples of the ureido group include a 3-methylureido group, a 3,3-dimethylureido group and a 3-phenylureido group.

The sulfamoylamino group represented by R₂, R₃, R₆, R₇, R₁₀, R₁₁, R₁₄ and R₁₅ includes a sulfamoylamino group having a substituent and an unsubstituted sulfamoylamino group. Examples of the substituent include an alkyl group. Example of the sulfamoylamino group include an N,N-dipropylsulfamoylamino group.

The alkylthio group represented by R₂, R₃, R₆, R₇, R₁₀, R₁₁, R₁₄ and R₁₅ includes an alkylthio group having a substituent and an unsubstituted alkylthio group. The alkylthio group is preferably an alkylthio group having 1 to 12 carbon atoms when excluding the substituent. Examples of the substituent include an ionic hydrophilic group. Examples of the alkylthio group include a methylthio group and an ethylthio group.

The arylthio group represented by R₂, R₃, R₆, R₇, R₁₀, R₁₁, R₁₄ and R₁₅ includes an arylthio group having a substituent and an unsubstituted arylthio group. The arylthio group is preferably an arylthio group having 6 to 12 carbon atoms when excluding the substituent. Examples of the substituent include an alkyl group and an ionic hydrophilic group. Examples of the arylthio group include a phenylthio group and a p-tolylthio group.

The alkoxycarbonylamino group represented by R₂, R₃, R₆, R₇, R₁₀, R₁₁, R₁₄ and R₁₅ includes an alkoxycarbonylamino group having a substituent and an unsubstituted alkoxycarbonylamino group. The alkoxycarbonylamino group is preferably an alkoxycarbonylamino group having 2 to 12 carbon atoms when excluding the substituent. Examples of the substituent include an ionic hydrophilic group. Examples of the alkoxycarbonylamino group include an ethoxycarbonylamino group.

The sulfonamide group represented by R₂, R₃, R₆, R₇, R₁₀, R₁₁, R₁₄ and R₁₅ includes a sulfonamide group having a substituent and an unsubstituted sulfonamide group. The sulfonamide group is preferably a sulfonamide group having 1 to 12 carbon atoms when excluding the substituent. Examples of the substituent include an ionic hydrophilic group. Examples of the sulfonamide group include methanesulfonamide, benzenesulfonamide, and 3-carboxybenzenesulfonamide.

The carbamoyl group represented by R₂, R₃, R₆, R₇, R₁₀, R₁₁, R₁₄ and R₁₅ includes a carbamoyl group having a substituent and an unsubstituted carbamoyl group. Examples of the substituent include an alkyl group. Examples of the carbamoyl group include a methylcarbamoyl group and a dimethylcarbamoyl group.

The sulfamoyl group represented by R₂, R₃, R₆, R₇, R₁₀, R₁₁, R₁₄ and R₁₅ includes a sulfamoyl group having a substituent and an unsubstituted sulfamoyl group. Examples of the substituent include an alkyl group and an aryl group. Examples of the sulfamoyl group include a dimethylsulfamoyl group and a di-(2-hydroxyethyl)sulfamoyl group, and a phenylsulfamoyl group.

The alkoxycarbonyl group represented by R₂, R₃, R₆, R₇, R₁₀, R₁₁, R₁₄ and R₁₅ includes an alkoxycarbonyl group having a substituent and an unsubstituted alkoxycarbonyl group. The alkoxycarbonyl group is preferably an alkoxycarbonyl group having 2 to 12 carbon atoms when excluding the substituent. Examples of the substituent include an ionic hydrophilic group. Examples of the alkoxycarbonyl group include a methoxycarbonyl group and an ethoxycarbonyl group.

The heterocyclic oxy group represented by R₂, R₃, R₆, R₇, R₁₀, R₁₁, R₁₄ and R₁₅ includes a heterocyclic oxy group having a substituent and an unsubstituted heterocyclic oxy group. The heterocyclic oxy group is preferfably a heterocyclic oxy group having a 5-membered or 6-membered heterocyclic ring. Examples of the substituent include a hydroxyl group and an ionic hydrophilic group. Examples of the heterocyclic oxy group include a 2-tetrahydropiranyl oxy group.

The azo group represented by R₂, R₃, R₆, R₇, R₁₀, R₁₁, R₁₄ and R₁₅ includes an azo group having a substituent and an unsubstituted azo group. Examples of the azo group include a p-nitrophenylazo group.

The acyloxy group represented by R₂, R₃, R₆, R₇, R₁₀, R₁₁, R₁₄ and R₁₅ includes an acyloxy group having a substituent and an unsubstituted acyloxy group. The acyloxy group is preferably an acyloxy group having 1 to 12 carbon atoms when excluding the substituent. Examples of the substituent include an ionic hydrophilic group. Examples of the acyloxy group include an acetoxy group and a benzoyloxy group.

The carbamoyloxy group represented by R₂, R₃, R₆, R₇, R₁₀, R₁₁, R₁₄ and R₁₅ includes a carbamoyloxy group having a substituent and an unsubstituted carbamoyloxy group. Example of the substituent includes an alkyl group. Examples of the carbamoyloxy group include an N-methylcarbamoyloxy group.

The silyloxy group represented by R₂, R₃, R₆, R₇, R₁₀, R₁₁, R₁₄ and R₁₅ includes a silyloxy group having a substituent and an unsubstituted silyloxy group. Examples of the substituent include an alkyl group. Examples of the silyloxy group include a trimethylsilyloxy group.

The aryloxycarbonyl group represented by R₂, R₃, R₆, R₇, R₁₀, R₁₁, R₁₄ and R₁₅ includes an aryloxycarbonyl group having a substituent and an unsubstituted aryloxycarbonyl group. The aryloxycarbonyl group is preferably an aryloxycarbonyl group having 7 to 12 carbon atoms when excluding the substituent. Examples of the substituent include an ionic hydrophilic group. Examples of the aryloxycarbonyl group include a phenoxycarbonyl group.

The aryloxycarbonylamino group represented by R₂, R₃, R₆, R₇, R₁₀, R₁₁, R₁₄ and R₁₅ includes an aryloxycarbonylamino group having a substituent and an unsubstituted aryloxycarbonylamino group. The aryloxycarbonylamino group is preferably an aryloxycarbonylamino group having 7 to 12 carbon atoms when excluding the substituent. Examples of the substituent include an ionic hydrophilic group. Examples of the aryloxycarbonylamino group include a phenoxycarbonylamino group.

The imide group represented by R₂, R₃, R₆, R₇, R₁₀, R₁₁, R₁₄ and R₁₅ includes an imide group having a substituent and an unsubstituted imide group. Examples of the imide group include an N-phthalimide group and an N-succinimide group.

The heterocyclic thio group represented by R₂, R₃, R₆, R₇, R₁₀, R₁₁, R₁₄ and R₁₅ includes a heterocyclic thio group having a substituent and an unsubstituted heterocyclic thio group. The heterocyclic thio group is preferfably a heterocyclic thio group having a 5-membered or 6-membered heterocyclic ring. Examples of the substituent include an ionic hydrophilic group. Examples of the heterocyclic thio group include a 2-pyridylthio group.

The phosphoryl group represented by R₂, R₃, R₆, R₇, R₁₀, R₁₁, R₁₄ and R₁₅ includes a phosphoryl group having a substituent and an unsubstituted phosphoryl group. Examples of the phosphoryl group include a phenoxyphosphoryl group and a phenylphosphoryl group.

The acyl group represented by R₂, R₃, R₆, R₇, R₁₀, R₁₁, R₁₄ and R₁₅ includes an acyl group having a substituent and an unsubstituted acyl group. The acyl group is preferably an aryl group having 1 to 12 carbon atoms when excluding the substituent. Examples of the substituent include an ionic hydrophilic group. Examples of the acyl group include an acetyl group and a benzoyl group.

The ionic hydrophilic group represented by R₂, R₃, R₆, R₇, R₁₀, R₁₁, R₁₄ and R₁₅ includes a sulfo group, a carboxyl group, a quaternary ammonium group, and the like. The ionic hydrophilic group is preferably a sulfo group and a carboxyl group, and particularly preferably a sulfo group. The carboxyl group and the sulfo group may be in the form of a salt, and examples of a counter ion for forming the salt include an alkali metal ion (e.g., sodium ion, potassium ion) and organic cations (e.g., tetramethylguanidium ions).

R₂, R₃, R₆, R₇, R₁₀, R₁₁, R₁₄ and R₁₅ are preferably a hydrogen atom, a halogen atom, an alkyl group, an aryl group, a cyano group, an alkoxy group, an amide group, an ureido group, a sulfonamide group, a carbamoyl group, a sulfamoyl group, and an alkoxycarbonyl group, particularly preferably a hydrogen atom, a halogen atom, and a cyano group, and most preferably a hydrogen atom.

In Formula (1), Z₁, Z₂, Z₃ and Z₄ each independently represent a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group. However, at least one of Z₁, Z₂, Z₃ and Z₄ has an ionic hydrophilic group as a substituent. Examples of the substituent include the substituent described in the above-mentioned Group A of substituents.

The alkyl group represented by Z₁, Z₂, Z₃ and Z₄ includes an alkyl group having a substituent and an unsubstituted alkyl group. The alkyl group is preferably an alkyl group having 1 to 12 carbon atoms when excluding the substituent. Examples of the substituent include a hydroxyl group, an alkoxy group, a cyano group, an alkylamino group (RNH-, RR'N-), a carbamoyl group (-CONHR), a sulfamoyl group (-SO₂NHR, -SO₂NRR'), a sulfonylamino group (-NHSO₂R), a -SONHR group, a -SONRR' group, a halogen atom, and an ionic hydrophilic group (In addition, R and R' represent an alkyl group and a phenyl group, and they may also have a substituent. Examples of the substituent include an alkylamino group, a hydroxyl group, an ionic hydrophilic group, or the like. R and R' may form a ring by a chemical bond). Examples of the alkyl group include methyl, ethyl, butyl, n-propyl, isopropyl, t-butyl, hydroxyethyl, methoxyethyl, cyanoethyl, trifluoromethyl, 3-sulfopropyl, and 4-sulfobutyl.

The cycloalkyl group represented by Z₁, Z₂, Z₃ and Z₄ includes a cycloalkyl group having a substituent and an unsubstituted cycloalkyl group. The cycloalkyl group is preferably a cycloalkyl group having 5 to 12 carbon atoms when excluding the substituent. Examples of the substituent include an ionic hydrophilic group. Examples of the cycloalkyl group include a cyclohexyl group.

The alkenyl group represented by Z₁, Z₂, Z₃ and Z₄ includes an alkenyl group having a substituent and an unsubstituted alkenyl group. The alkenyl group is preferably an alkenyl group having 2 to 12 carbon atoms when excluding the substituent. Examples of the substituent include an ionic hydrophilic group. Examples of the alkenyl group include a vinyl group, an allyl group, or the like.

The aralkyl group represented by Z₁, Z₂, Z₃ and Z₄ includes an aralkyl group having a substituent and an unsubstituted aralkyl group. The aralkyl group is preferably an aralkyl group having 7 to 12 carbon atoms when excluding the substituent. Examples of the substituent include an ionic hydrophilic group. Examples of the aralkyl group include a benzyl group and a 2-phenethyl group.

The aryl group represented by Z₁, Z₂, Z₃ and Z₄ includes an aryl group having a substituent and an unsubstituted aryl group. The aryl group is preferably an aryl group having 6 to 12 carbon atoms when excluding the substituent. Examples of the aryl group include phenyl, p-tolyl, p-methoxyphenyl, o-chlorophenyl, m-(3-sulfopropylamino)phenyl, and m-sulfophenyl. Examples of the substituent include an alkyl group (R-), an alkoxy group (RO-), an alkylamino group (RNH-, RR'N-), a carbamoyl group (-CONHR), a sulfamoyl group (-SO₂NHR), a sulfonylamino group (-NHSO₂R), a halogen atom, and an ionic hydrophilic group (further, R and R' represent an alkyl group and a phenyl group, and R and R' may have an ionic hydrophilic group.)

The heterocyclic group represented by Z₁, Z₂, Z₃ and Z₄ includes a heterocyclic group having a substituent and an unsubstituted heterocyclic group, and furthermore, the heterocyclic group may form a condensed ring with another ring. The heterocyclic group is preferably a 5-membered or 6-membered heterocyclic group. The heterocyclic group may also form a condensed ring with another ring. Examples of the heterocyclic group, if the substitution position of the heterocyclic ring is not limited, each independently include imidazole, benzimidazole, pyrazole, benzopyrazole, triazole, thiazole, benzothiazole, isothiazole, benzisothiazole, oxazole, benzoxazole, thiadiazole, oxadiazole, pyrrole, benzo pyrrole, indole, isoxazole, benzisoxazole, thiophene, benzothiophene, furan, benzofuran, pyridine, quinoline, isoquinoline, pyridazine, pyrimidine, pyrazine, cinnoline, phthalazine, quinazoline, quinoxaline, triazine, and the like. Examples of the substituent include an alkyl group (R-), an aryl group (R-), an alkoxy group (RO-), an alkylamino group (RNH-, RR'N-), a carbamoyl group (-CONHR), a sulfamoyl group (-SO₂NHR), a sulfonyamino group (-NHSO₂R), a sulfonyl group (-SO₂R), an acylamino group (-NHCOR), a halogen atom, and an ionic hydrophilic group (further, R and R' represent an alkyl group and an aryl group, and R and R' may have an ionic hydrophilic group or a substituent having an ionic hydrophilic group).

Z₁, Z₂, Z₃ and Z₄ are preferably a substituted or unsubstituted alkyl group, a substituted or unsubstituted aryl group, and a substituted or unsubstituted heterocyclic group, more preferably a substituted alkyl group, a substituted aryl group, and a substituted heterocyclic group, and still more preferably a substituted alkyl group.

At least one of Z₁, Z₂, Z₃ and Z₄ has an ionic hydrophilic group as a substituent. Examples of the ionic hydrophilic group as a substituent include a sulfo group, a carboxyl group, a quaternary ammonium group, or the like. The ionic hydrophilic group is preferably a carboxyl group and a sulfo group, and particularly preferably a sulfo group. The carboxyl group and the sulfo group may be in the form of a salt, and examples of the counter ion for forming the salt include an alkali metal ion (e.g., sodium ion, potassium ion) and organic cations (e.g., tetramethylguanidium ions).

In Formula (1), l, m, n and p each independently represent 1 or 2. That is, 4≤l+m+n+p≤8 is satisfied. Preferably, 4≤l+m+n+p≤6 is satisfied, and most preferably, each is 1 (l=m=n=p=1).

In Formula (1), q₁, q₂, q₃ and q₄ each independently represent 1 or 2. In particular, q₁=q₂=q₃=q₄=2 is preferred.

In Formula (1), M₁ represents a hydrogen atom, a metal element, a metal oxide, a metal hydroxide or a metal halide.

Preferred examples of M₁ include, in addition to the hydrogen atom, a metal element such as Li, Na, K, Mg, Ti, Zr, V, Nb, Ta, Cr, Mo, W, Mn, Fe, Co, Ni, Ru, Rh, Pd, Os, Ir, Pt, Cu, Ag, Au, Zn, Cd, Hg, Al, Ga, In, Si, Ge, Sn, Pb, Sb, and Bi. Among them, Cu, Ni, Zn, Al, and the like are particularly preferred, and Cu is most preferred. Preferred examples of the metal oxide may include VO, GeO, and the like. Further, preferred examples of the metal hydroxide may include Si(OH)₂, Cr(OH)₂, Sn(OH)₂, and the like. Moreover, examples of the metal halide may include AlCl, SiCl₂, VC1, VCl₂, VOCl, FeCl, GaCl, ZrCl, and the like.

### [Phthalocyanine Dye Represented by Formula (2)]

Next, the phthalocyanine dye represented by Formula (2) will be described in detail.

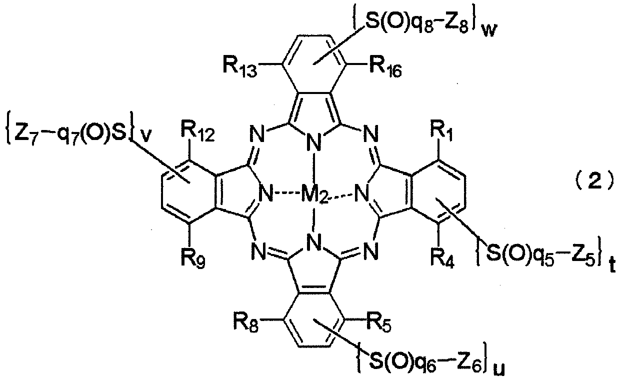

In Formula (2),
R₁, R₄, R₅, R₈, R₉, R₁₂, R₁₃ and R₁₆ are each independently the same as R₂, R₃, R₆, R₇, R₁₀, R₁₁, R₁₄ and R₁₅ in Formula (1).
Z₅, Z₆, Z₇ and Z₈ are each independently the same as Z₁, Z₂, Z₃ and Z₄ in Formula (1).
t, u, v, w, q₅, q₆, q₇ and q₈ each independently represent 1 or 2.
M₂ is the same as M₁ in Formula (1).

R₁, R₄, R₅, R₈, R₉, R₁₂, R₁₃ and R₁₆ are each independently the same as R₂, R₃, R₆, R₇, R₁₀, R₁₁, R₁₄ and R₁₅ in Formula (1), and a hydrogen atom, a halogen atom, an alkyl group, an aryl group, a cyano group, an alkoxy group, an amide group, a ureido group, a sulfonamide group, a carbamoyl group, a sulfamoyl group and an alkoxycarbonyl group are preferred; particularly, a hydrogen atom, a halogen atom, and a cyano group are more preferred; and a hydrogen atom is most preferred.

Such groups may also have a substituent. Examples of the substituent include the substituents described in the above-mentioned Group A of substituents.

Z₅, Z₆, Z₇ and Z₈ are each independently the same as Z₁, Z₂, Z₃ and Z₄ in Formula (1).

Z₅, Z₆, Z₇ and Z₈ are preferably a substituted or unsubstituted alkyl group, a substituted or unsubstituted aryl group, and a substituted or unsubstituted heterocyclic group, more preferably a substituted alkyl group, a substituted aryl group, and a substituted heterocyclic group; and still more preferably a substituted alkyl group. Further, at least one of the substituents of the substituted alkyl group is most preferably a -SO₂NHR group in terms of ozone fastness (however, R represents a substituted or unsubstituted alkyl group, or a substituted or unsubstituted phenyl group.)

The ionic hydrophilic group that at least one of Z₅, Z₆, Z₇ and Z₈ has as a substituent is the same as the ionic hydrophilic group that Z₁, Z₂, Z₃ and Z₄ in Formula (1) have as a substituent, and the preferred examples are also the same.

In Formula (2), t, u, v and w each independently represent 1 or 2. That is, 4≤t+u+v+w≤8 is satisfied. Preferably, 4≤t+u+v+w≤6 is satisfied, and most preferably, each is 1 (t=u=v=w=1).

In Formula (2), q₅, q₆, q₇ and q₈ each independently represent 1 or 2. In particular, q₅=q₆=q₇=q₈=2 is preferred.

M₂ is the same as M₁ in Formula (1), and the preferred examples are also the same.

### [Synthesis of Phthalocyanine Dye]

The phthalocyanine derivatives used in the present invention are described, for example, in Shirai Kobayashi, et al., "Phthalocyanine - Chemistry and Function -," pp. 1-62, IPC Co., Ltd., C.C. Leznoff and A. B. P. Lever, "Phthalocyanines Properties and Applications," pp. 1-54, VCH, etc., and may be synthesized by citing such publications or combining similar methods.

Hereinafter, the synthesis of the phthalocyanine dye represented by Formula (2) will be described as an example.

Among the phthalocyanine dyes represented by Formula (2) of the present invention, the compound in which R₁, R₄, R₅, R₈, R₉, R₁₂, R₁₃ and R₁₆ are hydrogen, and q₅, q₆, q₇ and q₈ are 2 may be synthesized for example, by reacting a phthalonitrile derivative represented by the following Formula (V) and/or a diiminoisoindoline derivative represented by the following Formula (VI) and a metal derivative represented by the following Formula M-(Y)d.

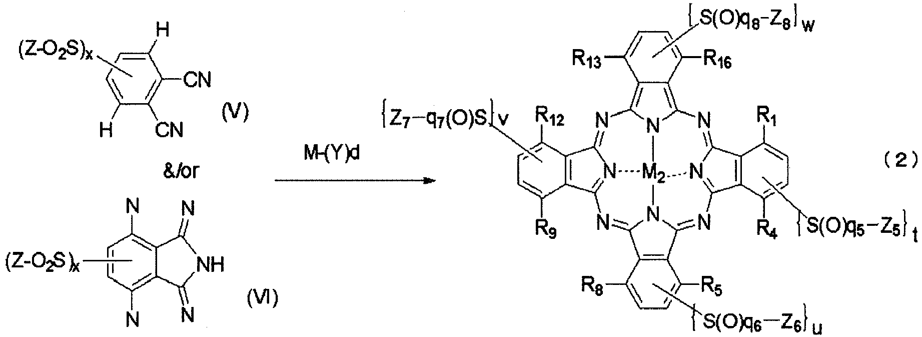

In Formula (2),
R₁, R₄, R₅, R₈, R₉, R₁₂, R₁₃ and R₁₆ are each independently the same as R₂, R₃, R₆, R₇, R₁₀, R₁₁, R₁₄ and R₁₅ in Formula (1).
Z₅, Z₆, Z₇ and Z₈ are each independently the same as Z₁, Z₂, Z₃ and Z₄ in Formula (1).
t, u, v, w, q₅, q₆, q₇ and q₈ each independently represent 1 or 2.
M and M₂ are the same as M₁ in Formula (1), and M=M₂.

The x in Formula (V) and/or Formula (VI) is the same as t, u, v, and w in Formula (2). Z represents a substituent corresponding to Z₅, Z₆, Z₇ and Z₈.

Y represents a monovalent or divalent ligand such as a halogen atom, an acetate anion, an acetylacetonate, and oxygen, and d is an integer of 1 to 4.

Examples of the metal derivative represented by M-(Y)d may include halides, carboxylic acid derivatives, sulfates, nitrates, carbonyl compounds, oxides, complexes, and the like of Al, Si, Ti, V, Mn, Fe, Co, Ni, Cu, Zn, Ge, Ru, Rh, Pd, In, Sn, Pt, and Pb. Specific examples thereof may include copper chloride, copper bromide, copper iodide, nickel chloride, nickel bromide, nickel acetate, cobalt chloride, cobalt bromide, cobalt acetate, iron chloride, zinc chloride, zinc bromide, zinc iodide, zinc acetate, vanadium chloride, vanadium oxy trichloride, palladium chloride, palladium acetate, aluminum chloride, manganese chloride, manganese acetate, acetylacetone manganese, manganese chloride, lead chloride, lead acetate, indium chloride, titanium chloride, tin chloride, and the like.

As for the used amounts of the metal derivatives and the phthalonitrile compound represented by Formula (V), a molar ratio of 1:3 to 1:6 is preferred. Further, as for the used amounts of the metal derivatives and the diiminoisoindiline derivatives represented by Formula (VI), a molar ratio of 1:3 to 1:6 is preferred.

The reaction is usually performed in the presence of solvents. As the solvent, an organic solvent having a boiling point of 80°C or more, preferably 130°C or more is used. Examples thereof may inlclude n-amyl alcohol, n-quisanol, cyclohexanol, 2-methyl-1-pentanol, 1-heptanol, 2-heptanol, 1-octanol, 2-ethylhexanol, benzyl alcohol, ethylene glycol, propylene glycol, ethoxy ethanol, propoxy ethanol, butoxy ethanol, dimethylamino ethanol, diethylamino ethanol, trichlorobenzene, chloronaphthalene, sulfolane, nitrobenzene, quinoline, urea, and the like. The amount of the solvent used is 1 to 100 times by mass, preferably 5 to 20 times by mass of the phthalonitrile compound.

In the reaction, 1, 8-diazabicyclo[5.4.0]-7-undecene (DBU) or ammonium molybdate may be added as a catalyst. The added amount is 0.1 times by mole to 10 times by mole, preferably 0.5 times by mole to 2 times by mole based on 1 mole of the phthalonitrile compound and/or diiminoisoindoline derivatives.

The reaction temperature is in the range of 80°C to 300°C, preferably in the range of 100°C to 250°C, more preferably in the range of 130°C to 230°C. If the temperature is less than 80°C, the reaction rate is extremely slow. If the temperature exceeds 300°C, the decomposition of the phthalocyanine compound is likely to occur.

The reaction time is in the range of 2 to 20 hours, preferably in the range of 5 to 15 hours, and more preferably in the range of 5 to 10 hours. If the reaction time is less than 2 hours, the unreacted raw materials are left in abundance. If the reaction time exceeds 20 hours, the decomposition of the phthalocyanine compound is likely to occur.

The product obtained by such a reaction is treated according to the method of post-processing of a conventional organic synthetic reaction, and purified or not purified before being used as a product. That is, for example, the thing which is liberated from the reaction system is not purified, or the operation of purification by recrystallization or column chromatography (e.g., gel permeation chromatography (SEPHADEXTM LH-20: manufactured by Pharmacia Co.) is performed alone or in combination with other processes to provide the products. After completion of the reaction, the reaction solvent is distilled off, or poured onto water or ice without distilling off, or neutralized or not neutralized, and the thing liberated is not purified, or the operation of purification is performed alone or in combination with other processes by recrystallization or column chromatography to provide the products. Further, after completion of the reaction, the reaction solvent is distilled off, or poured onto water or ice without distilling off, or neutralized or not neutralized, and the thing extracted with an organic solvent/water solution is not purified, or the operation of purification is performed alone or in combination with other processes by crystallization or column chromatography to provide the products.

In the thus-obtained phthalocyanine dye represented by Formula (2), the phthalocyanine compounds (e.g., in the case of t=u=vw=1) in which R₁, R₄, R₅, R₈, R₉, R₁₂, R₁₃ and R₁₆ are hydrogen, and q₅, q₆, q₇ and q₈ are 2 are usually isomers in each substitution position of Ra(SO₂-Z₅), Rb(SO₂-Z₆), Rc(SO₂-Z₇), Rd(SO₂-Z₈), which are a mixture of compounds represented by the following Formulas (a)-1 to (a)-4.

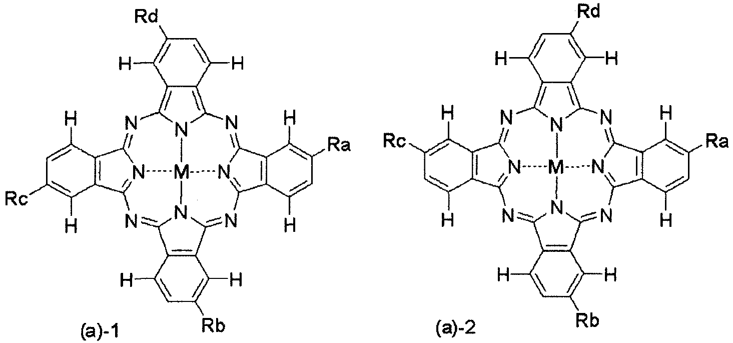

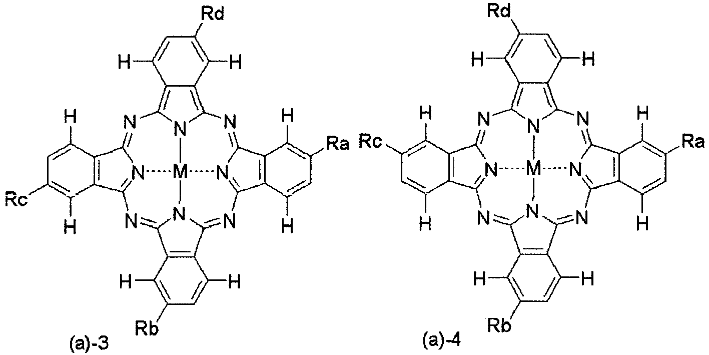

That is, the compound represented by Formulas (a)-1 to (a)-4 is β-substituted type (a phthalocyanine compound having a specific substituent at the 2- and/or 3-positions, the 6-and/or 7-positions, the 10- and/or 11-positions, and the 14- and/or 15-positions where R₁ to R₁₆ of the following Formula (IV) each correspond to the 1- to 16-positions).

The phthalocyanine dye represented by Formula (1) of the present invention corresponds to α-substituted type (a phthalocyanine compound having a specific substituent at the 1- and/or 4-positions, the 5- and/or 8- positions, the 9- and/or 12- positions, and the 13-and/or 16-positions), and the phthalocyanine dye represented by Formula (2) corresponds to β-substituted type (a phthalocyanine compound having a specific substituent at the 2- and/or 3-positions, the 6- and/or 7-positions, the 10- and/or 11-positions, and the 14- and/or 15-positions). In the present invention, even in any substituted type, it is important to have a specific substituent represented by -SO-Z and/or -SO₂-Z for good fastness.

Specific examples of the phthalocyanine dye represented by Formula (1) or Formula (2) are illustrated by using the following Formula (IV), but the phthalocyanine dye used in the present invention is not limited to the following examples.

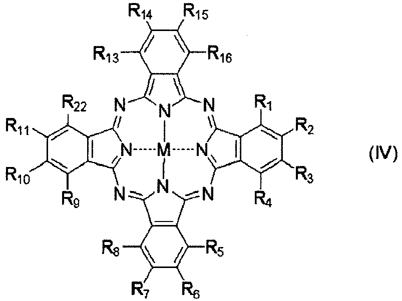

### (Examples of Phthalocyanine Dye Represented by Formula (1))

**Table 1**

| 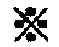 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 101 α | Cu | H, | H , H | H, | H , H | H, | H , H | H, | H , H |
| | | -SO-(CH₂)₃SO₃Na | | -SO-(CH₂)₃SO₃Na | | -SO-(CH₂)₃SO₃Na | | -SO-(CH₂)₃SO₃Na | |
| 102 α | Cu | H, | H, H | H, | H , H | H, | H , H | H, | H , H |
| | | -SO₂-(CH₂)₃SO₃Na | | -SO₂-(CH₂)₃SO₃Na | | -SO₂-(CH₂)₃SO₃Na | | -SO₂-(CH₂)₃SO₃Na | |
| 103 α | Cu | H. | H , H | H. | H , H | H, | H, H | H, | H, H |
| | | 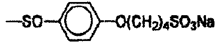 | | 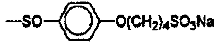 | | 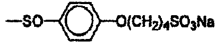 | | 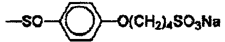 | |
| 104 α | Cu | H, | H , H | H, | H , H | H, | H , H | H, | H , H |
| | | 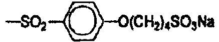 | | 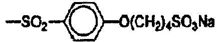 | | 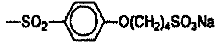 | | 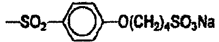 | |
| 105 α | Cu | -SO-(CH₂)₃SO₃Na, | H , H | -SO-(CH₂)₃SO₃Na, | H , H | -SO-(CH₂)₃SO₃Na, | H , H | -SO-(CH₂)₃SO₃Na, | H , H |
| | | -SO-(CH₂)₃SO₃Na | | -SO-(CH₂)₃SO₃Na | | -SO-(CH₂)₃SO₃Na | | -SO-(CH₂)₃SO₃Na | |
| 106 α | Cu | -SO₂-(CH₂)₃SO₃Na, | H , H | -SO₂-(CH₂)₃SO₃NO, | H , H | -SO₂-(CH₂)₃SO₃Na, | H , H | -SO₂-(CH₂)₂SO₃Na, | H , H |
| | | -SO₂-(CH₂)₃SO₃Na | | -SO₂-(CH₂)₃SO₃Na | | -SO₂-(CH₂)₃SO₃Na | | -SO₂-(CH₂)₂SO₃Na | |

**Table 2**

| 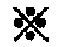 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 107 α | | H, | H , H | H, | H, H | H, | H, H | H, | H, H |
| | Cu | 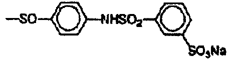 | | 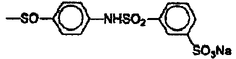 | | 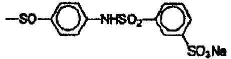 | | 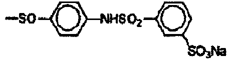 | |
| 108 α | | H, | H , H | H, | H , H | H, | H , H | H, | H , H |
| | Cu | 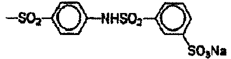 | | 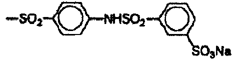 | | 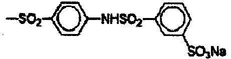 | | 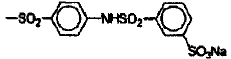 | |
| 109 α | | H, | H , H | H, | H , H | H, | H , H | H, | H , H |
| | Cu | 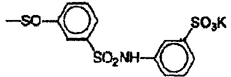 | | 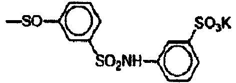 | | 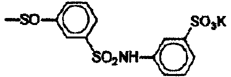 | | 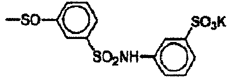 | |
| 110 α | | H. | H , H | H, | H , H | H, | H , H | H, | H , H |
| | Cu | 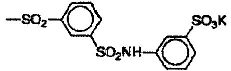 | | 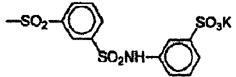 | | 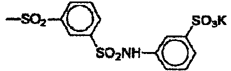 | | 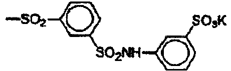 | |

**Table 3**

| 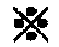 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₆ |
| 111 α | Cu | H, | H , H | H, | H , H | H, | H , H | H, | H , H |
| | | 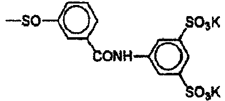 | | 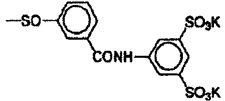 | | 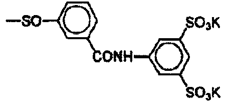 | | 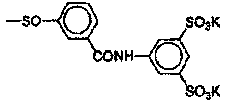 | |
| 112 α | Cu | H, | H , H | H. | H , H | H, | H , H | H, | H , H |
| | | 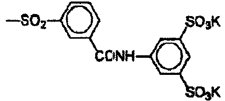 | | 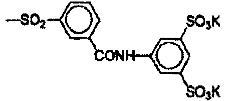 | | 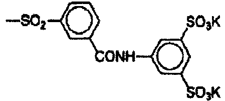 | | 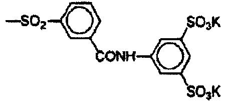 | |
| 113 α | Cu | H, | H , H | H, | H , H | H, | H , H | H, | H , H |
| | | 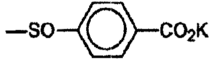 | | 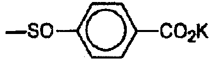 | | 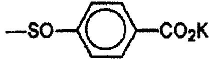 | | 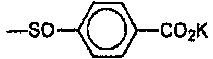 | |
| 114 α | Cu | H, | H , H | H, | H , H | H, | H , H | H, | H , H |
| | | 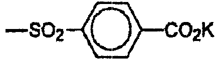 | | 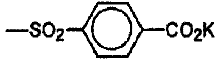 | | 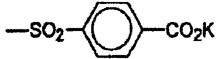 | | 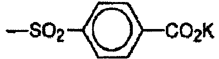 | |

**Table 4**

| 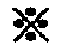 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 115 α | Cu | H, | H , H | H, | H , H | H. | H , H | H, | H, H |
| | | 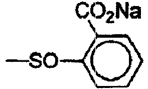 | | 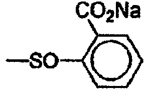 | | 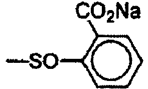 | | 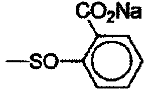 | |
| 116 α | Cu | H, | H , H | H, | H , H | H, | H, H | H, | H , H |
| | | 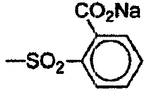 | | 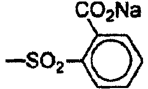 | | 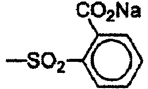 | | 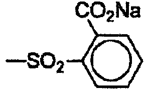 | |
| 117 α | Cu | H, | H , H | H. | H , H | H, | H , H | H, | H , H |
| | | 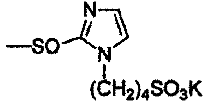 | | 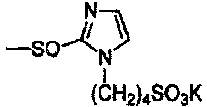 | | 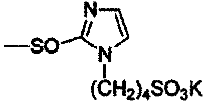 | | 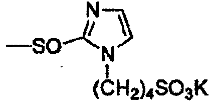 | |
| 118 α | Cu | H, | H , H | H, | H , H | H, | H, H | H, | H , H |
| | | 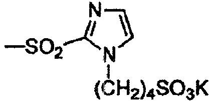 | | 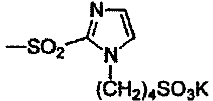 | | 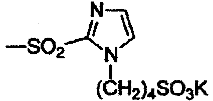 | | 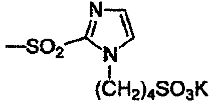 | |

**Table 5**

| 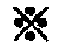 In the table, specific examples of each set of (R₁R₄) (R₂R₃)(R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 119 α | Cu | H, | H , H | H, | H , H | H, | H , H | H, | H , H |
| | | 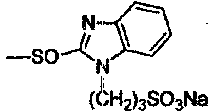 | | 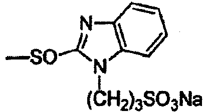 | | 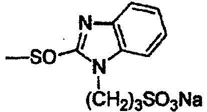 | | 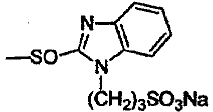 | |
| 120 α | Cu | H, | H , H | H, | H , H | H, | H , H | H, | H , H |
| | | 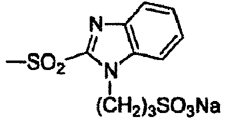 | | 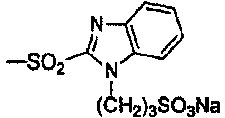 | | 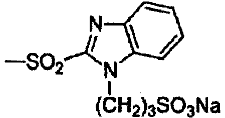 | | 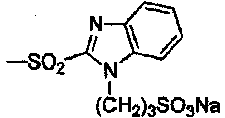 | |
| 121 α | Cu | H, | H , H | H, | H , H | H, | H , H | H, | H , H |
| | | 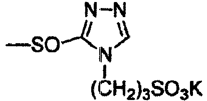 | | 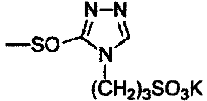 | | 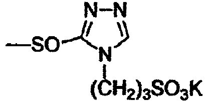 | | 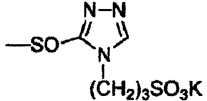 | |
| 122 α | Cu | H, | H , H | H, | H , H | H, | H , H | H, | H ,H |
| | | 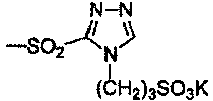 | | 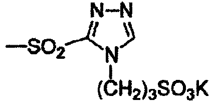 | | 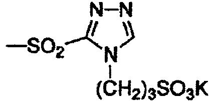 | | 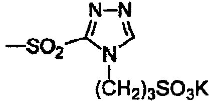 | |

**Table 6**

| 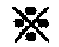 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 123 α | Cu | H, | H , H | H, | H , H | H, | H, H | H, | H , H |
| | | 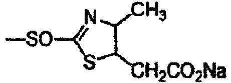 | | 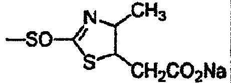 | | 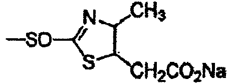 | | 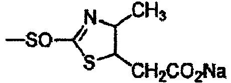 | |
| 124 α | Cu | H, | H , H | H, | H , H | H, | H , H | H, | H , H |
| | | 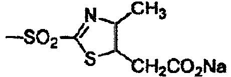 | | 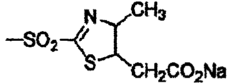 | | 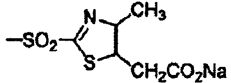 | | 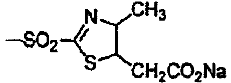 | |
| 125 α | Cu | H, | H , H | H, | H , H | H, | H , H | H, | H , H |
| | | 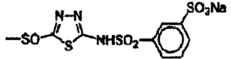 | | 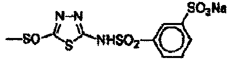 | | 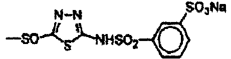 | | 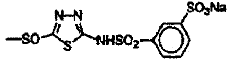 | |
| 126 α | Cu | H, | H , H | H, | H , H | H, | H , H | H, | H , H |
| | | 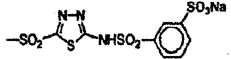 | | 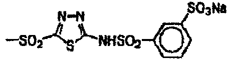 | | 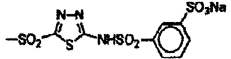 | | 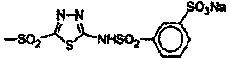 | |

**Table 7**

| 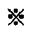 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 127 α | Cu | H. | H , H | H, | H, H | H, | H , H | H, | H, H |
| | | 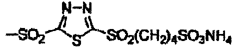 | | 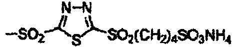 | | 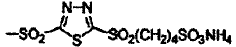 | | 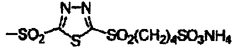 | |
| 128 α | Cu | H, | H, H | H, | H , H | H, | H , H | H, | H, H |
| | | 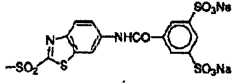 | | 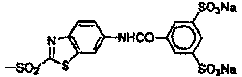 | | 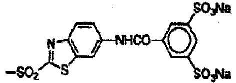 | | 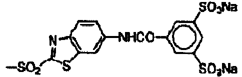 | |
| 129 α | Cu | H, | H, H | H, | H, H | H, | H , H | H, | H , H |
| | | 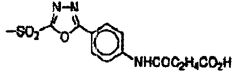 | | 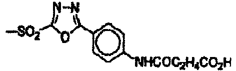 | | 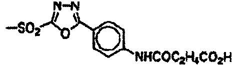 | | 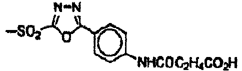 | |
| 130 α | Cu | H, | H , H | H, | H , H | H, | H , H | H, | H , H |
| | | 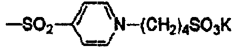 | | 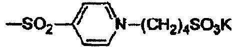 | | 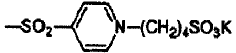 | | 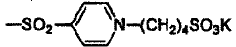 | |

**Table 8**

| 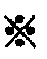 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₅R₇ | R₉R₁₂ | R₁₀R₁₁ | R₁₃R₁₆ | R₁₄R₁₅ |
| 134 α | Ni | -SO₂-(CH₂)₃SO₃Na, | H , H | -SO₂-(CH₂)₃SO₃Na, | H , H | -SO₂-(CH₂)₃SO₃Na, | H , H | -SO₂-(CH₂)₃SO₃Na, | H , H |
| | | -SO₂-(CH₂)₃SO₃Na | | -SO₂-(CH₂)₃SO₃Na | | -SO₂-(CH₂)₃SO₃Na | | -SO₂-(CH₂)₃SO₃Na | |
| 135 α | Zn | H, | H , H | H, | H , H | H, | H , H | H, | H , H |
| | | -SO₂-(CH₂)₃SO₃Na | | -SO₂-(CH₂)₃SO₃Na | | -SO₂-(CH₂)₃SO₃Na | | -SO₂-(CH₂)₃SO₃Na | |
| 136 α | Zn | H, | H , H | | H , H | | H , H | | H , H |
| | | 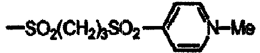 | | H, | | H, | | H, | |
| | | | | -SO₂-(CH₂)₃SO₃Na | | -SO₂-(CH₂)₃SO₃Na | | -SO₂-(CH₂)₃SO₃Na | |
| 137 a | Cu | H, | H , H | | H , H | | H , H | | H , H |
| | | 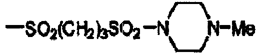 | | H, | | H, | | H, | |
| | | | | -SO₂-(CH₂)₃SO₃Na | | -SO₂-(CH₂)₃SO₃Na | | -SO₂-(CH₂)₃SO₃Na | |

### (Examples of Phthalocyanine Dye Represented by Formula (2))

### (Examples of Phthalocyanine Dye Represented by Formula (2))

**Table 9**

| 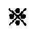 In the table, Specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 101 *β* | Cu | H , H | H, | H , H | H, | H , H | H, | H , H | H, |
| | | | -SO-(CH₂)₃SO₃Na | | -SO-(CH₂)₃SO₃Na | | -SO-(CH₂)₃SO₃Na | | -SO-(CH₂)₃SO₃Na |
| 102 *β* | Cu | H , H | H, | H , H | H, | H , H | H, | H , H | H, |
| | | | -SO₂-(CH₂)₃SO₃Na | | -SO₂-(CH₂)₃SO₃Na | | -SO₂-(CH₂)3SO₃Na | | -SO₂-(CH₂)₃SO₃Na |
| 103 *β* | Cu | H , H | H, | H , H | H, | H , H | H, | H , H | H, |
| | | | 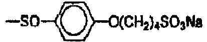 | | 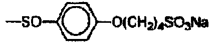 | | 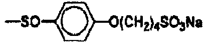 | | 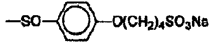 |
| 104 *β* | Cu | H , H | H, | H , H | H. | H , H | H, | H , H | H, |
| | | | 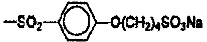 | | 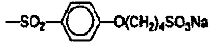 | | 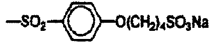 | | 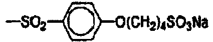 |
| 105 *β* | Cu | H , H | -SO-(CH₂)₃SO₃Na, | H , H | -SO-(CH₂)₃SO₃Na, | H , H | -SO-(CH₂)₃SO₃Na, | H , H | -SO-(CH₂)₃SO₃Na, |
| | | | -SO-(CH₂)₃SO₃Na | | -SO-(CH₂)₃SO₃Na | | -SO-(CH₂)₃SO₃Na | | -SO-(CH₂)₃SO₃Na |
| 106 *β* | Cu | H , H | -SO₂-(CH₂)₃SO₃Na, | H , H | -SO₂-(CH₂)₃SO₃Na, | H , H | -SO₂-(CH₂)₃SO₃Na, | H , H | -SO₂-(CH₂)₃SO₃Na, |
| | | | -SO₂-(CH₂)₃SO₃Na | | -SO₂-(CH₂)₃-SO₃Na | | -SO₂-(CH₂)₃SO₃Na | | -SO₂-(CH₂)₃SO₃Na |

**Table 10**

| 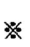 In the table, specific examples of each set of (R₁R₄) (R₂R₃) (R₆R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 107 *β* | Cu | H, H | H, | H , H | H, | H, H | H, | H , H | H, |
| | | | 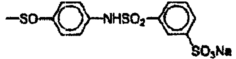 | | 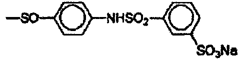 | | 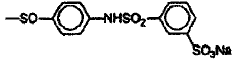 | | 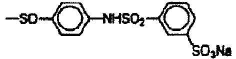 |
| 108 *β* | Cu | H , H | H, | H , H | H, | H, H | H, | H , H | H, |
| | | | 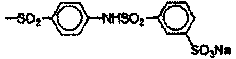 | | 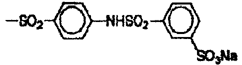 | | 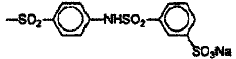 | | 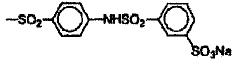 |
| 109 *β* | Cu | H , H | H, | H, H | H, | H , H | H, | H , H | H, |
| | | | 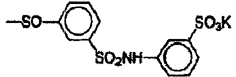 | | 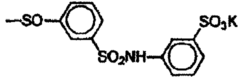 | | 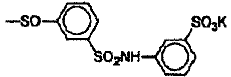 | | 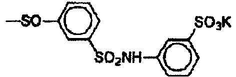 |
| 110 *β* | Cu | H , H | H, | H , H | H, | H , H | H, | H , H | H, |
| | | | 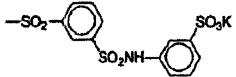 | | 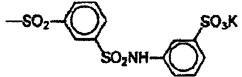 | | 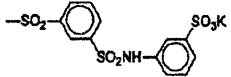 | | 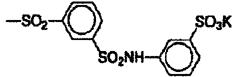 |

**Table 11**

| 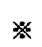 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 111 *β* | Cu | H , H | H, | H , H | H, | H , H | H, | H, H | H, |
| | | | 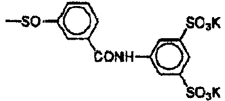 | | 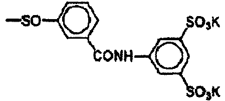 | | 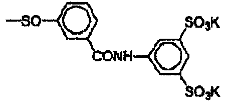 | | 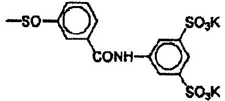 |
| 112 *β* | Cu | H , H | H, | H , H | H, | H , H | H, | H , H | H, |
| | | | 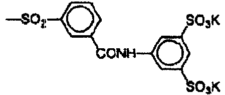 | | 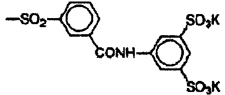 | | 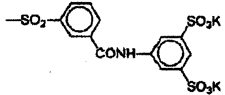 | | 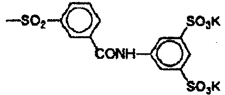 |
| 113 *β* | Cu | H , H | H. | H , H | H, | H , H | H, | H, H | H, |
| | | | 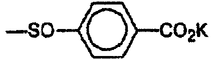 | | 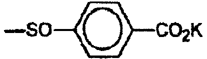 | | 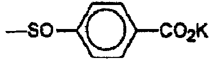 | | 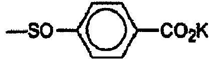 |
| 114 *β* | Cu | H , H | H, | H, H | H, | H , H | H, | H, H | H, |
| | | | 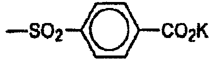 | | 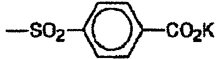 | | 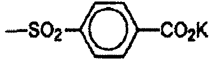 | | 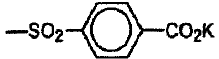 |

**Table 12**

| 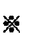 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 115 *β* | Cu | H , H | H, | H , H | H, | H , H | H. | H , H | H, |
| | | | 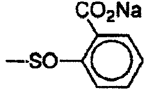 | | 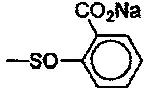 | | 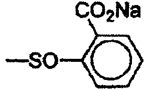 | | 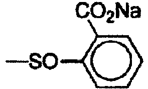 |
| 116 β | Cu | H , H | H, | H , H | H, | H , H | H, | H , H | H, |
| | | | 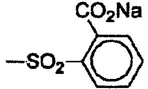 | | 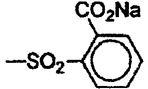 | | 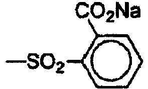 | | 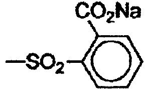 |
| 117 β | Cu | H , H | H, | H , H | H, | H , H | H, | H , H | H, |
| | | | 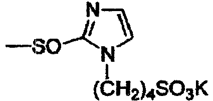 | | 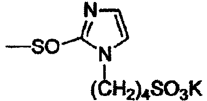 | | 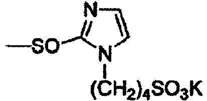 | | 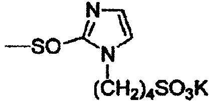 |
| 118 β | Cu | H , H | H, | H , H | H, | H , H | H, | H , H | H, |
| | | | 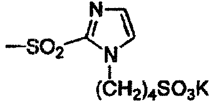 | | 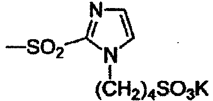 | | 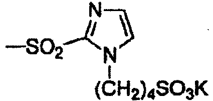 | | 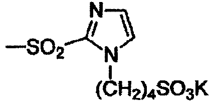 |

**Table 13**

| 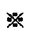 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 119 *β* | Cu | H, H | H, | H , H | H, | H , H | H, | H , H | H, |
| | | | 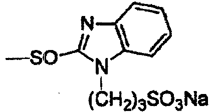 | | 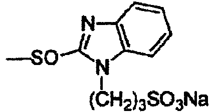 | | 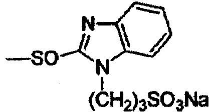 | | 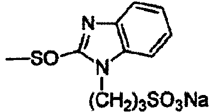 |
| 120 *β* | Cu | H , H | H, | H , H | H, | H , H | H, | H, H | H. |
| | | | 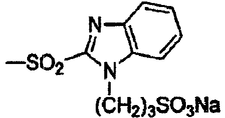 | | 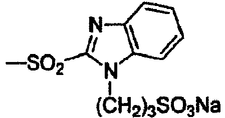 | | 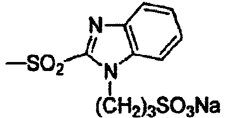 | | 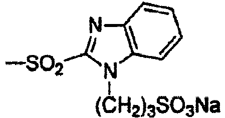 |
| 121 *β* | Cu | H , H | H. | H , H | H. | H , H | H, | H, H | H, |
| | | | 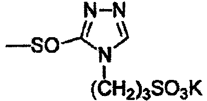 | | 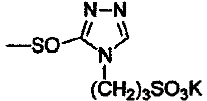 | | 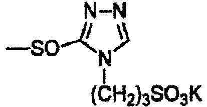 | | 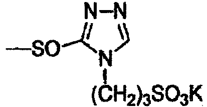 |
| 122 *β* | Cu | H , H | H, | H , H | H, | H , H | H, | H , H | H, |
| | | | 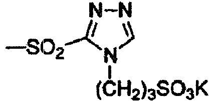 | | 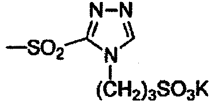 | | 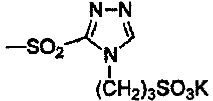 | | 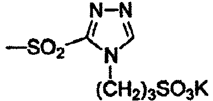 |

**Table 14**

| 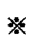 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 123 *β* | Cu | H , H | H, | H , H | H, | H , H | H, | H, H | H, |
| | | | 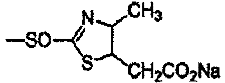 | | 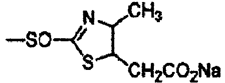 | | 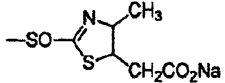 | | 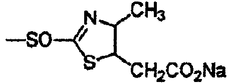 |
| 124 β | Cu | H , H | H, | H , H | H, | H , H | H, | H , H | H, |
| | | | 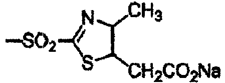 | | 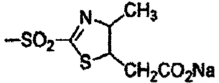 | | 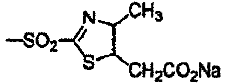 | | 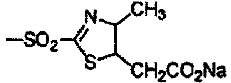 |
| 125 *β* | Cu | H , H | H, | H , H | H, | H , H | H, | H , H | H, |
| | | | 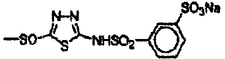 | | 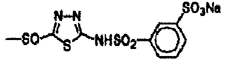 | | 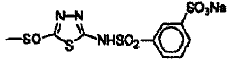 | | 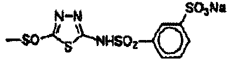 |
| 126 *β* | Cu | H , H | H, | H , H | H, | H , H | H, | H , H | H, |
| | | | 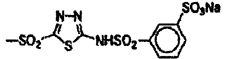 | | 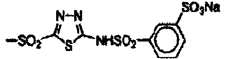 | | 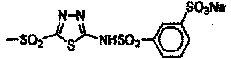 | | 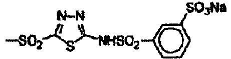 |

**Table 15**

| 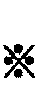 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R ₈ | R₆R₇ | R₉R₁₂ | R₁₀R₁₁ | R₁₃R₁₆ | R₁₄R₁₅ |
| 127 *β* | Cu | H , H | H, | H , H | H, | H , H | H, | H , H | H, |
| | | | 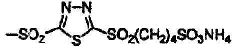 | | 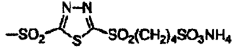 | | 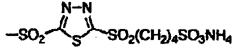 | | 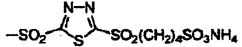 |
| 128 *β* | Cu | H , H | H, | H , H | H, | H , H | H, | H , H | H, |
| | | | 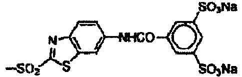 | | 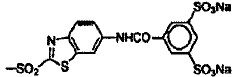 | | 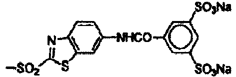 | | 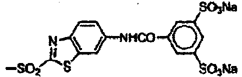 |
| 129 *β* | Cu | H , H | H, | H , H | H, | H , H | H, | H , H | H, |
| | | | 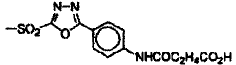 | | 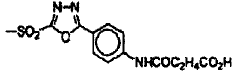 | | 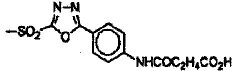 | | 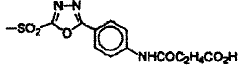 |
| 130 *β* | Cu | H , H | H, | H , H | H, | H , H | H, | H , H | H, |
| | | | 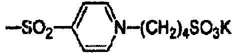 | | 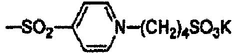 | | 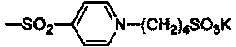 | | 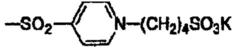 |

**Table 16**

| 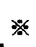 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 134 *β* | Ni | H , H | -SO2-(CH₂)₃SO₃Na, | H , H | -SO₂-(CH₂)₃SO₃Na, | H , H | -SO₂-(CH₂)3SO₃Na, | H , H | -SO₂-(CH₂)₃SO₃Na, |
| | | | -SO₂-(CH₂)₃SO₃Na | | -SO₂-(CH₂)₃SO₃Na | | -SO₂-(CH₂)₃SO₃Na | | -SO₂(CH₂)₃SO₃Na |
| 135 *β* | Zn | H , H | H, | H , H | H, | H , H | H, | H , H | H, |
| | | | -SO₂-(CH₂)₃SO₃Na | | -SO₂-(CH₂)₃SO₃Na | | -SO₂-(CH₂)₃SO₃Na | | -SO₂-(CH₂)₃SO₃Na |
| 136 *β* | Zn | H , H | H, | H , H | | H , H | | H , H | |
| | | | 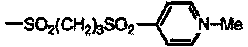 | | H, -SO₂-(CH₂)₃SO₃Na | | H, -SO₂-(CH₂)₃SO₃Na | | H, -SO₂-(CH₂)₃SO₃Na |
| 137 *β* | Cu | H , H | H, | H , H | H, | H , H | H, | H , H | H, |
| | | | -SO₂ (CH₂)₃SONHCH₂CH(OH)CH₃ | | -SO₂-(CH₂)₃SO₃Na | | -SO₂-(CH₂)₃SO₃Na | | -SO₂-(CH₂)₃SO₃Na |
| 138 *β* | Cu | H , H | H, | H , H | H, | H , H | H, | H , H | H, |
| | | | -SO₂ (CH₂)₃SONHCH₂CH (OH) CH₃ | | -SO₂(CH₂)₃SONHCH₂CH(OH) CH₃ | | -SO₂-(CH₂)₃SO₃Na | | -SO₂-(CH₂)₃SO₃Na |
| 139 *β* | Cu | H , H | 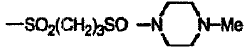 H. | H , H | H, | H , H | H, | H , H | H, |
| | | | | | -SO₂-(CH₂)₃SO₃Na | | -SO₂-(CH₂)₃SO₃Na | | -SO₂-(CH₂)₃SO₃Na |

**Table 17**

| 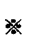 In the table, specific examples of each set of (R₁R₄) (R₂R₃) (R₅R₈) (R₆R₇) (R₉R₁₂) (R₁₀R₁₁) (R₁₃R₁₆) (R₁₄R₁₅) are each independently listed in a random order. | | | | | | | | | |
|---|---|---|---|---|---|---|---|---|---|
| Exemplary Compound | M | R₁R₄ | R₂R₃ | R₅R₈ | R₆R₇ | R₉R₁₂ | R₁₀R₁₁ | R₁₃R₁₆ | R₁₄R₁₅ |
| 140 *β* | Ni | H , H | -SO₂-(CH₂)₃SO₃Li | H , H | -SO₂-(CH₂)₃SO₃Li | H , H | -SO₂-(CH₂)₃SO₃Li | H , H | -SO₂-(CH₂)₃SO₃Li |
| | | | -SO₂-(CH₂)₃SO₃Li | | -SO₂-(CH₂)₃SO₃Li | | -SO₂-(CH₂)₃SO₃Li | | -SO₂-(CH₂)₃SO₃Li |
| 141 *β* | Cu | H , H | H, | H , H | H, | H , H | H, | H , H | H, |
| | | | -SO₂-(CH₂)₃SO₃Li | | -SO₂-(CH₂)₃SO₃Li | | -SO₂-(CH₂)₃SO₃Li | | -SO₂-(CH₂)₃SO₃Li |
| 142 *β* | Cu | H , H | H, 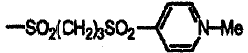 | H , H | H, | H , H | H, | H , H | H, |
| | | | | | -SO₂-(CH₂)₃SO₃Li | | -SO₂-(CH₂)₃SO₃Li | | -SO₂-(CH₂)₃SO₃Li |
| 143 *β* | Cu | H , H | H, | H , H | H, | H , H | H, | H , H | H, |
| | | | -SO₂ (CH₂)₃SO₂NHCH₂CH (OH) CH₃ | | -SO₂-(CH₂)₃SO₃Li | | -SO₂-(CH₂)₃SO₃Li | | -SO₂-(CH₂)₃SO₃Li |
| 144 *β* | Cu | H , H | H, | H , H | H, | H , H | H, | H , H | H, |
| | | | -SO₂(CH₂)₃SO₂NHCH₂CH(OH)CH₃ | | -SO₂(CH₂)₃SO₂NHCH₂CH(OH)CH₃ | | -SO₂-(CH₂)₃SO₃Li | | -SO₂-(CH₂)₃SO₃Li |
| 145 *β* | Cu | H , H | H, 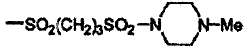 | H , H | H, | H , H | H, | H , H | H, |
| | | | | | -SO₂-(CH₂)₃SO₃Li | | -SO₂-(CH₂)₃SO₃Li | | -SO₂-(CH₂)₃SO₃Li |

### [Azaphthalocyanine Dye Represented by Formula (12)]

The coloring composition of the present invention contains the phthalocyanine dye represented by the following Formula (1), the phthalocyanine dye represented by the following Formula (2), and at least one dye selected from the azaphthalocyanine dye represented by the following Formula (12), the phthalocyanine dye represented by the following Formula (22), and Direct Blue 199. Next, the azaphthalocyanine dye represented by Formula (12) will be described in detail.

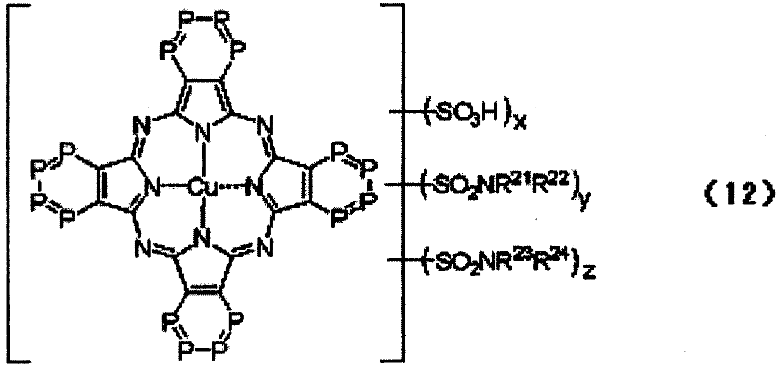

(In Formula (12),
P's each independently represent a nitrogen atom or CH, and at least one of P's represents a nitrogen atom. However, in the four rings containing P's, the number of P's representing nitrogen atoms is 2 or less, respectively.
R²¹ and R²² each independently represent a hydrogen atom or a substituted or unsubstituted alkyl group.
R²³ represents a hydrogen atom or a substituted or unsubstituted hydrocarbon group.
R²⁴ represents a substituted or unsubstituted hydrocarbon group.
R²³ and R²⁴ may be bound to each other with a nitrogen atom to form a substituted or unsubstituted heterocyclic ring.
x, y, and z each independently represent 0 to 4.
x+y+z is 1 to 4.)

The azaphthalocyanine dye represented by Formula (12) is preferably the azaphthalocyanine dye represented by the following Formula (13-1) or the following Formula (13-2).

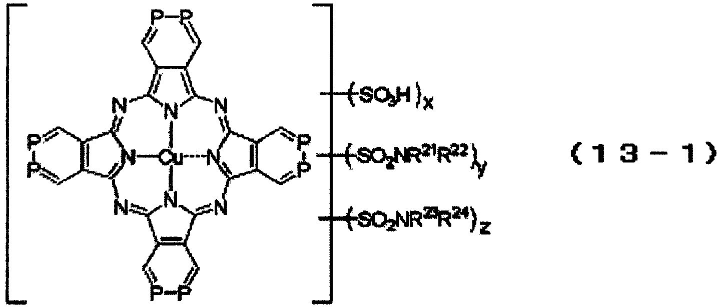

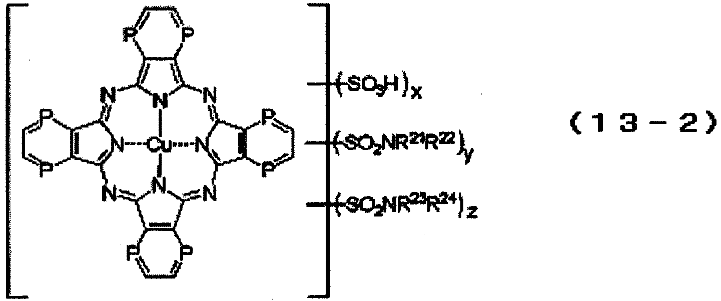

(In Formula (13-1) and Formula (13-2),
P's each independently represent a nitrogen atom or CH, and at least one of P's represents a nitrogen atom.
R²¹ and R²² each independently represent a hydrogen atom or a substituted or unsubstituted alkyl group.
R²³ represents a hydrogen atom or a substituted or unsubstituted hydrocarbon group. R²⁴ represents a substituted or unsubstituted hydrocarbon group.
R²³ and R²⁴ may be bound to each other with a nitrogen atom to form a substituted or unsubstituted heterocyclic ring.
x, y, and z each independently represent 0 to 4.
x+y+zis 1 to 4.)

x, y, z, R²¹, R²², R²³ and R²⁴ in Formula (12), Formula (13-1) and Formula (13-2) will be described.

The substituted or unsubstituted alkyl group represented by R²¹ and R²² is preferably an alkyl group having 1 to 12 carbon atoms, more preferably an alkyl group having 1 to 8 carbon atoms, and still more preferably an alkyl group having 1 to 4 carbon atoms. Examples of the substituent may include Group A of substituents, preferably a hydroxyl group, an alkoxy group, a cyano group, a halogen atom and an ionic hydrophilic group, and more preferably a hydroxyl group or an ionic hydrophilic group. The alkyl group is preferably methyl, ethyl, butyl, isopropyl, n-propyl, or t-butyl, more preferably methyl or n-propyl, and still more preferably n-propyl.

R²¹ preferably represents a methyl group or a hydrogen atom, and more preferably represents a hydrogen atom.

R²² preferably represents a hydrogen atom or a substituted or unsubstituted alkyl group having 1 to 4 carbon atoms. A substituted group having a substituent is preferably a hydroxyl group, preferably represents n-propyl or a hydrogen atom, and more preferably represents a hydrogen atom.

The substituted or unsubstituted hydrocarbon group represented by R²³ and R²⁴ is preferably a substituted or unsubstituted alkyl group, a substituted or unsubstituted heterocyclic group, or a substituted or unsubstituted aryl group.

The substituted or unsubstituted alkyl group represented by R²³ and R²⁴ is preferably an alkyl group having 1 to 12 carbon atoms, more preferably an alkyl group having 1 to 8 carbon atoms, and still more preferably an alkyl group having 1 to 4 carbon atoms when excluding the substituent. Examples of the substituent may include Group A of substituents. The alkyl group is preferably methyl, ethyl, butyl, isopropyl, and t-butyl.

The substituted or unsubstituted heterocyclic group represented by R²³ and R²⁴ is preferably a 5- or 6-membered heterocyclic ring group. Examples of the substituent may include Group A of substituents, and an ionic hydrophilic group is included. The heterocyclic group is preferably a 2-pyridyl group, a 2-thienyl group and a 2-furyl group.

The substituted or unsubstituted aryl group represented by R²³ and R²⁴ is preferably an alkyl group having 6 to 12 carbon atoms when excluding the substituent. Examples of the substituent include Group A of substituents, and preferably an alkyl group, an alkoxy group, a halogen atom, an alkylamino group and an ionic hydrophilic group. The aryl group is preferably phenyl or naphthyl.

R²³ preferably represents a methyl group or a hydrogen atom, and more preferably represents a hydrogen atom.

R²⁴ is preferably a substituent represented by the following Formula (T1).

R²³ in Formula (12), Formula (13-1) or Formula (13-2) represents a hydrogen atom, and R²⁴ preferably represents a substituent represented by the following Formula (T1).

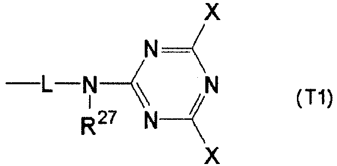

(In Formula (T1),
L represents a single bond or a substituted or unsubstituted alkylene group.
X each independently represents a substituent selected from -OR²⁵, -SR²⁵, and - NR²⁵R²⁶; R²⁵ and R²⁶ each independently represent a hydrogen atom, a substituted or unsubstituted alkyl group, a substituted or unsubstituted aryl group, or a substituted or unsubstituted heterocyclic group; and at least one of R²⁵ and R²⁶ has an ionic hydrophilic group as a substituent. R²⁷ represents a hydrogen atom or a substituted or unsubstituted alkyl group.)

The substituted or unsubstituted alkylene group represented by L is preferably an alkylene group having 1 to 12 carbon atoms, more preferably an alkylene group having 1 to 8 carbon atoms, and still more preferably an alkylene group having 1 to 4 carbon atoms when excluding the substituent. Examples of the substituent may include Group A of substituents. The alkylene group is preferably methylene, ethylene, butylene, isopropylene, and t-butylene.

X is preferably -NR²⁵R²⁶.

The substituted or unsubstituted alkyl group, the substituted or unsubstituted aryl group, or the substituted or unsubstituted heterocyclic group represented by R²⁵ and R²⁶ include the same group represented by R²³ and R²⁴.

The substituted or unsubstituted alkyl group represented by R²⁷ is preferably an alkyl group having 1 to 12 carbon atoms, more preferably an alkyl group having 1 to 8 carbon atoms, and still more preferably an alkyl group having 1 to 4 carbon atoms when excluding the substituent. The alkyl group is preferably methyl, ethyl, butyl, isopropyl, and t-butyl. Examples of the substituent may include Group A of substituents.

R²⁷ preferably represents a methyl group or a hydrogen atom, and more preferably represents a hydrogen atom.

The substituent represented by Formula (T1) is preferably a substituent represented by the following Formula (T2).

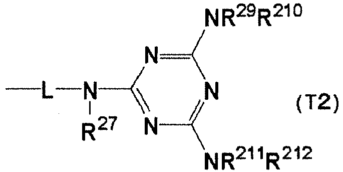

(In Formula (T2),

L represents a single bond or a substituted or unsubstituted alkylene group.

R²⁹, R²¹⁰, and R²¹¹ each independently represent a hydrogen atom, or a substituted or unsubstituted alkyl group, and R²¹² represents a substituted alkyl group, a substituted aryl group, or a substituted heterocyclic group, and has at least one ionic hydrophilic group as a substituent. R²⁷ represents a hydrogen atom or a substituted or unsubstituted alkyl group.)

L and R²⁷ are the same as L and R²⁷ in Formula (T1), and the preferred is the same.

A substituted or unsubstituted alkyl group represented by R²⁹, R²¹⁰, and R²¹¹ is the same as examples of R²⁷ in Formula (T1), and the preferred is the same.

R²², R²⁹, R²¹⁰, and R²¹¹ preferably represent a methyl group or a hydrogen atom, and more preferably represent a hydrogen atom.

R²¹² preferably represents a substituted aryl group and has at least one ionic hydrophilic group as a substituent, and examples of the substituent may include Group A of substituents. Preferably, the substituent is an ionic hydrophilic group, preferably a sulfo group, a carboxyl group, a carboxylthio group, a sulfino group, a phosphono group, dihydroxyphosphino group, and a quaternary ammonium group, more preferably a carboxyl group and a sulfo group, and still more preferably a sulfo group. The carboxyl group and the sulfo group may be in the form of a salt, and examples of the counter ion for forming the salt include an alkali metal ion (e.g., sodium ion, potassium ion) and organic cations (e.g., tetramethylguanidium ions).

R²¹² is preferably an aryl group substituted by 1 to 3 ionic hydrophilic groups, and is more preferably an aryl group substituted by 2 ionic hydrophilic groups (preferably a carboxyl group or a sulfo group).

Specific examples of the substituent represented by Formula (T1) will be described below, but the present invention is not limited to these examples.

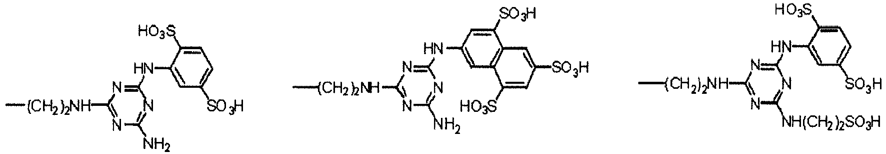

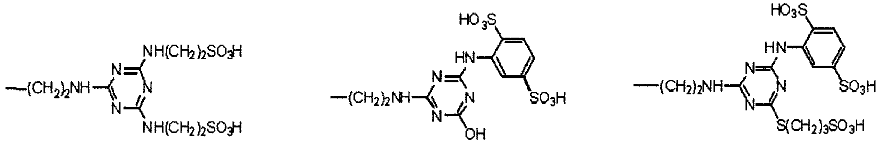

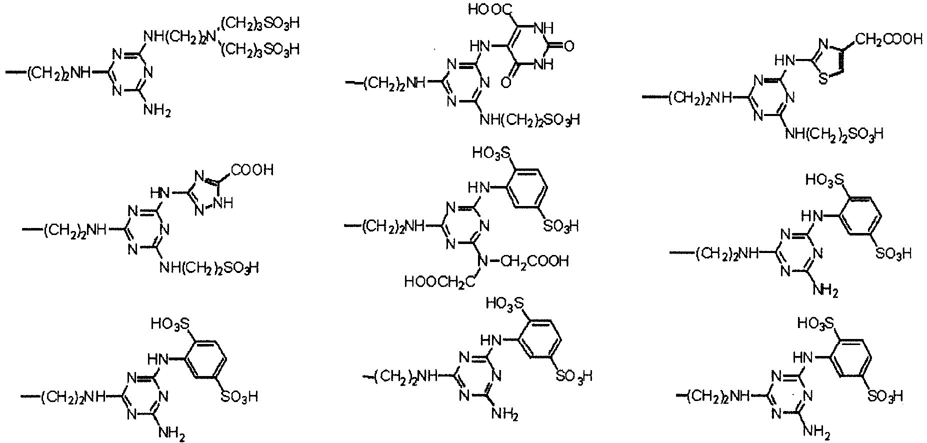

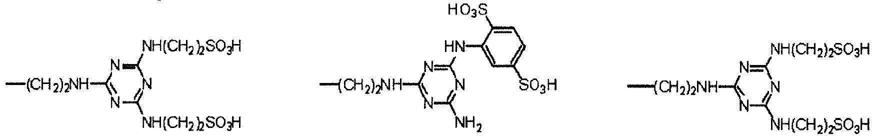

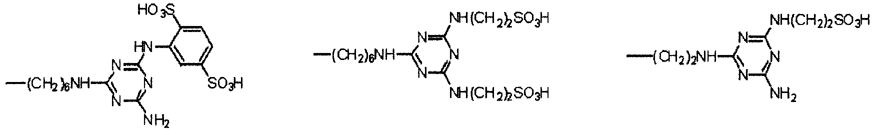

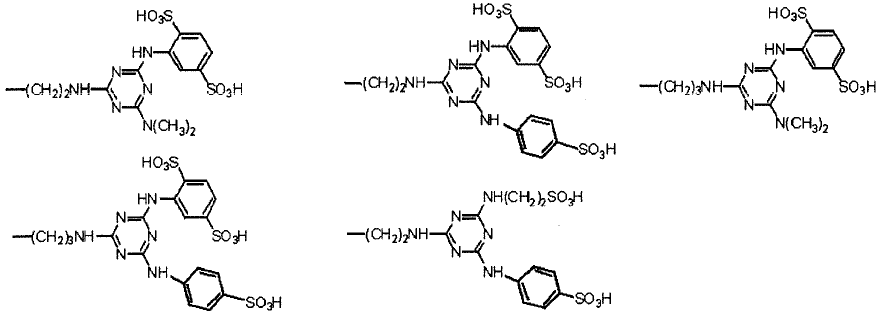

Specific examples of the compound represented by Formula (12) will be described below, but the present invention is not limited to these examples.

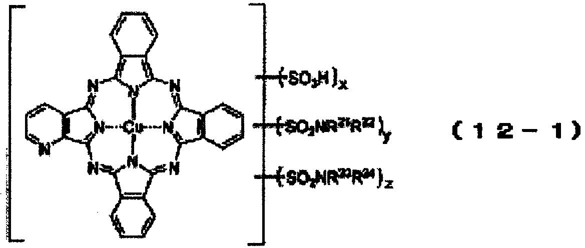

**Table 18**

| | R²¹ | R²² | R²³ | R²⁴ |
|---|---|---|---|---|
| 1 | H | H | H | 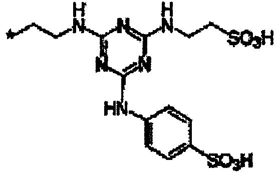 |
| 2 | H | H | H | 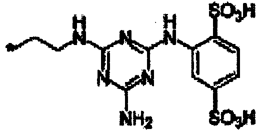 |
| 3 | H | H | H | 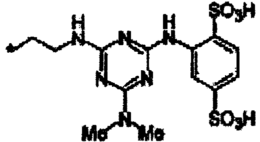 |
| 4 | H | H | H | 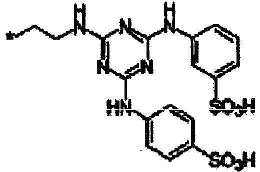 |
| 5 | H | H | H | 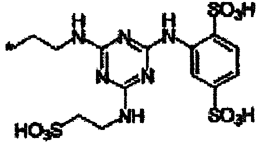 |

**Table 19**

| | R²¹ | R²² | R²³ | R²⁴ |
|---|---|---|---|---|
| 6 | H | 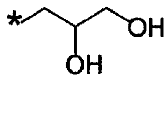 | H | 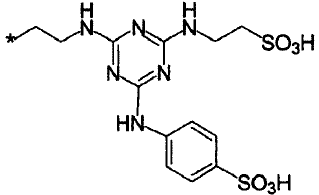 |
| 7 | H | 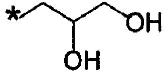 | H | 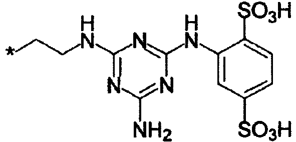 |
| 8 | H | 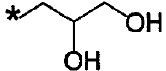 | H | 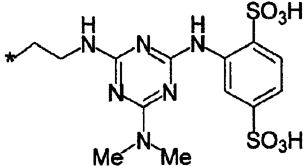 |
| 9 | H | 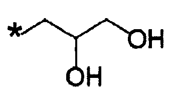 | H | 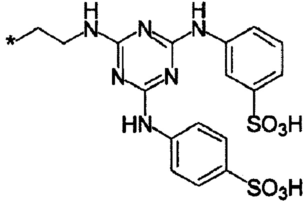 |
| 1 0 | H | 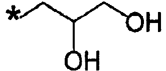 | H | 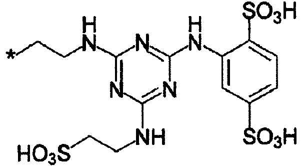 |

**Table 20**

| | R²¹ | R²² | R²³ | R²⁴ |
|---|---|---|---|---|
| 11 | H | 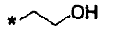 | H | 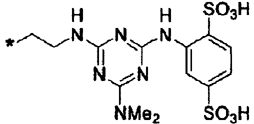 |
| 12 | H | H | H | 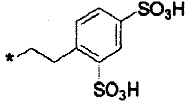 |
| 13 | H | H | H | 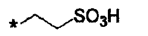 |
| 14 | H | Me | H | 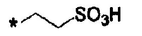 |
| 15 | Me | Me | H | 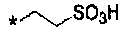 |
| 16 | H | 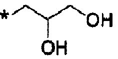 | H | 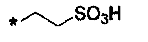 |
| 17 | H | Me | H | 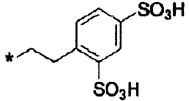 |
| 18 | H | 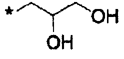 | H | 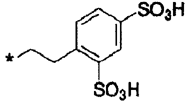 |
| 19 | H | H | H | 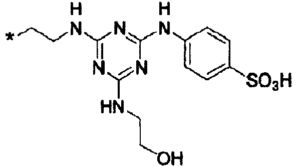 |
| 20 | H | H | H | 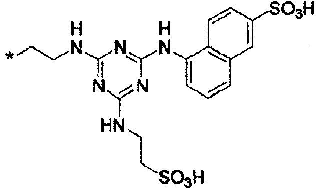 |

**Table 21**

| | R²¹ | R²² | R²³ | R²⁴ |
|---|---|---|---|---|
| 21 | H | H | H | 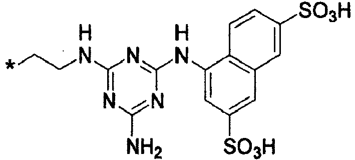 |
| 22 | H | H | H | 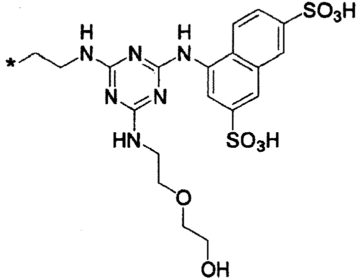 |
| 23 | H | H | H | 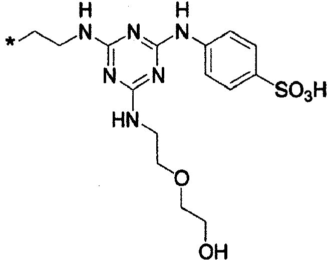 |
| 24 | H | H | H | 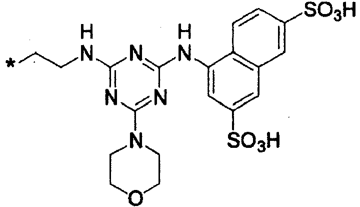 |
| 25 | H | H | H | 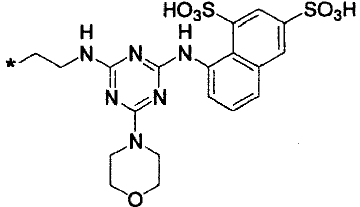 |

**Table 22**

| | R²¹ | R²² | R²³ | R²⁴ |
|---|---|---|---|---|
| 26 | H | H | H | 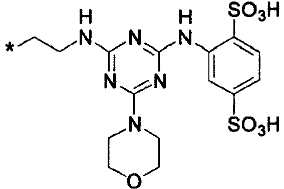 |
| 27 | H | H | H | 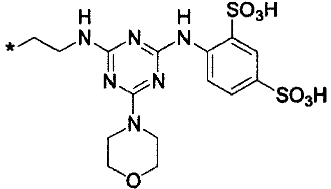 |
| 28 | H | H | H | 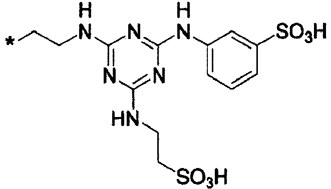 |
| 29 | H | H | H | 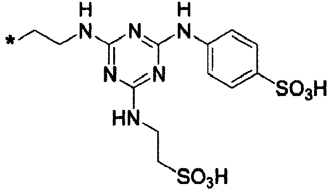 |
| 30 | H | H | H | 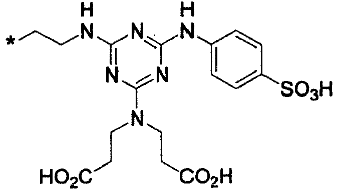 |

**Table 23**

| | R²¹ | R²² | R²³ | R²⁴ |
|---|---|---|---|---|
| 31 | H | H | H | 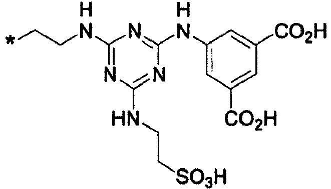 |
| 32 | H | H | H | 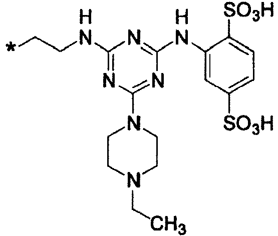 |
| 33 | H | H | H | 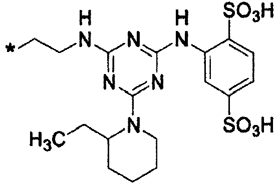 |
| 34 | H | H | H | 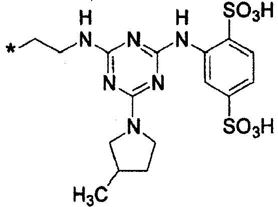 |
| 35 | H | H | H | 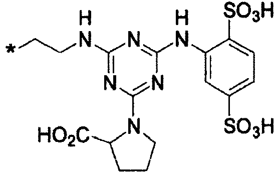 |

**Table 24**

| | R²¹ | R²² | R²³ | R²⁴ |
|---|---|---|---|---|
| 36 | H | H | H | 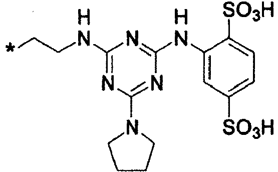 |
| 37 | H | H | H | 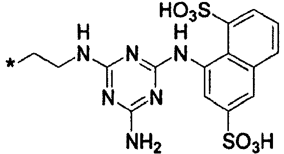 |

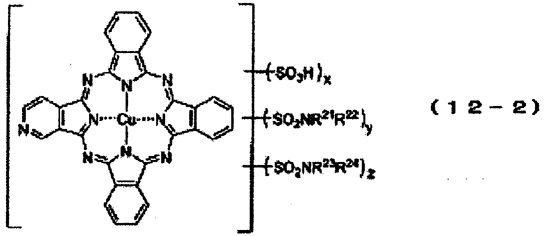

**Table 25**

| | R²¹ | R²² | R²³ | R²⁴ |
|---|---|---|---|---|
| 38 | H | H | H | 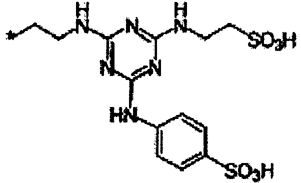 |
| 39 | H | H | H | 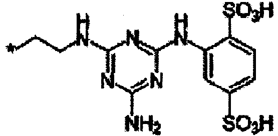 |
| 40 | H | H | H | 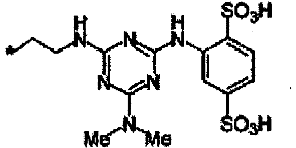 |
| 41 | H | H | H | 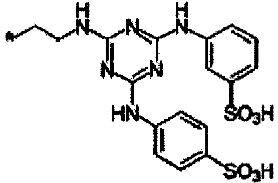 |
| 42 | H | H | H | 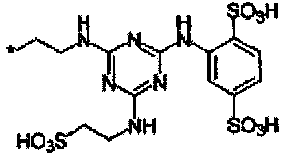 |

**Table 26**

| | R²¹ | R²² | R²³ | R²⁴ |
|---|---|---|---|---|
| 43 | H | 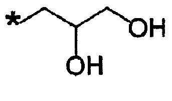 | H | 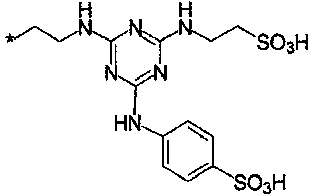 |
| 44 | H | 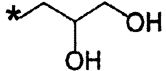 | H | 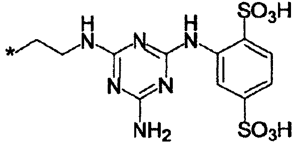 |
| 45 | H | 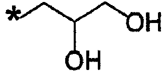 | H | 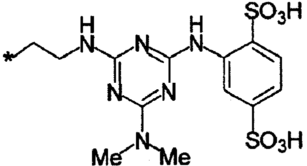 |
| 46 | H | 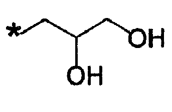 | H | 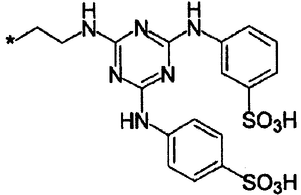 |
| 47 | H | 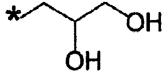 | H | 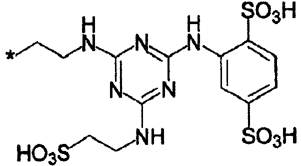 |

**Table 27**

| | R²¹ | R²² | R²³ | R²⁴ |
|---|---|---|---|---|
| 48 | H | 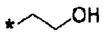 | H | 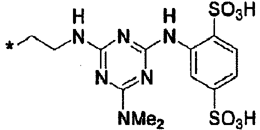 |
| 50 | H | H | H | 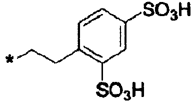 |
| 5 1 | H | H | H | 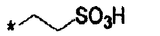 |
| 52 | H | Me | H | 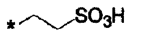 |
| 53 | Me | Me | H | 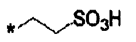 |
| 54 | H | 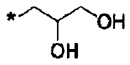 | H | 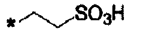 |
| 55 | H | Me | H | 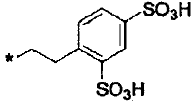 |
| 56 | H | 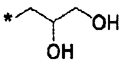 | H | 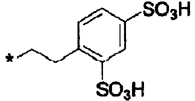 |
| 57 | H | H | H | 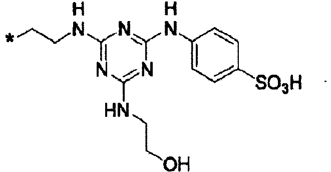 |
| 58 | H | H | H | 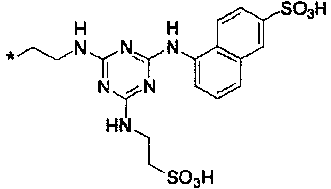 |

**Table 28**

| | R²¹ | R²² | R²³ | R²⁴ |
|---|---|---|---|---|
| 59 | H | H | H | 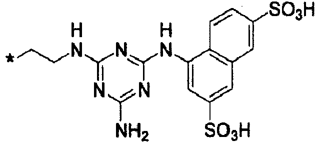 |
| 60 | H | H | H | 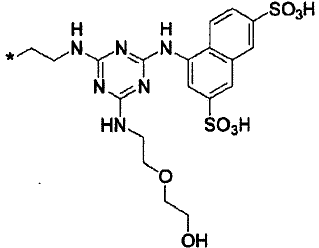 |
| 61 | H | H | H | 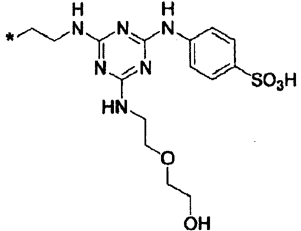 |
| 62 | H | H | H | 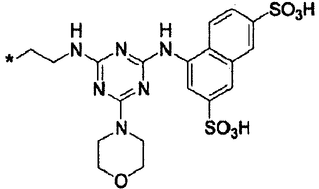 |
| 63 | H | H | H | 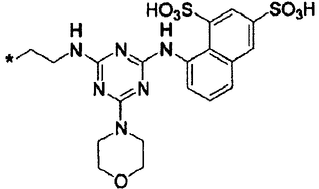 |

**Table 29**

| | R²¹ | R²² | R²³ | R²⁴ |
|---|---|---|---|---|
| 64 | H | H | H | 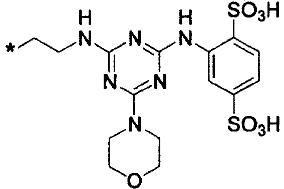 |
| 65 | H | H | H | 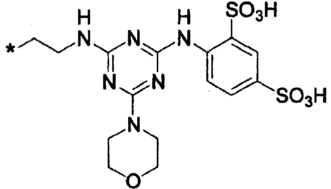 |
| 66 | H | H | H | 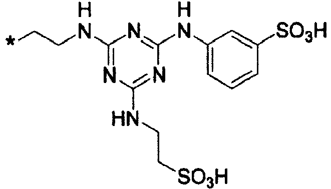 |
| 67 | H | H | H | 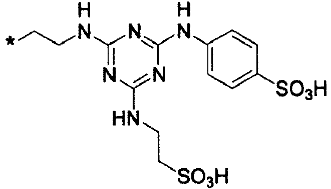 |
| 68 | H | H | H | 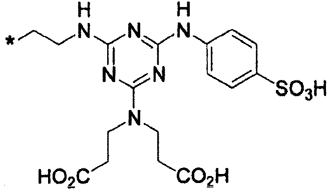 |

**Table 30**

| | R²¹ | R²² | R²³ | R²⁴ |
|---|---|---|---|---|
| 69 | H | H | H | 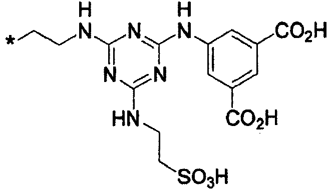 |
| 70 | H | H | H | 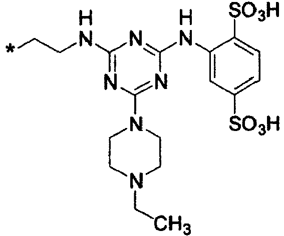 |
| 71 | H | H | H | 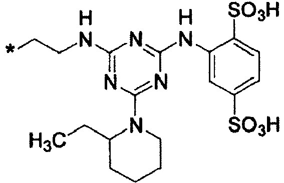 |
| 72 | H | H | H | 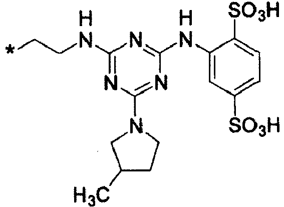 |
| 73 | H | H | H | 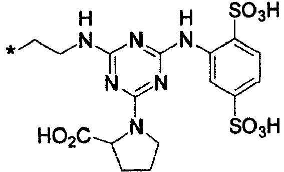 |

**Table 31**

| | R²¹ | R²² | R²³ | R²⁴ |
|---|---|---|---|---|
| 74 | H | H | H | 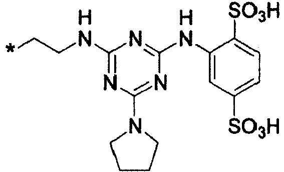 |
| 75 | H | H | H | 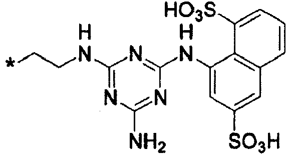 |

The azaphthalocyanine compounds represented by Formula (12) according to the present invention can be synthesized by the method described in International Publication No. WO2010/020802.

### [Azaphthalocyanine Dye Represented by Formula (22)]

Further, the phthalocyanine dye represented by Formula (22) will be described in detail.

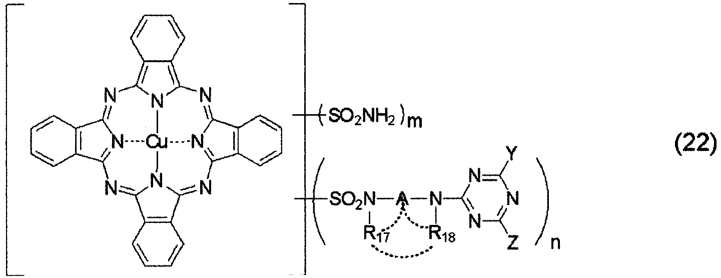

(In Formula (22),

R¹⁷ and R¹⁸ each independently represent a hydrogen atom, a substituted or unsubstituted alkyl group, a substituted or unsubstituted cycloalkyl group, a substituted or unsubstituted aralkyl group, a substituted or unsubstituted aryl group, a substituted or unsubstituted heterocyclic group, or a substituted or unsubstituted alkenyl group. A represents a divalent linking group, and adjacent R¹⁷ , R¹⁸, and A may be bound to each other to form a ring. Y and Z each independently represent a halogen atom, a hydroxyl group, a sulfonate group, a carboxyl group, an amino group, a substituted or unsubstituted alkoxy group, a substituted or unsubstituted cycloalkyloxy group, a substituted or unsubstituted aryloxy group, a substituted or unsubstituted heterocyclic oxy group, a substituted or unsubstituted aralkyloxy group, a substituted or unsubstituted alkenyloxy group, a substituted or unsubstituted alkylamino group, a substituted or unsubstituted cycloalkyl amino group, a substituted or unsubstituted arylamino group, a substituted or unsubstituted heterocyclic amino group, a substituted or unsubstituted aralkylamino group, a substituted or unsubstituted alkenyl amino group, a substituted or unsubstituted dialkylamino group, a substituted or unsubstituted alkylthio group, a substituted or unsubstituted arylthio group, a substituted or unsubstituted heterocyclic thio group, a substituted or unsubstituted aralkyl thio group, or a substituted or unsubstituted alkenylthio group. However, at least one of Y and Z has a sulfonate group, a carboxyl group, or an ionic hydrophilic group as a substituent. m and n are 1 to 3, and the sum of m and n is 2 to 4.)

The substituted or unsubstituted alkyl group represented by R¹⁷ and R¹⁸ is preferably an alkyl group having 1 to 12 carbon atoms, more preferably an alkyl group having 1 to 8 carbon atoms, and still more preferably an alkyl group having 1 to 4 carbon atoms. Examples of the substituent may include Group A of substituents, preferably a hydroxyl group, an alkoxy group, a cyano group, a halogen atom and an ionic hydrophilic group, and more preferably a hydroxyl group or an ionic hydrophilic group. The alkyl group is preferably methyl, ethyl, butyl, isopropyl, n-propyl, or t-butyl, more preferably methyl or n-propyl, and still more preferably n-propyl.

R²⁷ and R²⁸ preferably represent a methyl group or a hydrogen atom, and more preferably represent a hydrogen atom.

A cycloalkyl group represented by R¹⁷ and R¹⁸ includes a cycloalkyl group having a substituent and an unsubstituted cycloalkyl group. The cycloalkyl group is preferably a cycloalkyl group having 5 to 12 carbon atoms when excluding the substituent. Examples of the substituent may include an ionic hydrophilic group. Examples of the cycloalkyl group may include a cyclohexyl group.

The aralkyl group represented by R¹⁷ and R¹⁸ includes an aralkyl group having a substituent and an unsubstituted aralkyl group. The aralkyl group is preferably an aralkyl group having 7 to 12 carbon atoms when excluding the substituent. Example of the substituent may include an ionic hydrophilic group. Examples of the aralkyl group may include a benzyl group, and a 2-phenethyl group.

The aryl group represented by R¹⁷ and R¹⁸ is preferably an aryl group having 6 to 12 carbon atoms when excluding the substituent. Examples of the substituent include Group A of substituents, and preferably an alkyl group, an alkoxy group, a halogen atom, an alkylamino group, and an ionic hydrophilic group. The aryl group is preferably phenyl or naphtyl.

The heterocyclic group represented by R¹⁷ and R¹⁸ is preferably a 5-membered or 6-membered heterocyclic group. Examples of the substituent include Group A of substituents and an ionic hydrophilic group. The heterocyclic group is preferably a 2-piridyl group, a 2-thienyl group, and a 2-furyl group.

The alkenyl group represented by R¹⁷ and R¹⁸ includes an alkenyl group having a substituent and an unsubstituted alkenyl group. The alkenyl group is preferably an alkenyl group having 2 to 12 carbon atoms when excluding the substituent. Examples of the substituent include an ionic hydrophilic group. Preferred examples of the alkenyl group include a vinyl group, an allyl group, and the like.

The aryloxy group represented by R¹⁷ and R¹⁸ includes an aryloxy group having a substituent and an unsubstituted aryloxy group. The aryloxy group is preferably an aryloxy group having 6 to 12 carbon atoms when excluding the substituent. Examples of the substituent include an alkoxy group and Group A of substituents. Preferred examples of the aryloxy group include a phenoxy group, a p-methoxyphenoxy group, and an o-methoxyphenoxy group.

The halogen atom, the substituted or unsubstituted alkoxy group, the substituted or unsubstituted cycloalkyloxy group, the substituted or unsubstituted aryloxy group, the substituted or unsubstituted heterocyclic oxy group, the substituted or unsubstituted aralkyloxy group, the substituted or unsubstituted alkenyloxy group, the substituted or unsubstituted alkylamino group, the substituted or unsubstituted cycloalkylamino group, the substituted or unsubstituted arylamino group, the substituted or unsubstituted heterocyclic amino group, the substituted or unsubstituted aralkylamino group, the substituted or unsubstituted alkenylamino group, the substituted or unsubstituted dialkylamino group, the substituted or unsubstituted alkylthio group, the substituted or unsubstituted arylthio group, the substituted or unsubstituted heterocyclic thio group, the substituted or unsubstituted aralkylthio group, and the substituted or unsubstituted alkenylthio group, which are represented by Y and Z, may include thouse exemplified by Group A of substituents.

The divalent linking group represented by A includes an alkylene group, an arylene group, a heterocyclic residue,-CO-,-SOₙ (n is 0, 1, 2), -NR- (R represents a hydrogen atom, an alkyl group, or an aryl group), -O-, and a combination of these divalent linking groups. They may also have a substituent such as an alkyl group, an aryl group, an alkoxy group, an amino group, an acyl group, an acylamino group, a halogen atom, a hydroxyl group, a carboxyl group, a sulfamoyl group, a carbamoyl group, or a sulfonamide group. An alkylene group is preferred, and an ethylene group or an n-propylene group is more preferred.

The phthalocyanine dye represented by Formula (22) is preferably the phthalocyanine dye represented by the following Formula (22-1).

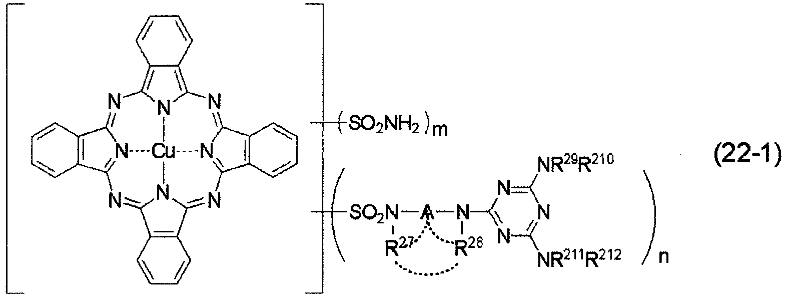

(In Formula (22-1),

R²⁷ and R²⁸ each independently represent a hydrogen atom, a substituted or unsubstituted alkyl group, a substituted or unsubstituted cycloalkyl group, a substituted or unsubstituted aralkyl group, a substituted or unsubstituted aryl group, a substituted or unsubstituted heterocyclic group, or a substituted or unsubstituted alkenyl group. A represents a divalent linking group, respectively, and adjacent R²⁷, R²⁸, and A may be bound to each other to form a ring.

R²⁹, R²¹⁰, and R²¹¹ each independently represent a hydrogen atom or a substituted or unsubstituted alkyl group. R²¹² represents a sulfonate group, a carboxyl group, a substituted alkyl group, a substituted aryl group, or a substituted heterocyclic group, and has at least one ionic hydrophilic group as a substituent. m and n are 1 to 3, and the sum of m and n is 2 to 4.

A, R²⁷ and R²⁸ are the same as A, R¹⁷ and R¹⁸ in Formula (21), and the preferred is also the same.

The substituted or unsubstituted alkyl group represented by R²⁹, R²¹⁰, and R²¹¹ is preferably an alkyl group having 1 to 12 carbon atoms, more preferably an alkyl group having 1 to 8 carbon atoms, and still more preferably an alkyl group having 1 to 4 carbon atoms. Examples of the substituent include Group A of substituents, and preferably a hydroxyl group, an alkoxy group, a cyano group, a halogen atom, and an ionic hydrophilic group, and more preferably a hydroxyl group or an ionic hydrophilic group. The alkyl group is preferably methyl, ethyl, butyl, isopropyl, n-propyl, or t-butyl, more preferably methyl or n-propyl, and still more preferably n-propyl.

R²⁷ and R²⁸ preferably represent a methyl group or a hydrogen atom, and more preferably represent a hydrogen atom.

R²¹² preferably represents a substituted aryl group and has at least one ionic hydrophilic group as a substituent, and examples of the substituent may include Group A of substituents. Preferably, the substituent is an ionic hydrophilic group, preferably a sulfo group, a carboxyl group, a carboxylthio group, a sulfino group, a phosphono group, a dihydroxyphosphino group, and a quaternary ammonium group, more preferably a carboxyl group and a sulfo group, and still more preferably a sulfo group. The carboxyl group and the sulfo group may be in the form of a salt, and examples of the counter ion for forming the salt include an alkali metal ion (e.g., sodium ion, potassium ion) and organic cations (e.g., tetramethylguanidium ions).

R²¹² represents a sulfonate group, a carboxyl group, a substituted alkyl group, a substituted aryl group, or a substituted heterocyclic group, and more preferably a substituted alkyl group or a substituted aryl group.

R²¹² is preferably an aryl group substituted by 1 to 3 ionic hydrophilic groups, and more preferably an aryl group substituted by 2 ionic hydrophilic groups (preferably a carboxyl group or a sulfo group).

Specific examples of the substituent including the linking group A in Formula (I12) will be described below, but the present invention is not limited to these examples.

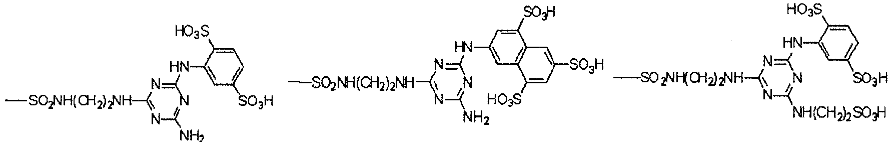

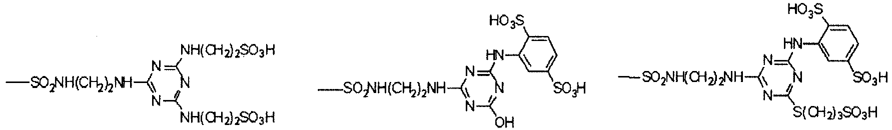

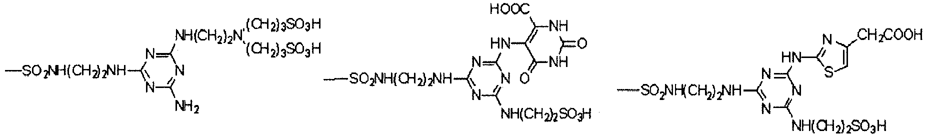

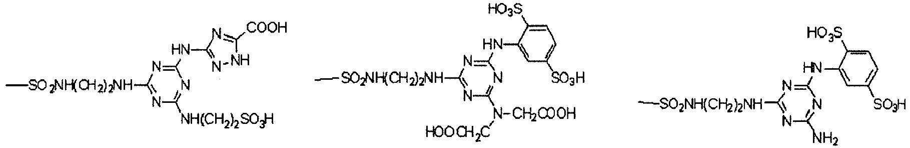

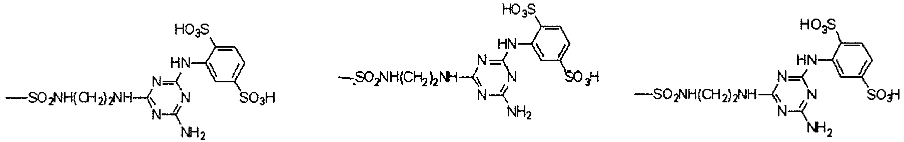

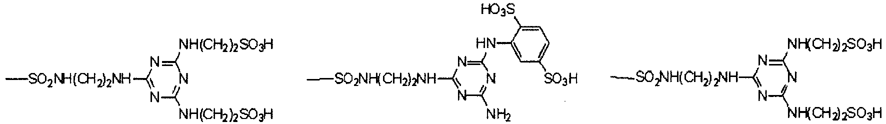

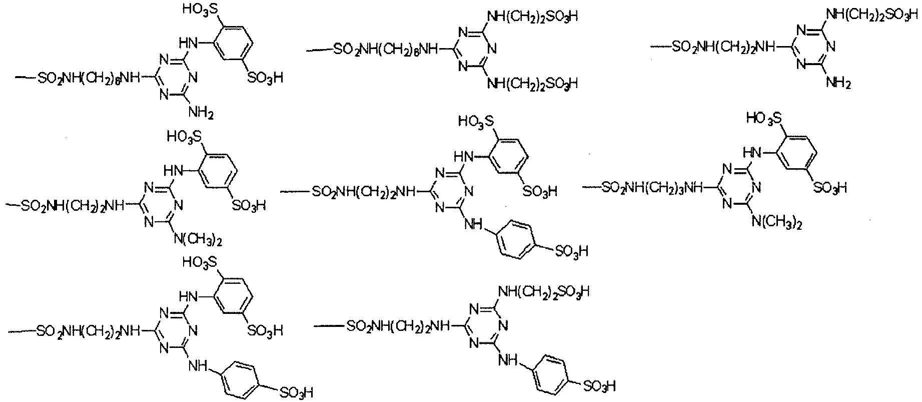

Specific examples of the phthalocyanine dye represented by Formula (22) will be described below, but the present invention is not limited to these examples.

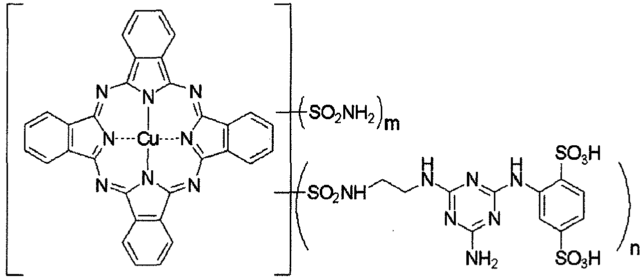

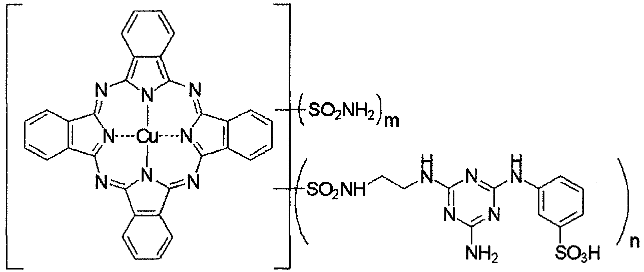

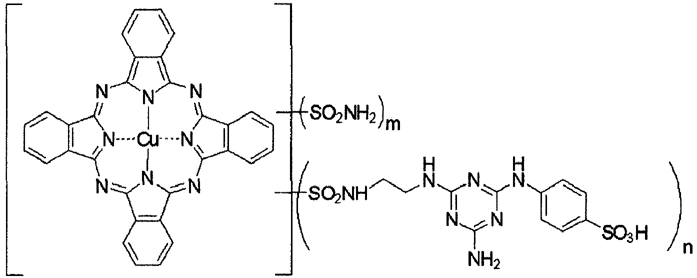

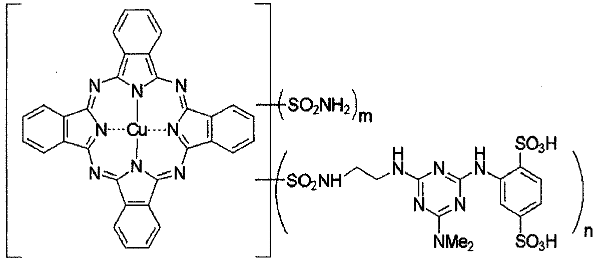

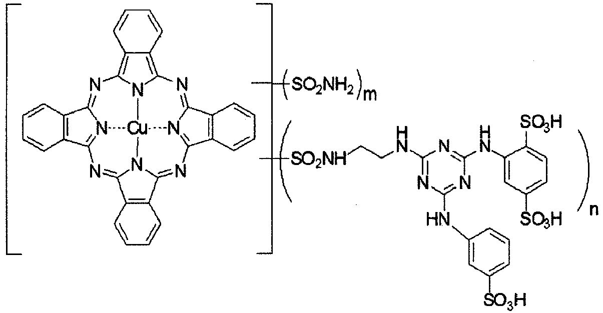

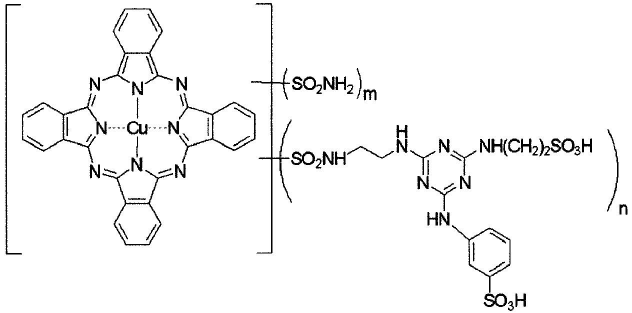

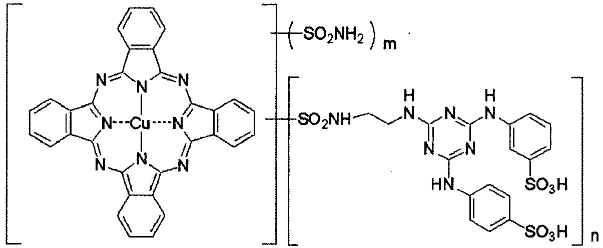

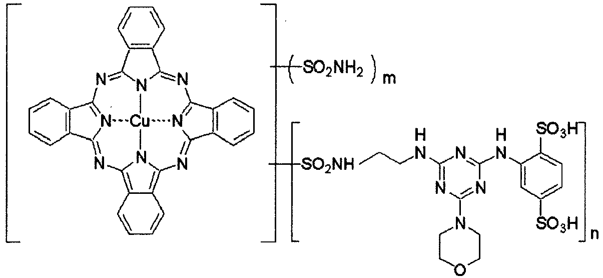

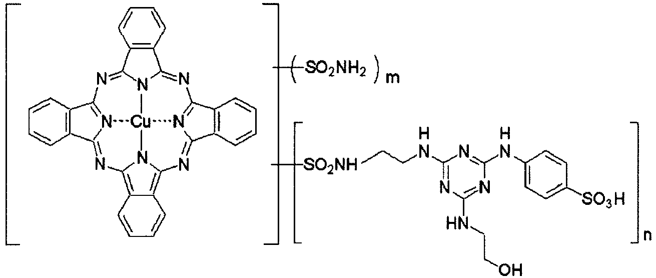

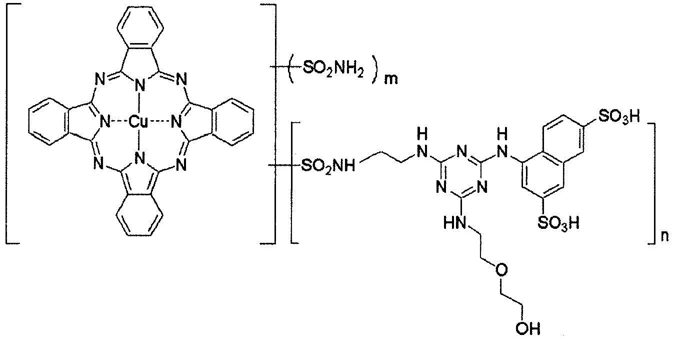

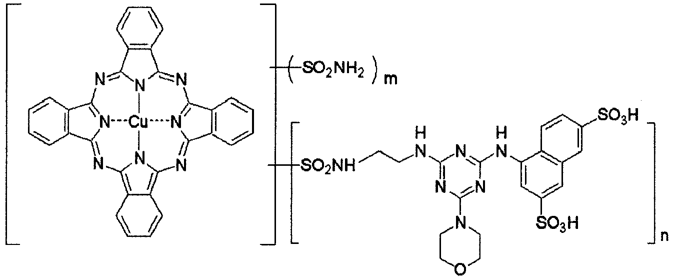

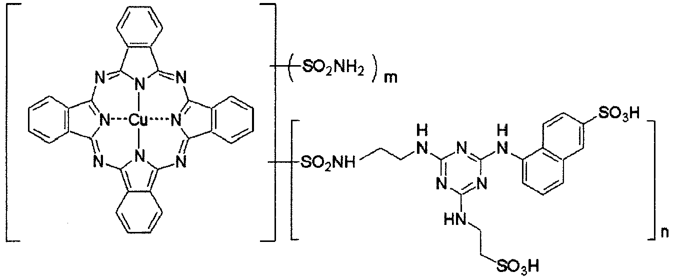

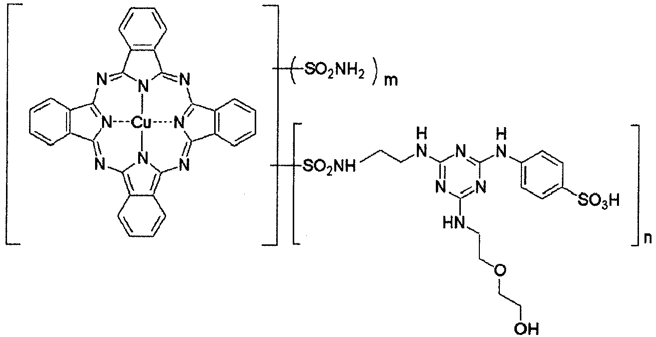

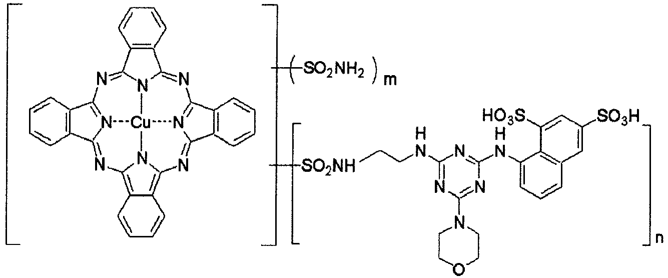

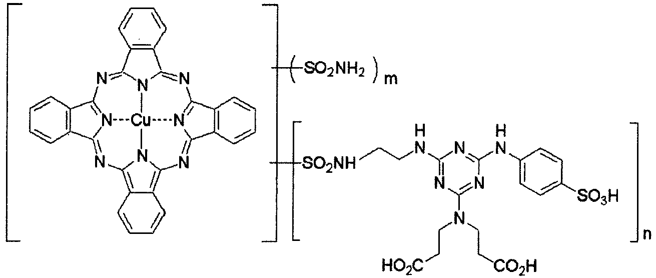

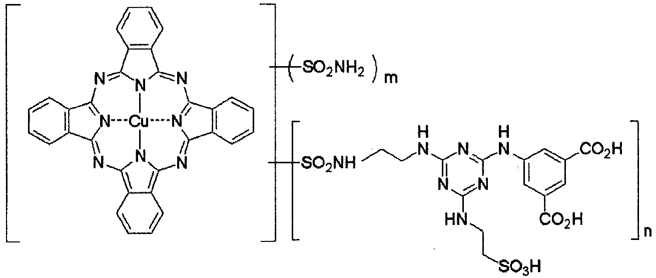

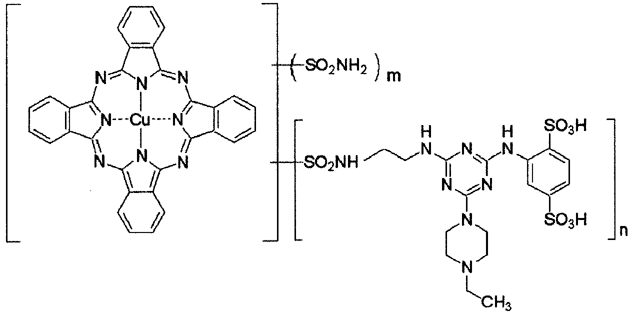

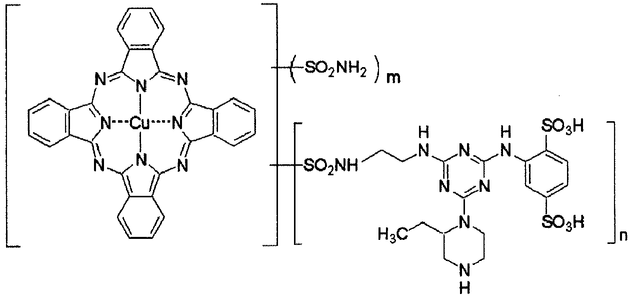

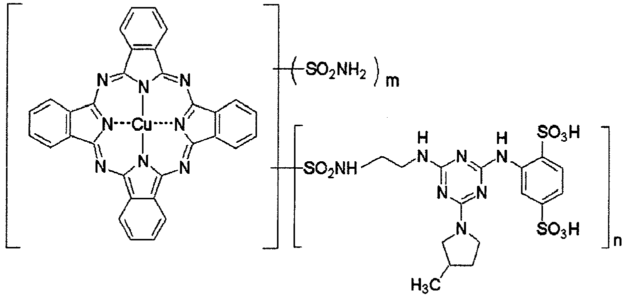

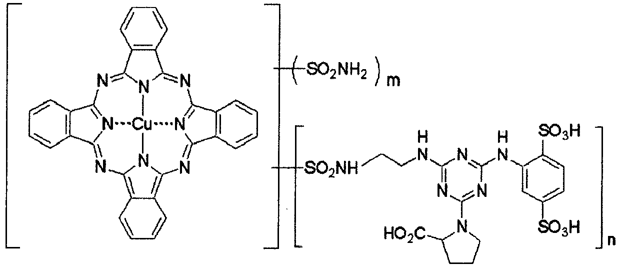

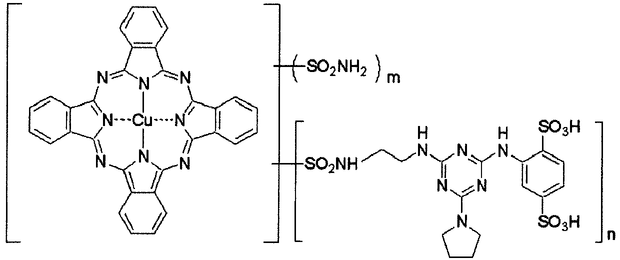

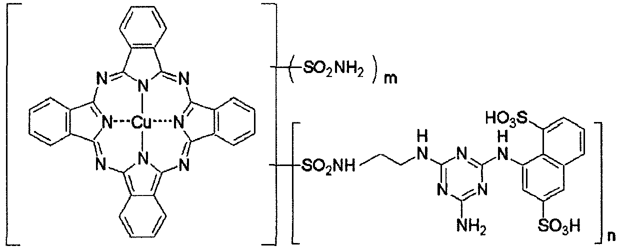

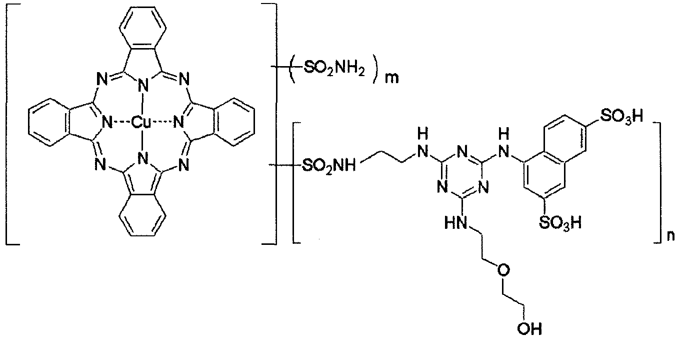

### [Synthesis of Phthalocyanine Dye Represented by Formula (22)]

The phthalocyanine derivatives represented by Formula (22) can be, for example, synthesized by the method described in Japanese Patent Application Laid-Open No. 2004-329677.

### [Direct Blue 199]

Direct Blue 199 that can be used in the present invention is available at the market and can be easily obtained.

The coloring composition pertaining to the present invention contains the phthalocyanine dye represented by Formula (1), the phthalocyanine dye represented by Formula (2), and at least one dye selected from the azaphthalocyanine dye represented by Formula (12), the phthalocyanine dye represented by Formula (22), and Direct Blue 199. However, the coloring composition preferably contains the azaphthalocyanine dye represented by Formula (12).

### [Coloring Composition]

The coloring composition of the present invention contains the phthalocyanine dye represented by Formula (1), the phthalocyanine dye represented by Formula (2), and at least one dye selected from the azaphthalocyanine dye represented by Formula (12), the phthalocyanine dye represented by Formula (22), and Direct Blue 199. By containing the phthalocyanine dye represented by Formula (1), the phthalocyanine dye represented by Formula (2), and, as a third dye, at least one dye selected from the azaphthalocyanine dye represented by Formula (12), the phthalocyanine dye represented by Formula (22), and Direct Blue 199, the coloring composition has improved ozone resistance and suppressed bronze gloss, and can obtain neutral grey or black color when printing composite grey or black with other yellow and magenta.

The coloring composition of the present invention can be preferably used as a coloring composition for forming images. The use of the coloring composition of the invention includes an image recording material for forming an image, in particular, a color image, and specifically, including the recording material for inkjet system described in detail below. Heat-sensitive transfer-type image recording material, pressure-sensitive recording material, recording material using an electrophotographic system, transfer-type silver halide light-sensitive material, printing inks, recording pens, and the like are preferred; and recording material for inkjet system, heat-sensitive transfer-type image recording material, and recording material using an electrophotographic system are more preferred; and the recording material for inkjet system is far more preferred. Further, the coloring composition can be applied to a dye solution for dyeing various fibers or color filters used in solid-state image pickup device such as LCD and CCD described in the specifications of U.S. Patent No. 4,808,501, Japanese Patent Application Laid-Open No. Hei 6-35182, or the like. The phthalocyanine dye used in the present invention may be used by adjusting physical properties such as solubility and thermal mobility suitable for its application by the substituents. In addition, the phthalocyanine dye used in the present invention may be used in the uniformly dissolved state or the dispersed melt state as emulsion dispersion depending on the system used.

Among the coloring composition, the mass ratio of the phthalocyanine dye represented by Formula (1) and the phthalocyanine dye represented by Formula (2) is preferably 50/50 to 10/90, and more preferably 40/60 to 20/80. By setting the mass ratio of the dye within the above range, stability over time (e.g., change in viscosity or precipitation, etc.) at high concentration of the coloring composition is excellent, and an ozone fastness of the print sample using the corresponding coloring composition is excellent. Furthermore, an excellent print density can be obtained.

In addition, among the coloring composition, the content of the phthalocyanine dye represented by Formula (1) is preferably 0.1% by mass to 20% by mass. If the content is less than 0.1% by mass, the stability over time at high concentration of the coloring composition and the print density are deteriorated, and if the content exceeds 20% by mass, the ozone fastness of the print sample is lowered.

### [Ink for Inkjet Recording]

Next, an ink for inkjet recording of the present invention will be described. The ink for inkjet recording of the present invention contains the coloring composition. The ink for inkjet recording can be prepared by dissolving and/or dispersing the phthalocyanine compound in a lipophilic medium or an aqueous medium. The ink using the aqueous medium is preferred. If necessary, other additives may be contained while not spoiling the effect of the present invention. Other additives include, for example, well-known additives such as an anti-drying agent (wetting agent), an anti-fading agent, an emulsion stabilizer, a penetration enhancer, a UV absorber, a preservative, an antifungal agent, a pH adjusting agent, a surface tension modifier, a defoamer, a viscosity modifier, a dispersant, a dispersion stabilizer, a rust inhibitor, and a chelating agent. These various additives can be added directly to a liquid ink in the case of a water-soluble ink. When using an oil-soluble dye in the form of a dispersion, it is general to add to the dispersion after preparation of the dye dispersion, but the additives may be added to an oil phase or an aqueous phase upon preparation.

An anti-drying agent is suitably used for the purpose of preventing clogging, which is caused by an inkjet ink dried in an ink injection port of a nozzle used in an inkjet recording system.

The anti-drying agent is preferably a water-soluble organic solvent having a lower vapor pressure than that of water. Specific examples thereof include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetyleneglycol derivatives, glycerin, and trimethylolpropane; lower alkyl ethers of polyhydric alcohols such as ethylene glycol monomethyl (or ethyl) ether, diethylene glycol monomethyl (or ethyl) ether, and triethylene glycol monoethyl (or butyl) ether; heterocyclic groups such as 2-pyrrolidone, N-methyl-2-pyrrolidone, 1,3-dimethyl-2-imidazolidinone, and N-ethylmorpholine; sulfur-containing compounds such as sulfolane, dimethylsulfoxide, and 3-sulforen; polyfunctional compounds such as diacetone alcohol and diethanol amine; and urea derivatives. Among them, polyhydric alcohols such as glycerin and diethylene glycol are more preferred. Further, the above anti-drying agent may be used either alone or in combination of two or more thereof. The anti-drying agent may be preferably contained in 10% by mass to 50% by mass of the ink.

A penetration enhancer may be suitably used for the purpose of better penetrating inkjet ink into the paper. As the penetration enhancer, alcohols such as ethanol, isopropanol, butanol, di(tri)ethyleneglycol monobutyl ether, and 1,2-hexanediol; or nonionic surfactants such as sodium lauryl sulfate, and sodium oleate may be used. If the enhancer is contained in 5% by mass to 30% by mass of the ink, the effect is usually sufficient, and the enhancers may be preferably used in the range that does not cause print smearing or paper omission (print-through).

A UV absorber may be used for the purpose of improving storage stability of an image. As the UV absorber, benzotriazole-based compounds described in Japanese Patent Application Laid-Open No. Sho 58-185677, Japanese Patent Application Laid-Open No. Sho 61-190537, Japanese Patent Application Laid-Open No. Hei 2-782, Japanese Patent Application Laid-Open No. Hei 5-197075, Japanese Patent Application Laid-Open No. Hei 9-34057, and the like; benzophenone-based compounds described in the specifications of Japanese Patent Application Laid-Open No. Sho 46-2784, Japanese Patent Application Laid-Open No. Hei 5-194483, U.S. Patent No. 3,214,463, and the like; cinnamic acid compounds described in Japanese Patent Application Laid-Open No. Sho 48-30492, Japanese Patent Application Laid-Open No. Sho 56-21141, Japanese Patent Application Laid-Open No. Hei 10-88106, and the like; triazine-based compounds described in Japanese Patent Application Laid-Open No. Hei 4-298503, Japanese Patent Application Laid-Open No. Hei 8-53427, Japanese Patent Application Laid-Open No. Hei 8-239368, Japanese Patent Application Laid-Open No. Hei 10-182621, Japanese Patent Application Laid-Open No. Hei 8-501291, and the like; the compounds described in Research Disclosure No. 24239; or a compound which emits fluorescence by absorbing ultraviolet radiation such as stilbene compounds and benzoxazole-based compounds, a so-called fluorescent brightener, may be used.

An anti-fading agent may be used for the purpose of improving storage stability of an image. As the anti-fading agent, various organic and metal complex anti-fading agents may be used. Examples of the organic anti-fading agent include hydroquinones, alkoxy phenols, dialkoxy phenols, phenols, anilines, amines, indans, chromans, alkoxy anilines, heterocyclic groups, and the like; and examples of the metal complex anti-fading agents include nickel complex, zinc complex, and the like. More specifically, the compounds described in the patents cited in sections I to J of Chapter VII of Research Disclosure No. 17643, Research Disclosure No. 15162, the left column on page 650 of Research Disclosure No. 18716, page 527 of Research Disclosure No. 36544, page 872 of Research Disclosure No. 307105, and Research Disclosure No. 15162, or the compounds included in the examples and formulas of representative compounds described on pages 127 - 137 of Japanese Patent Application Laid-Open No. Sho 62-215272, may be used.

Examples of the antifungal agent include sodium dehydroacetate, sodium benzoate, sodium pyridinethione-1-oxide, p-hydroxybenzoic acid ethyl ester, 1,2-benzisothiazolin-3-one, salts thereof, and the like. The agent may be preferably used from 0.02% by mass to 1.00% by mass in the ink.

As the pH adjusting agent, the above-mentioned neutralizer (organic base, inorganic alkali) may be used. The pH adjusting agent may be preferably added for the purpose of improving the storage stability of the ink for inkjet recording, so that the corresponding ink for inkjet recording is preferably pH 6 to pH 10, and more preferably pH 7 to 10.

Examples of the surface tension modifier include non-ionic, cationic or anionic surfactants. The surface tension of the inkjet ink of the present invention is preferably 25 mN/m to 70 mN/m. The range of 25 mN/m to 60 mN/m is also preferred. Further, viscosity of the ink for inkjet recording of the present invention is preferably less than 30 mPa·s. Being adjusted to less than 20 mPa·s or is more preferred. Preferred examples of surfactants may include anionic surfactants such as fatty acid salts, alkyl sulfate ester salts, alkyl benzene sulfonate salts, alkyl naphthalene sulfonate salts, dialkyl sulfosuccinate salts, alkyl phosphate ester salts, naphthalene sulfonic acid formalin condensates, and polyoxyethylene alkyl sulfate ester salts; or nonionic surfactants such as polyoxyethylene alkyl ethers, polyoxyethylene alkyl allyl ethers, polyoxyethylene fatty acid esters, sorbitan fatty acid esters, polyoxyethylene sorbitan fatty acid esters, polyoxyethylene alkylamines, glycerin fatty acid esters, and oxyethylene oxypropylene block copolymers. Also, an acetylenic polyoxyethylene oxide surfactant, *i*.*e*., SURFYNOLS (Air Products & Chemicals Inc.), is preferably used. In addition, amine oxide type amphoteric surfactants such as N,N-dimethyl-N-alkylamine oxide are preferred. Moreover, the surfactants described as examples on pages 37 to 38 of Japanese Patent Application Laid-Open No. Sho 59-157636 and Research Disclosure No. 308119 (in the year of 1989) may be used.

As the defoaming agent, a fluorine-based compound, a silicon-based compound, or a chelating agent represented by EDTA, or the like may be used, if necessary.

When the phthalocyanine compound and the azaphthalocyanine compound of the invention are dispersed in an aqueous medium, coloring fine particles containing the colorant and oil-soluble polymer can preferably be dispersed in the aqueous medium, as described in each of Japanese Patent Application Laid-Open No. Hei 11-286637, Japanese Patent Application No. 2000-78491, Japanese Patent Application No. 2000-80259, Japanese Patent Application No. 2000-62370, and the like, or the compound of the invention dissolved in an organic solvent having a high boiling point may be preferably dispersed in the aqueous medium, as described in each of the specifications of Japanese Patent Application No. 2000-78454, Japanese Patent Application No. 2000-78491, Japanese Patent Application No. 2000-203856, Japanese Patent Application No. 2000-203857, and the like. A specific method of dispersing the compound of the present invention in an aqueous medium, an oil-soluble polymer used, a high-boiling organic solvent, additives and the used amounts thereof can be preferably used as described in the above-mentioned patent publications. Alternatively, the phthalocyanine compound may be dispersed in the state of solid fine particles. At the time of dispersion, it is possible to use a dispersant or a surfactant. As a dispersion device, a simple stirrer, an impeller stirring system, an in-line stirring system, a mill system (e.g., colloid mill, ball mill, sand mill, attritor mill, roll mill, agitator mill, etc.), an ultrasonic method, a high-pressure emulsification dispersion method (high-pressure homogenizer; Gaulin homogenizer as a specific commercial device, micro fluidizer, DeBEE2000, etc.) may be used. The aforesaid preparation methods of the ink for inkjet recording are, in addition to the aforementioned patents, specifically described in Japanese Patent Application Laid-Open No. Hei 5-148436, Japanese Patent Application Laid-Open No. Hei 5-295312, Japanese Patent Application Laid-Open No. Hei 7-97541, Japanese Patent Application Laid-Open No. Hei 7-82515, Japanese Patent Application Laid-Open No. Hei 7-118584, Japanese Patent Application Laid-Open No. Hei 11-286637, and Japanese Patent Application No. 2000-87539, and can also be used in the preparation of the ink for ink jet recording of the present invention.

The aqueous medium may use use water as a main component and use mixtures obtained by adding a water-miscible organic solvent, as needed. Examples of the water-miscible organic solvent include an alcohol (e.g., methanol, ethanol, propanol, isopropanol, butanol, isobutanol, sec-butanol, t-butanol, pentanol, hexanol, cyclohexanol, benzyl alcohol), polyhydric alcohols (e.g., ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol), glycol derivatives (e.g., ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, ethylene glycol monophenyl ether), and amines (e.g., ethanolamine, diethanolamine, triethanolamine, N-methyldiethanolamine, N-ethyl diethanolamine, morpholine, N-ethyl morpholine, ethylene diamine, diethylene triamine, triethylene tetramine, polyethylene imine, tetramethyl propylene diamine) and other polar solvents (e.g., formamide, N,N-dimethylformamide, N,N-dimethylacetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, acetone). Further, the water-miscible organic solvent may be used in combination with two or more thereof.

In 100 parts by mass of the ink for inkjet recording of the present invention, the phthalocyanine compound represented by Formulas (1), (2), (12) and (22), and Direct Blue 199 may be preferably contained in less than 0.2 parts by mass to 20 parts by mass, more preferably 1 part by mass to 10 parts by mass, far more preferably 3 parts by mass to 5 parts by mass, and most preferably 3.5 parts by mass to 5 parts by mass. Further, the ink for inkjet of the present invention may be used in combination with the other dyes together with the phthalocyanine compound represented by Formulas (1), (2), (12) and (22), and Direct Blue 199. When two or more types of colorants are used in combination, the sum of the content of the colorant is preferably within the above-described range.

As for the ink for inkjet recording of the present invention, the ratio of the dye represented by Formula (1), the dye represented by Formula (2) and dye represented by Formula (12) is preferably 5 to 30/5 to 70/5 to 80, and more preferably 10 to 30/10 to 40/40 to 80.

Additionally, the ratio of the dye represented by Formula (1), the dye represented by Formula (2) and the dye represented by Formula (22) is preferably 5 to 30/40 to 70/5 to 40, and more preferably 10 to 20/50 to 60/20 to 30.

Furthermore, the ratio of the dye represented by Formula (1), the dye represented by Formula (2) and Direct Blue 199 is preferably 5 to 30/40 to 80/5 to 40, and more preferably 20 to 30/50 to 60/10 to 30.

The ink for inkjet recording of the present invention preferably has a viscosity of 40 cp or less. Further, the surface tension is preferably 20 mN/m to 70 mN/m. Viscosity and surface tension can be adjusted by adding various additives, for example, a viscosity modifier, a surface tension adjusting agent, a specific resistance modifier, a film adjusting agent, an ultraviolet absorber, an antioxidant, an anti-fading agent, an antifungal agent, a rust preventive, a dispersant, and a surfactant.

The ink for inkjet recording of the present invention can be used not only to form a monochromatic image, but also to form a full color image. In order to form a full color image, a magenta color tone ink, a cyan color tone ink, and a yellow color tone ink can be used, and in order to match color tone, a black color tone ink may also be used.

As an applicable yellow dye, it is possible to use any dye. For example, a coupling component (hereinafter, referred to as a "coupler component") includes aryl or heteryl azo dyes having heterocyclic groups, such as phenols, naphthols, anilines, pyrazolone, or pyridone, and open-chain active methylene compounds; for example, azomethine dyes having open-chain active methylene compounds as a coupler component; for example, methine dyes such as benzylidene dyes or monomethine oxonol dyes; for example, quinone dyes such as naphthoquinone dyes or anthraquinone dyes; and other dyes such as quinophthalone dyes, nitro, nitroso dyes, acridine dyes, and acridinone dyes.

As an applicable magenta dye, it is possible to use any dye. For example, coupler components include aryl or heteryl azo dyes having phenols, naphthols, anilines, and the like; for example, azomethine dyes having pyrazolones, pyrazolo triazoles, and the like as a coupler component; for example, methine dyes such as arylidene dyes, styryl dyes, merocyanine dyes, cyanine dyes, and oxonol dyes; for example, carbonium dyes such as diphenylmethane dyes, triphenylmethane dyes, and xanthene dyes; for example, quinone dyes such as naphthoquinone, anthraquinone, and anthrapyridone; and for example, condensed polycyclic dyes such as dioxazine dyes.

As an applicable cyan dye, it is possible to use any dye. For example, coupler components include aryl or heteryl azo dyes having phenols, naphthols, anilines, and the like; for example, azomethine dyes having heterocyclic groups such as phenols, naphthols, and pyrrolo triazole as a coupler component; polymethine dyes such as cyanine dyes, oxonol dyes, and melocyanine dyes; carbonium dyes such as diphenylmethane dyes, triphenylmethane dyes, and xanthene dyes; phthalocyanine dyes; anthraquinone dyes; indigo, thioindigo dyes; and the like.

In each of the above-mentioned dyes, a part of the chromophore may be dissociated to exhibit respective colors of yellow, magenta, and cyan. In this case, the counter cation may be an inorganic cation such as an alkali metal or an ammonium, or an organic cation such as pyridinium and a quaternary ammonium salt, and furthermore, a polymer cation having these cations as a partial structure. Examples of the applicable black material include the dispersant of carbon black as well as disazo, trisazo, and tetraazo dyes.

### [Inkjet Recording Method]

The present invention relates to an inkjet recording method using the ink for inkjet recording related to the present invention. The inkjet recording method of the present invention donates energy to the ink for inkjet recording to form an image on a known image receiving material, namely, plain paper, resin coated paper, inkjet paper described in, for example, Japanese Patent Application Laid-Open No. Hei 8-169172, Japanese Patent Application Laid-Open No. Hei 8-27693, Japanese Patent Application Laid-Open No. Hei 2-276670, Japanese Patent Application Laid-Open No. Hei 7-276789, Japanese Patent Application Laid-Open No. Hei 9-323475, Japanese Patent Application Laid-Open No. Sho 62-238783, Japanese Patent Application Laid-Open No. Hei 10-153989, Japanese Patent Application Laid-Open No. Hei 10-217473, Japanese Patent Application Laid-Open No. Hei 10-235995, Japanese Patent Application Laid-Open No. Hei 10-337947, Japanese Patent Application Laid-Open No. Hei 10-217597, and Japanese Patent Application Laid-Open No. Hei 10-337947, film, electrophotographic common paper, cloth, glass, metal, ceramics, or the like.

The ink of the present invention is not limited in terms of the inkjet recording method and can be used in a known manner, for example, a charge control system discharging the ink by utilizing electrostatic attraction, a drop-on-demand system (pressure pulse manner) utilizing vibration pressure of a piezo element, an acoustic inkjet system changing electrical signals to acoustic beams to irradiate the beams onto the ink and discharging the ink by using the radiation pressure, a thermal inkjet system heating the ink to form bubbles and using the generated pressure, and the like. The inkjet recording method includes a method of injecting a number of ink droplets of low concentration, a so-called photo ink in a small volume, a method of improving the image quality by using a plurality of inks having different densities, but substantially the same color, or a method using colorless transparent ink.

When forming an image, it is also possible to use in combination with a polymer fine particle dispersion (also referred to as polymer latex) in order to give glossiness and water resistance or improve weather resistance. The point in time of imparting the polymer latex on the image receiving material may be good before or after the colorant is added, or even simultaneously with the addition of the colorant. Thus, the polymer latex may be added to a receiving paper, an ink, or a liquid of the polymer latex alone. Specifically, the methods described in each of the specifications of Japanese Patent Application No. 2000-363090, Japanese Patent Application No. 2000-315231, Japanese Patent Application No. 2000-354380, Japanese Patent Application No. 2000-343944, Japanese Patent Application No. 2000-268952, Japanese Patent Application No. 2000-299465, Japanese Patent Application No. 2000-297365, and the like can be preferably used.

### [Ink Cartridge for Inkjet Recording and Inkjet Recording Materials]

The ink cartridge for inkjet recording of the present invention is refilled with the aforesaid ink for inkjet recording of the invention. Further, the inkjet recording materials of the present invention form color images on the recorded materials by using the ink for inkjet recording.

The recording paper and recording film used in the inkjet printing by using the ink of the present invention will be described below. The support in the recording paper or the recording film comprises chemical pulp such as LBKP and NBKP, mechanical pulp such as GP, PGW, RMP, TMP, CTMP, CMP, and CGP, and waste paper pulp such as DIP, and if necessary, can be used by mixing additives such as conventional, known pigments, binders, sizing agents, fixing agents, cationic agents, or paper strengthening agents, and by using the paper manufactured by various devices such as fourdrinier paper machine or cylinder paper machine. In addition to these supports, any of a synthetic paper or a sheet of plastic film is preferred, and the thickness of the support is preferably 10 µm to 250 µm, and the basis weight is preferably 10 g/m² to 250 g/m². On the support, an ink receiving layer and a back coating layer may be provided as they are, or the ink receiving layer and the back coating layer may be provided after forming a size press or an anchor coating layer by using starch, polyvinyl alcohol, or the like. In addition, the support may be flattening treated by a calendering apparatus such as a machine calender, a TG calender, or a soft calender. In the present invention, the paper and plastic films laminated on both sides with polyolefin (e.g., polyethylene, polystyrene, polyethylene terephthalate, polybutene, and copolymers thereof) are more preferred as the support. A white pigment (e.g., titanium oxide or zinc oxide) or a coloring dye (e.g., cobalt blue, ultramarine, neodium oxide) is preferably added into the polyolefin.

The ink receiving layer provided on the support contains a pigment and an aqueous binder. As the pigment, a white pigment is preferred, and as the white pigment, white inorganic pigments such as calcium carbonate, kaolin, talc, clay, diatomaceous earth, synthetic amorphous silica, aluminum silicate, magnesium silicate, calcium silicate, aluminum hydroxide, alumina, lithopone, zeolite, barium sulfate, calcium sulfate, titanium dioxide, zinc sulfide, and zinc carbonate, and organic pigments such as styrene pigments, acrylic pigments, urea resins, and melamine resins are preferred. As the white pigment contained in the ink receiving layer, porous inorganic pigments are preferred, and particularly the synthetic amorphous silica having a large pore area is preferred. As a synthetic amorphous silica, any of anhydrous silicic acid obtained by a dry production process and hydrous silicate obtained by a wet production method can be used, but particularly, hydrous silicate may be preferably used.

The aqueous binder contained in the ink receiving layer includes water-soluble polymers such as polyvinyl alcohol, silanol-modified polyvinyl alcohol, starch, cationized starch, casein, gelatin, carboxymethyl cellulose, hydroxyethyl cellulose, polyvinyl pyrrolidone, polyalkylalkylene oxide, and polyalkylene oxide derivatives, and water-dispersible polymers such as styrene butadiene latex and acrylic emulsion. These aqueous binders may be used alone or in combination with two or more thereof. In the present invention, among the aqueous binders, polyvinyl alcohol and silanol-modified polyvinyl alcohol are particularly preferred in terms of adhesion to the pigment and peeling resistance of the ink receiving layer. The ink receiving layer may contain mordants, water-proofing agents, light resistance improving agents, surfactants, and other additives, in addition to the pigment and aqueous binder.

The mordant added to the ink receiving layer is preferably immobilized. To do this, a polymer-mordant is preferably used. Examples of the polymer-mordant are described in each of the specifications of Japanese Patent Application Laid-Open No. Sho 48-28325, Japanese Patent Application Laid-Open No. Sho 54-74430, Japanese Patent Application Laid-Open No. Sho 54-124726, Japanese Patent Application Laid-Open No. Sho 55-22766, Japanese Patent Application Laid-Open No. Sho 55-142339, Japanese Patent Application Laid-Open No. Sho 60-23850, Japanese Patent Application Laid-Open No. Sho 60-23851, Japanese Patent Application Laid-Open No. Sho 60-23852, Japanese Patent Application Laid-Open No. Sho 60-23853, Japanese Patent Application Laid-Open No. Sho 60-57836, Japanese Patent Application Laid-Open No. Sho 60-60643, Japanese Patent Application Laid-Open No. Sho 60-118834, Japanese Patent Application Laid-Open No. Sho 60-122940, Japanese Patent Application Laid-Open No. Sho 60-122941, Japanese Patent Application Laid-Open No. Sho 60-122942, Japanese Patent Application Laid-Open No. Sho 60-235134, Japanese Patent Application Laid-Open No. Hei 1-161236, U.S. Patent No. 2,484,430, U.S. Patent No. 2,548,564, U.S. Patent No. 3,148,061, U.S. Patent No. 3,309,690, U.S. Patent No. 4,115,124, U.S. Patent No. 4,124,386, U.S. Patent No. 4,193,800, U.S. Patent No. 4,273,853, U.S. Patent No. 4,282,305, and U.S. Patent No. 4,450,224. An image-receiving material containing the polymer-mordant described on pages 212 to 215 of Japanese Patent Application Laid-Open No. Hei 1-161236 is particularly preferred. When the polymer-mordant described in the same publication is used, the image having excellent image quality is obtained, and the light resistance of the image is improved.

The water-proofing agent is effective for waterproofing of an image, and as the water-proofing agent, a cationic resin is preferred. Examples of the cationic resin include polyamide polyamine epichlorohydrin, polyethyleneimine, polyamine sulfone, dimethyl diallyl ammonium chloride polymer, cationic polyacrylamide, colloidal silica and the like, and polyamide polyamine epichlorohydrin is particularly preferred among them. The content of such cationic resin preferably ranges from 1% by mass to 15% by mass, and more preferably, from 3% by mass to 10% by mass based on the total solid content of the ink receiving layer.

The light resistance improving agent includes a benzotriazole-based ultraviolet absorber such as zinc sulfate, zinc oxide, hindered amine-based antioxidants, and benzophenone. Zinc sulfate is particularly preferred among them.

The surfactant functions as a coating aid, a peeling property improving agent, a sliding improving agent or an antistatic agent. The surfactant is described in Japanese Patent Application Laid-Open No. Sho 62-173463 and Japanese Patent Application Laid-Open No. Sho 62-183457. Instead of the surfactant, an organic fluoro compound may be used. The organic fluoro compound is preferably hydrophobic. Examples of the organic fluoro compound include fluorine-based surfactants, oily fluorine-based compounds (e.g., fluorine oil), and solid fluorine compound resins (e.g., tetrafluoroethylene resin). The organic fluoro compound is described in Japanese Patent Application Laid-Open No. Sho 57-9053 (columns 8 to 17), Japanese Patent Application Laid-Open No. Sho 61-20994, and Japanese Patent Application Laid-Open No. 62-135826. Other additives added to the ink receiving layer include pigment dispersants, thickeners, defoamers, dyes, fluorescent brighteners, preservatives, pH adjusting agents, matting agents, hardening agents, and the like. Also, the ink receiving layer may be used as either one or two layer.

On the recording paper and recording film, a back coating layer may be provided, and the components which can be added to this layer include a white pigment, an aqueous binder, and other components. Examples of the white pigment contained in the back coating layer include white inorganic pigments such as light calcium carbonate, heavy calcium carbonate, kaolin, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic amorphous silica, colloidal silica, colloidal alumina, pseudo-boehmite, aluminum hydroxide, alumina, lithopone, zeolite, hydrolyzed halloysite, magnesium carbonate, and magnesium hydroxide, and organic pigments such as styrene-based plastic pigments, acrylic plastic pigments, polyethylene, microcapsules, urea resin, and melamine resin.

The aqueous binders contained in the back coating layer include water-soluble polymers such as a styrene/maleate copolymer, styrene/acrylate copolymer, polyvinyl alcohol, silanol-modified polyvinyl alcohol, starch, cationic starch, casein, gelatin, carboxymethyl cellulose, hydroxyethylcellulose, and polyvinyl pyrrolidone; water-dispersible polymers such as styrene-butadiene latex and acrylic emulsion; and the like. Other components contained in the back coating layer include defoamers, foam inhibitors, dyes, fluorescent brighteners, preservatives, waterproofing agents, and the like.

A polymer latex may be added to the structure layer (including a back coating layer) of the inkjet recording paper and the recording film. The polymer latex is used for the purpose of improvement of film properties such as dimensional stability, curling prevention, adhesion prevention, and film cracking prevention. The polymer latex is described in Japanese Patent Application Laid-Open No. Sho 62-245258, Japanese Patent Application Laid-Open No. Sho 62-1316648, and Japanese Patent Application Laid-Open No. Sho 62-110066. When a polymer latex having a low glass transition temperature (40°C or below) is added to a layer containing a mordant, craking and curling of the layer can be prevented. Further, when a polymer latex having a high glass transition temperature is added to the back coating layer, curling can be prevented.

### Examples

The present invention will be described below more in detail by way of examples, but the invention is not limited to the examples.

### (Synthesis Example)

Hereinafter, a synthesis method of the phthalocyanine-based colorant derivatives of the present invention will be described in detail in an embodiment, but is not limited to the starting material, colorant intermediates and synthesis routes.

The phthalocyanine compounds of the present invention can be, for example, derived from the following synthetic routes. In the following Examples, λmax is an absorption maximum wavelength, and εmax denotes the molar extinction coefficient at the absorption maximum wavelength.

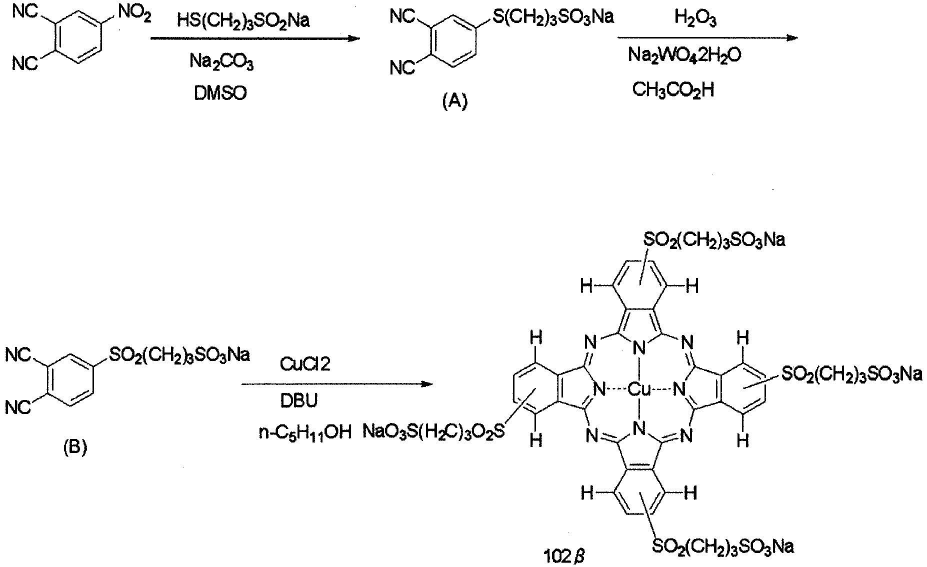

### Synthesis Example 1: Synthesis of Compound (A)

Under a stream of nitrogen, 26.0 g of 4-nitrophthalonitrile (Tokyo Kasei) was dissolved in 200 mL of DMSO (dimethyl sulfoxide), and it was stirred at an internal temperature of 20°C, and 30.3 g of 3-mercapto-propane-sulfonate sodium salt (Aldrich) was added thereto. Subsequently, 24.4 g of anhydrous sodium carbonate was gradually added while being stirred at an internal temperature of 20°C. The reaction solution was warmed to 30°C, while stirring, and the solution was stirred at the same temperature for 1 hour. After cooling to 20°C, the reaction solution was filtered with Nutsche, and the filtrate was poured into 15000 mL of ethyl acetate to crystallize, and continuously stirred at room temperature for 30 minutes, the precipitated crude crystals were filtered off with Nutsche, and washed with ethyl acetate and dried. The obtained crude crystals were recrystallized from methanol/ethyl acetate to obtain 42.5 g of Compound A. ¹H-NMR (DMSO-d6), δ value TMS standard: 1.9~2.0(2H, t); 2.5~2.6(2H, m); 3.2~~3.3(2H, t); 7.75~7.85(1H, d); 7.93~8.03(1H, d); 8.05~8.13(1H, s)

### Synthesis Example 2: Synthesis of Compound (B)

42.0 g of the Compound (A) was dissolved in 300 mL of acetic acid, and stirred at an internal temperature of 20°C, 2.5 g of Na₂WO₄ and 2H₂O was added thereto, and the internal temperature was cooled to 10°C in an ice bath. Subsequently, 32 mL of hydrogen peroxide solution (30%) was slowly added dropwise, while attending to the heat generation. After stirring at the internal temperature of 15°C to 20°C for 30 minutes, the reaction solution was warmed to the internal temperature of 60°C, and stirred at the same temperature for 1 hour. After cooling to 20°C, 1500 mL of ethyl acetate was poured into the reaction solution, and continuously stirred at room temperature for 30 minutes. The precipitated crude crystals were filtered with Nutsche, and washed with 200 mL of ethyl acetate and dried. The obtained crude crystals were heated, washed, and purified by using methanol/ethyl acetate to obtain 40.0 g of Compound B. ¹H-NMR(DMSO-d6), δ value TMS standard: 1.8~1.9(2H, t); 2.4~2.5(2H, m); 3.6~3.7(2H, t); 8.3~8.4(1H, d); 8.4~8.5(1H, d); 8.6~8.7(1H, s)

### Synthesis Example 3: Synthesis of Exemplary Compound 102β (Dye 1A of Formula (1))

70 mL of n-amyl alcohol was added to a three-necked flask equipped with a cooling tube, 6.7 g of the Compound B and 1.0 g of copper chloride (II) were added thereto, and 7.0 mL of 1,8-diazabicyclo[5.4.0]-7-undecene (DBU) was added dropwise at room temperature while stirring. Subsequently, the reaction solution was warmed to an internal temperature of 100°C, and stirred at the same temperature for 10 hours. After cooling to 40°C, 250 mL of methanol warmed to 50°C was injected and stirred for 1 hour under reflux. Then the reaction solution was cooled to a room temperature, and the resulting solid was filtered with Nutsche and washed with 200 mL of methanol. Subsequently, the resulting solid was added to 100 mL of 1M hydrochloric acid aqueous solution saturated with sodium chloride so as to dissolve the unreacted copper salts. After filtering the insoluble matter, 300 mL of methanol was added dropwise to the filtrate to crystallize. The obtained crude crystals were filtered with Nutsche, and washed with 200 mL of methanol. After the crude crystals were dissolved in 50 mL of water, the aqueous solution was stirred, and 100 mL of a saturated methanol solution of sodium acetate was slowly added to form the salts. Further, the solution was warmed to a reflux temperature while stirring, and then stirred at the same temperature for 1 hour. After cooling to a room temperature, the precipitated crystals were filtered off and washed with methanol. Subsequently, 100 mL of 80% methanol was added to the obtained crystals, stirred for 1 hour under reflux and, cooled to a room temperature, and the precipitated crystals were filtrated off, and again with 100 mL of 70% methanol aqueous solution was added to the obtained crystals, stirred for 1 hour under reflux and, cooled to a room temperature, the precipitated crystals were filtrated off, and washed in 100 mL of methanol and dried to obtain 3.8 g of the exemplified compound 102β as blue crystals.

λmax (absorption maximum wavelength): 629.1 nm; ε max (a molar extinction coefficient at the maximum wavelength) = 6.19 × 10⁴ (in aqueous solution). As a result of analyzing the obtained compound (mass spectrometry: measured by various device analysis methods such as ESI-MS, elemental analysis, and neutralization titration), it was confirmed that the copper phthalocyanine (II)-substituted position as defined herein has β-position substitution type having one group of -{SO₂-(CH₂)₃-SO₃Na} at (position 2 or 3), (position 6 or 7), (position 10 or 11), (position 14 or 15) of each of the benzene nuclei, and a total of four groups of -{SO₂-(CH₂)₃-SO₃Na} in a copper phthalocyanine molecule.

### (Example 1)

Deionized water was added to the following components to be 100 g, and the solution was stirred for one hour while heated at 30°C to 40°C. The solution was adjusted to pH=9 by 10 mol/L of NaOH, and filtered under reduced pressure through a microfilter having an average pore size of 0.25 µm to prepare a cyan ink liquid.

| | |
|---|---|
| First dye (Compound 1A) | 1 g |
| Second dye (Compound 2B) | 1 g |
| Third dye (Compound 3A) | 3 g |
| Diethylene glycol | 2 g |
| Glycerin | 12 g |
| Diethylene glycol monobutyl ether | 23 g |
| 2-pyrrolidone | 8 g |
| Triethanolamine | 1.79 g |
| Benzotriazole | 0.006 g |
| Surfynol TG | 0.85 g |
| PROXEL XL2 | 0.18 g |

### (Examples 2 to 41, Comparative Examples 1 to 14)

The ink liquids of Examples 2 to 41 and Comparative Examples 1 to 14 were prepared in the same manner as in the preparation of the ink liquid of Example 1, except that the type and added amount of the phthalocyanine dye and the added amount of Direct Blue 199 were changed as illustrated in the following Tables 31 to 33.

### <Image Recording and Evaluation>

For the cyan ink for inkjet of each Example (Examples 1 to 41) and each Comparative Example (Comparative Examples 1 to 14) described above, evaluation was carried out as follows. The results are illustrated in Tables 34 and 35. In addition, image recording was conducted onto photo glossy paper (PT-101, Canon) and plain paper (GF500, Canon) by replacing each inkjet ink in a cyan catrdige part of the ink cartridge (PMIC1C (manufactured by EPSON (Ltd.) Co.); brand name) of the inkjet printer (manufactured by EPSON (Ltd.) Co.; PM-700C) and using yellow and magenta as they are.

### (Ozone Resistance)

The photo gloss paper forming image was left for 7 days in a box set in a dark place where the concentration of ozone is 0.5 ± 0.1 ppm at room temperature, and the image density before and after standing under the ozone gas was measured by using a reflection densitometer (X-Rite310TR) and evaluated as the colorant residual ratio. Further, the reflection density was measured at three points of 1, 1.5 and 2.0. The ozone gas concentration in the box was set up with an ozone gas monitor (Model: OZG-EM-01) manufactured by APPLICS. The colorant residual ratio was evaluated at four stages: as AA when the colorant residual ratio at any concentration is 75% or more, as A when the colorant residual ratio at any concentration is more than 70% but less than 75%, as B when point 1 or 2 is less than 70%, and as C when the ratio at all concentrations is less than 70%.

### (Bronze Gloss)

The highest concentration portion of the printed sample was observed visually under a white fluorescent lamp, and evaluated at three stages: as A when the bronze gloss is not observed, as B when the gloss is observed faintly, and as C when the gloss is observed clearly.

### (Color Reproductivity)

The printed sample was observed visually, and evaluated at three stages: as A when the color is a pure cyan, as B when the color is a cyan close to slightly reddish blue, and as C when the color is certainly blue.

Three β pattern images of (R,G,B) = (25, 25, 25), (125, 125, 125) and (255, 255, 255) were made by using Photoshop (manufactured by Adobe Systems Incoproated) and the printed images were visually observed by using the aforesaid cyan ink and the magneta ink and yellow ink of PMIC1C (brand name, manufactured by EPSON (Ltd.) Co.). As a result, evaludation was conducted at three stages: as A when neutral grey or black is observed, as B when slightly green or reddish grey is observed, and as C when color balance is obviously shattered.

**Table 32**

| | First Dye | | Second Dye | | Third Dye | | | | |
|---|---|---|---|---|---|---|---|---|---|
| | Formula (1) | | Formula (2) | | Formula (12) | | Formula (22) | | Direct Blue 199 |
| Ex. 1 | 1A | 1g | 2B | 1g | 3A | 3g | - | - | - |
| Ex. 2 | 1A | 0.5g | 2B | 2g | 3A | 2.5g | - | - | - |
| Ex. 3 | 1A | 0.5g | 2B | 0.5g | 3A | 4g | - | - | - |
| Ex. 4 | 1A | 1g | 2B | 1g | 5A | 3g | - | - | - |
| Ex. 5 | 1A | 0.5g | 2B | 2g | 5A | 2.5g | - | - | - |
| Ex. 6 | 1A | 0.5g | 2B | 0.5g | 5A | 4g | - | - | - |
| Ex. 7 | 1A | 1g | 2B | 1g | 5B | 3g | - | - | - |
| Ex. 8 | 1A | 0.5g | 2B | 2g | 5B | 2.5g | - | - | - |
| Ex. 9 | 1A | 0.5g | 2B | 0.5g | 5B | 4g | - | - | - |
| Ex. 10 | 1A | 1g | 2B | 1g | 5C | 3g | - | - | - |
| Ex. 11 | 1A | 0.5g | 2B | 2g | 5C | 2.5g | - | - | - |
| Ex. 12 | 1A | 0.5g | 2B | 0.5g | 5C | 4g | - | - | - |
| Ex. 13 | 1A | 1g | 2B | 3g | - | - | 4A | 1g | - |
| Ex. 14 | 1A | 1g | 2B | 2.5g | - | - | 4A | 1.5g | - |
| Ex. 15 | 1A | 1g | 2B | 3g | - | - | 4B | 1g | - |
| Ex. 16 | 1A | 1g | 2B | 3g | - | - | 4C | 1g | - |
| Ex. 17 | 1A | 1g | 2B | 3.5g | - | - | - | - | 0.5g |
| Ex. 18 | 1A | 1g | 2B | 3g | - | - | - | - | 1g |

**Table 33**

| | First Dye | | Second Dye | | Third Dye | | | | |
|---|---|---|---|---|---|---|---|---|---|
| | Formula (1) | | Formula (2) | | Formula (12) | | Formula (22) | | Direct Blue 199 |
| Ex. 19 | 1A | 1g | 2C | 1g | 3A | 3g | - | - | - |
| Ex. 20 | 1A | 0.5g | 2C | 2g | 3A | 2.5g | - | - | - |
| Ex. 21 | 1A | 0.5g | 2C | 0.5g | 3A | 4g | - | - | - |
| Ex. 22 | 1A | 1g | 2C | 1g | 5A | 3g | - | - | - |
| Ex. 23 | 1A | 0.5g | 2C | 2g | 5A | 2.5g | - | - | - |
| Ex. 24 | 1A | 0.5g | 2C | 0.5g | 5A | 4g | - | - | - |
| Ex. 25 | 1A | 1g | 2C | 1g | 5B | 3g | - | - | - |
| Ex. 26 | 1A | 0.5g | 2C | 2g | 5B | 2.5g | - | - | - |
| Ex. 27 | 1A | 0.5g | 2C | 0.5g | 5B | 4g | - | - | - |
| Ex. 28 | 1A | 1g | 2C | 1g | 5C | 3g | - | - | - |
| Ex. 29 | 1A | 0.5g | 2C | 2g | 5C | 2.5g | - | - | - |
| Ex. 30 | 1A | 0.5g | 2C | 0.5g | 5C | 4g | - | - | - |
| Ex. 31 | 1A | 1g | 2C | 3g | - | - | 4A | 1g | - |
| Ex. 32. | 1A | 1g | 2C | 2.5g | - | - | 4A | 1.5g | - |
| Ex. 33 | 1A | 1g | 2C | 3g | - | - | 4B | 1g | - |
| Ex. 34 | 1A | 1g | 2C | 3g | - | - | 4C | 1g | - |
| Ex. 35 | 1A | 1g | 2C | 3.5g | - | - | - | - | 0.5g |
| Ex. 36 | 1A | 1g | 2C | 3g | - | - | - | - | 1g |
| Ex. 37 | 1A | 1g | 2C | 1g | 3A | 2g | 4A | 1g | - |
| Ex. 38 | 1A | 1g | 2C | 1g | 3A | 1.5g | 4A | 1g | 0.5g |
| Ex. 39 | 1B | 1g | 2C | 1g | 3A | 3g | - | - | - |
| Ex. 40 | 1A | 1g | 2A | 1g | 3A | 3g | - | - | - |
| Ex. 41 | 1A | 1g | 2D | 1g | 3A | 3g | - | - | - |

**Table 34**

| | First Dye | | Second Dye | | Third Dye | | | | |
|---|---|---|---|---|---|---|---|---|---|
| | Formula (1) | | Formula (2) | | Formula (12) | | Formula (22) | | Direct Blue 199 |
| C.Ex. 1 | 1A | 5g | - | - | - | - | - | - | - |
| C.Ex. 2 | 1B | 5g | - | - | - | - | - | - | - |
| C.Ex. 3 | - | - | 2A | 5g | - | - | - | - | - |
| C.Ex. 4 | - | - | 2B | 5g | - | - | - | - | - |
| C.Ex. 5 | - | - | 2C | 5g | - | - | - | - | - |
| C.Ex. 6 | - | - | 2D | 5g | - | - | - | - | - |
| C.Ex. 7 | - | - | - | - | 3A | 5g | - | - | - |
| C.Ex. 8 | - | - | - | - | 5A | 5g | - | - | - |
| C.Ex. 9 | - | - | - | - | 5B | 5g | - | - | - |
| C.Ex. 10 | - | - | - | - | 5C | 5g | - | - | - |
| C.Ex. 11 | - | - | - | - | - | - | 4A | 5g | - |
| C.Ex. 12 | - | - | - | - | - | - | 4B | 5g | - |
| C.Ex. 13 | - | - | - | - | - | - | 4C | 5g | - |
| C.Ex. 14 | - | - | - | - | - | - | - | - | 5g |

**Table 35**

| | Ozone Resistance | Bronze Gloss | Color Reproductivity | Composite Black Color | Remarks |
|---|---|---|---|---|---|
| Ex. 1 | A | A | A | A | Inventive |
| Ex. 2 | AA | A | A | A | Inventive |
| Ex. 3 | AA | A | A | A | Inventive |
| Ex. 4 | A | A | A | A | Inventive |
| Ex. 5 | AA | A | A | A | Inventive |
| Ex. 6 | AA | A | A | A | Inventive |
| Ex. 7 | A | A | A | A | Inventive |
| Ex. 8 | AA | A | A | A | Inventive |
| Ex. 9 | AA | A | A | A | Inventive |
| Ex. 10 | A | A | A | A | Inventive |
| Ex. 11 | AA | A | A | A | Inventive |
| Ex. 12 | AA | A | A | A | Inventive |
| Ex. 13 | A | A | A | A | Inventive |
| Ex. 14 | A | A | A | A | Inventive |
| Ex. 15 | A | A | A | A | Inventive |
| Ex. 16 | A | A | A | A | Inventive |
| Ex. 17 | A | A | A | A | Inventive |
| Ex. 18 | A | A | A | A | Inventive |
| Ex. 19 | A | A | A | A | Inventive |
| Ex. 20 | AA | A | A | A | Inventive |
| Ex. 21 | AA | A | A | A | Inventive |
| Ex. 22 | A | A | A | A | Inventive |
| Ex. 23 | AA | A | A | A | Inventive |
| Ex. 24 | AA | A | A | A | Inventive |
| Ex. 25 | A | A | A | A | Inventive |
| Ex. 26 | AA | A | A | A | Inventive |
| Ex. 27 | AA | A | A | A | Inventive |
| Ex. 28 | A | A | A | A | Inventive |
| Ex. 29 | AA | A | A | A | Inventive |
| Ex. 30 | AA | A | A | A | Inventive |
| Ex. 31 | A | A | A | A | Inventive |
| Ex. 32 | A | A | A | A | Inventive |
| Ex. 33 | A | A | A | A | Inventive |
| Ex. 34 | A | A | A | A | Inventive |
| Ex. 35 | A | A | A | A | Inventive |
| Ex. 36 | A | A | A | A | Inventive |

**Table 36**

| | Ozone Resistance | Bronze Gloss | Color Reproductivity | Composite Black Color | Remarks |
|---|---|---|---|---|---|
| Ex. 37 | A | A | A | A | Inventive |
| Ex. 38 | A | A | A | A | Inventive |
| Ex. 39 | A | A | A | A | Inventive |
| Ex. 40 | A | A | A | A | Inventive |
| Ex. 41 | A | A | A | A | Inventive |
| C. Ex. 1 | C | A | A | B | Comparative |
| C. Ex. 2 | C | A | A | B | Comparative |
| C. Ex. 3 | B | B | A | B | Comparative |
| C. Ex. 4 | A | C | A | B | Comparative |
| C. Ex. 5 | A | C | A | B | Comparative |
| C. Ex. 6 | A | C | A | B | Comparative |
| C. Ex. 7 | A | A | A | B | Comparative |
| C. Ex. 8 | A | B | B | A | Comparative |
| C. Ex. 9 | A | B | B | A | Comparative |
| C. Ex. 10 | A | B | B | A | Comparative |
| C. Ex. 11 | A | B | B | A | Comparative |
| C. Ex. 12 | B | B | B | A | Comparative |
| C. Ex. 13 | B | B | B | A | Comparative |
| C. Ex. 14 | C | B | B | A | Comparative |

It was found that upon cmparison with the ink of the Comparative Examples, the ink for inkjet recording of the present invention has good ozone resistance and suppressed bronze gloss, and can obtain neutral grey of black color with other yellow and magenta.

The structure of the compound used in the Examples will be illustrated below.

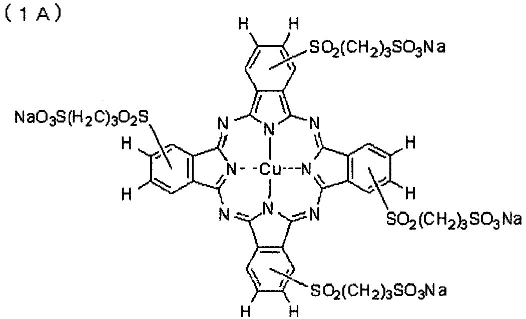

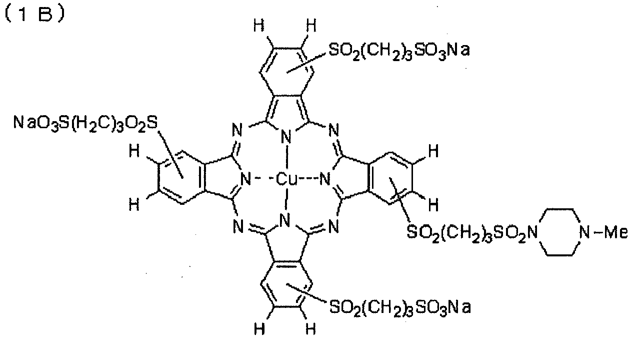

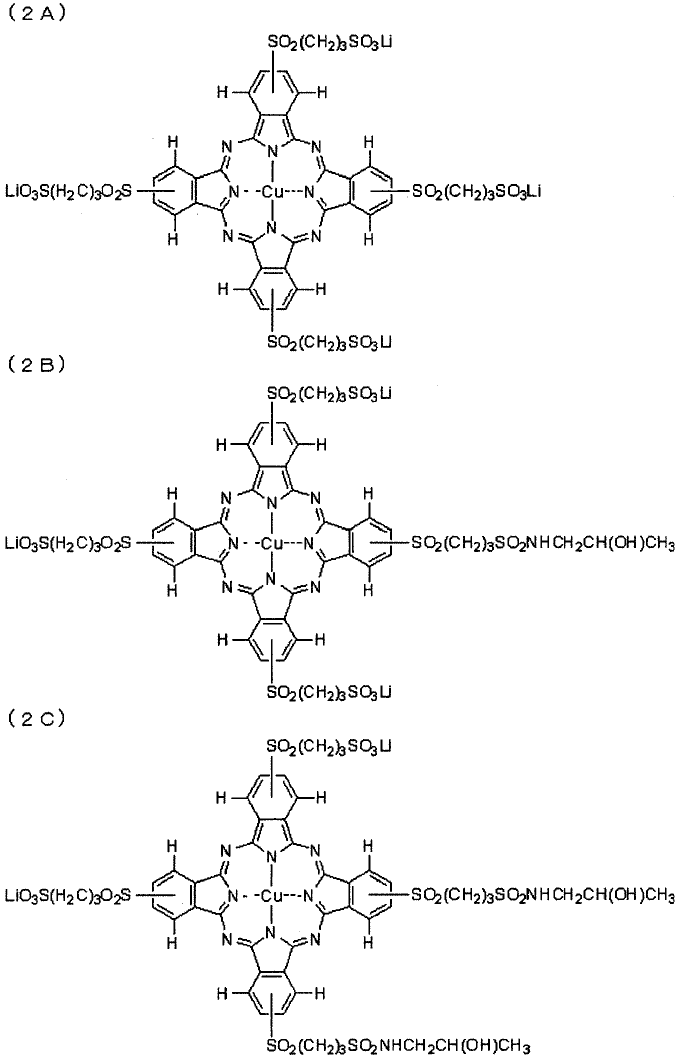

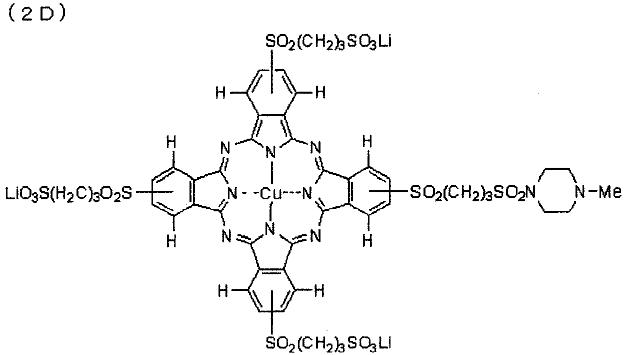

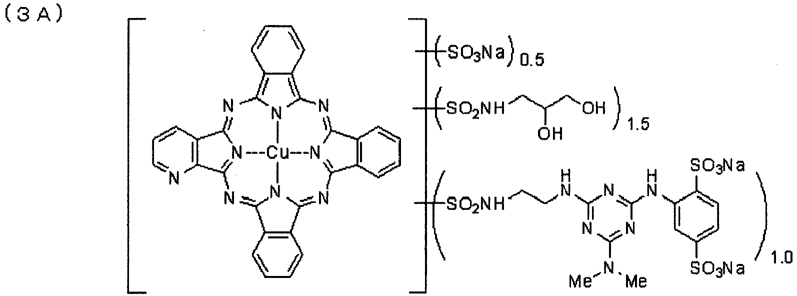

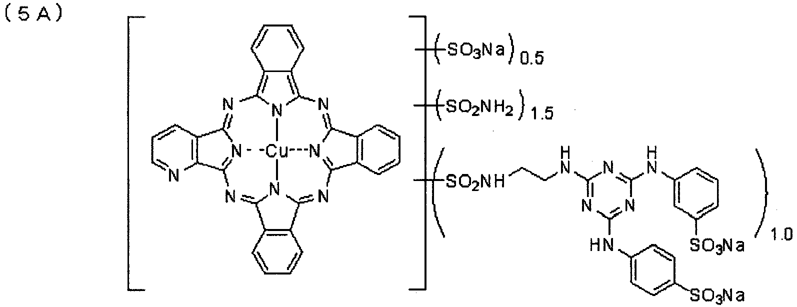

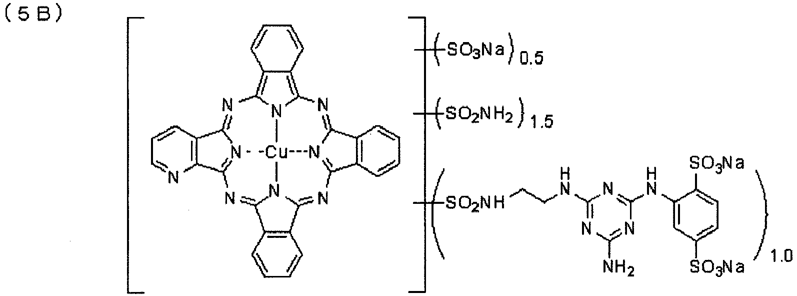

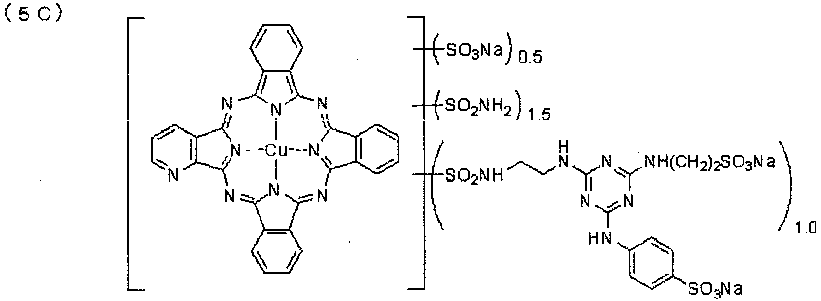

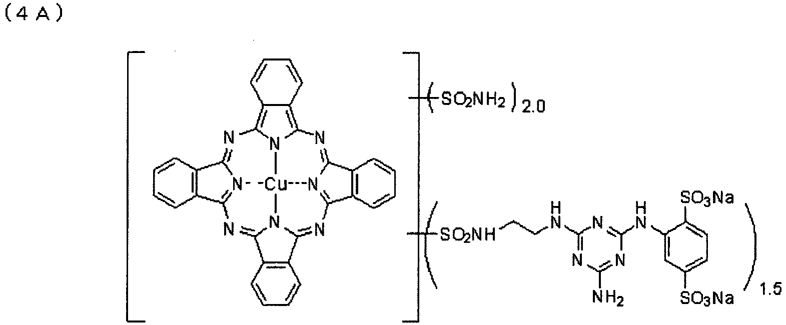

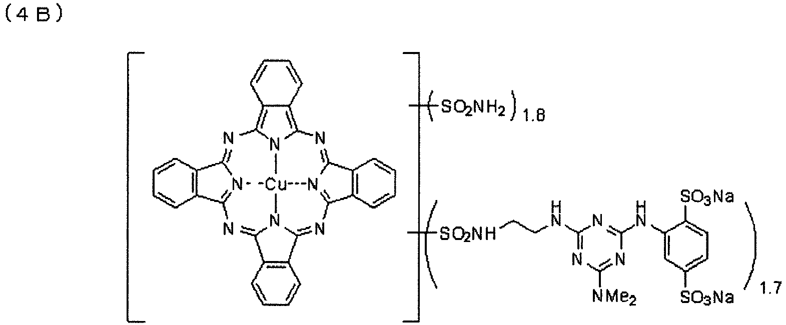

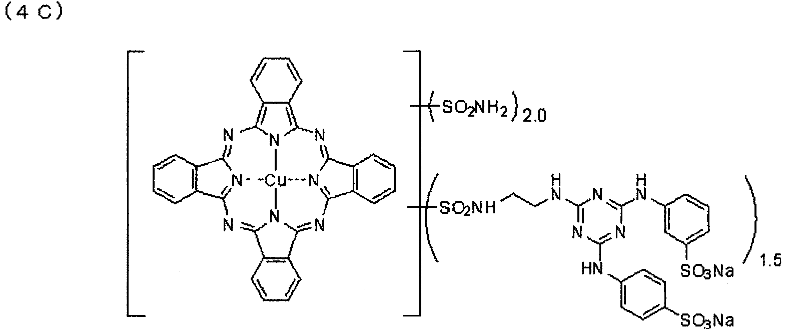

Comparative Compound 3 (Ratio of Substitution Position α/β = 50/50)

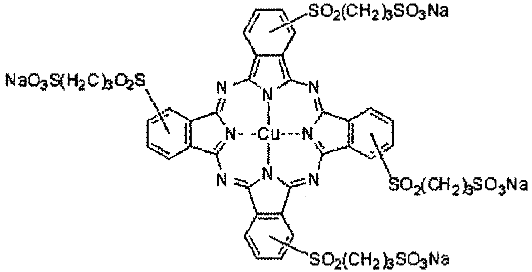

### Industrial Applicability

According to the present invention, there are provided a coloring composition, an ink for inkjet recording, an inkjet recording method, an inkjet printer cartridge, and an inkjet recording material which may have good ozone resistance while suppressing bronze gloss, and provide neutral grey or black with other yellow and magenta.

The present invention has been described with reference to specific embodiments in detail, but it is obvious to one of ordinary skill in the art that various changes and modifications will be made without departing from the spirit and scope of the present invention.

The present application is based on a Japanese patent application (Patent Application No. 2012-251692) filed on November 15, 2012, and the contents of which are incorporated herein by reference.

## Claims

1. A coloring composition comprising:
a phthalocyanine dye represented by Formula (1);
a phthalocyanine dye represented by Formula (2); and
at least one dye selected from an azaphthalocyanine dye represented by the following Formula (12), a phthalocyanine dye represented by Formula (22), and Direct Blue 199: 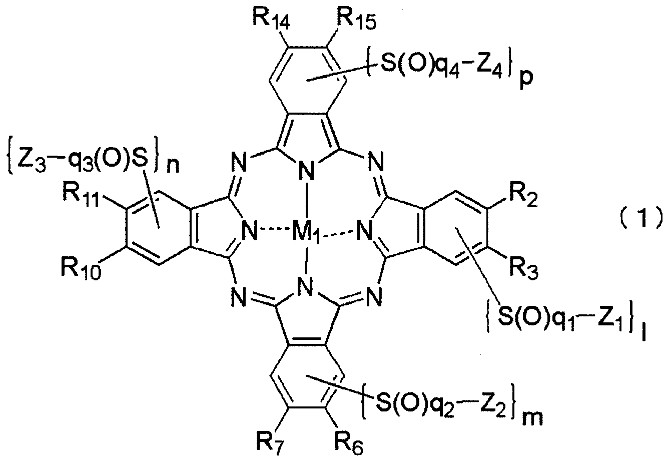 wherein, in Formula (1),
R₂, R₃, R₆, R₇, R₁₀, R₁₁, R₁₄ and R₁₅ each independently represent a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxy group, an aryloxy group, an amide group, an arylamino group, a ureido group, a sulfamoylamino group, an alkylthio group, an arylthio group, an alkoxycarbonylamino group, a sulfonamide group, a carbamoyl group, a sulfamoyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imide group, a heterocyclic thio group, a phosphoryl group, an acyl group, or an ionic hydrophilic group, and these groups may further have a substituent,
Z₁, Z₂, Z₃ and Z₄ each independently represent a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group, provided that at least one of Z₁, Z₂, Z₃ and Z₄ has an ionic hydrophilic group as a substituent,
l, m, n, p, q₁, q₂, q₃ and q₄ each independently represent 1 or 2, and
M₁ represents a hydrogen atom, a metal element, a metal oxide, a metal hydroxide or a metal halide: 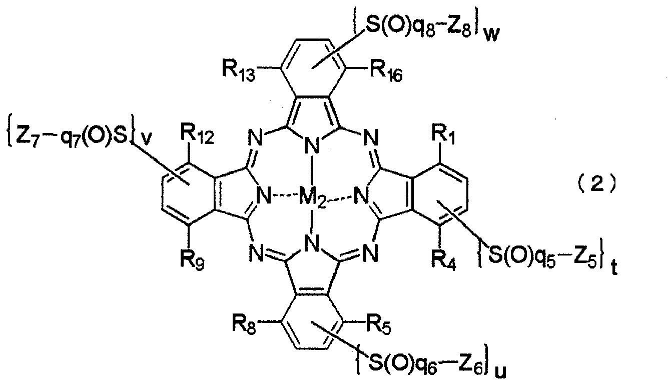 wherein, in Formula (2),
R₁, R₄, R₅, R₈, R₉, R₁₂, R₁₃ and R₁₆ each independently represent a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxy group, an aryloxy group, an amide group, an arylamino group, a ureido group, a sulfamoylamino group, an alkylthio group, an arylthio group, an alkoxycarbonylamino group, a sulfonamide group, a carbamoyl group, a sulfamoyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imide group, a heterocyclic thio group, a phosphoryl group, an acyl group, or an ionic hydrophilic group, and these groups may further have a substituent,
Z₅, Z₆, Z₇, and Z₈ each independently represent a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group, provided that at least one of Z₅, Z₆, Z₇ and Z₈ has an ionic hydrophilic group as a substituent,
t, u, v, w, q₅, q₆, q₇ and q₈ each independently represent 1 or 2, and
M₂ represents a hydrogen atom, a metal element, a metal oxide, a metal hydroxide or a metal halide: 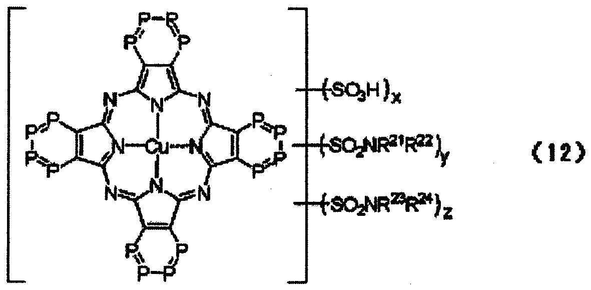 wherein, in Formula (12),
P's each independently represent a nitrogen atom or CH, and at least one of P's represents a nitrogen atom, provided that in the four rings containing P's, the number of P's representing nitrogen atoms is 2 or less, respectively,
R²¹ and R²² each independently represent a hydrogen atom or a substituted or unsubstituted alkyl group,
R²³ represents a hydrogen atom or a substituted or unsubstituted hydrocarbon group, R²⁴ represents a substituted or unsubstituted hydrocarbon group,
R²³ and R²⁴ may be bound to each other with a nitrogen atom to form a substituted or unsubstituted heterocyclic ring, and
x, y, and z each independently represent 0 to 4, and x+y+z is 1 to 4: 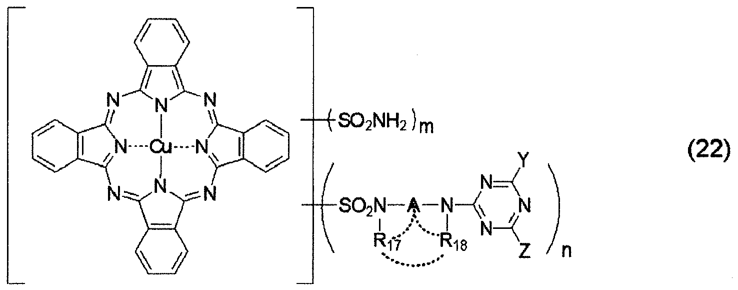 wherein, in Formula (22),
R₁₇ and R₁₈ each independently represent a hydrogen atom, a substituted or unsubstituted alkyl group, a substituted or unsubstituted cycloalkyl group, a substituted or unsubstituted aralkyl group, a substituted or unsubstituted aryl group, a substituted or unsubstituted heterocyclic group, or a substituted or unsubstituted alkenyl group,
A represents a divalent linking group
adjacent R₁₇, R₁₈, and A may be bound to each other to form a ring,
Y and Z each independently represent a halogen atom, a hydroxyl group, a sulfonate group, a carboxyl group, an amino group, a substituted or unsubstituted alkoxy group, a substituted or unsubstituted cycloalkyloxy group, a substituted or unsubstituted aryloxy group, a substituted or unsubstituted heterocyclic oxy group, a substituted or unsubstituted aralkyloxy group, a substituted or unsubstituted alkenyloxy group, a substituted or unsubstituted alkylamino group, a substituted or unsubstituted cycloalkyl amino group, a substituted or unsubstituted arylamino group, a substituted or unsubstituted heterocyclic amino group, a substituted or unsubstituted aralkylamino group, a substituted or unsubstituted alkenyl amino group, a substituted or unsubstituted dialkylamino group, a substituted or unsubstituted alkylthio group, a substituted or unsubstituted arylthio group, a substituted or unsubstituted heterocyclic thio group, a substituted or unsubstituted aralkyl thio group, or a substituted or unsubstituted alkenylthio group, provided that at least one of Y and Z has a sulfonate group, a carboxyl group, or an ionic hydrophilic group, as a substituent, and
m and n are 1 to 3, and a sum of m and n is 2 to 4.

2. The coloring composition according to claim 1,
wherein in the phthalocyanine dye represented by Formula (1), R₂, R₃, R₆, R₇, R₁₀, R₁₁, R₁₄ and R₁₅ are a hydrogen atom.

3. The coloring composition according to claim 1 or 2,
wherein in the phthalocyanine dye represented by Formula (2), R₁, R₄, R₅, R₈, R₉, R₁₂, R₁₃ and R₁₆ are a hydrogen atom.

4. The coloring composition according to any one of claims 1 to 3,
wherein in the phthalocyanine dye represented by Formula (1), Z₁, Z₂, Z₃, and Z₄ each independently represent a substituted or unsubstituted alkyl group, a substituted or unsubstituted aryl group, or a substituted or unsubstituted heterocylic group.

5. The coloring composition according to any one of claims 1 to 4,
wherein in the phthalocyanine dye represented by Formula (2), Z₅, Z₆, Z₇, and Z₈ each independently represent a substituted or unsubstituted alkyl group, a substituted or unsubstituted aryl group, or a substituted or unsubstituted heterocylic group.

6. The coloring composition according to any one of claims 1 to 5,
wherein in the phthalocyanine dye represented by Formula (2), Z₅, Z₆, Z₇, and Z₈ represent a substituted alkyl group, and
at least one of substituents contained in the alkyl group is -SO₂NHR group, provided that R represents a substituted or unsubstituted alkyl group or a substituted or unsubstituted phenyl group.

7. The coloring composition according to any one of claims 1 to 6,
wherein in the phthalocyanine dye represented by Formula (1), l, m, n and p are 1.

8. The coloring composition according to any one of claims 1 to 7,
wherein in the phthalocyanine dye represented by Formula (2), t, u, v and w are 1.

9. The coloring composition according to any one of claims 1 to 8,
wherein in the phthalocyanine dye represented by Formula (1), q₁, q₂, q₃ and q₄ are 2.

10. The coloring composition according to any one of claims 1 to 9,
wherein in the phthalocyanine dye represented by Formula (2), q₅, q₆, q₇ and q₈ are 2.

11. The coloring composition according to any one of claims 1 to 10,
wherein a mass ratio of the phthalocyanine dye represented by Formula (1) and the phthalocyanine dye represented by Formula (2), is 50/50 to 10/90.

12. The coloring composition according to any one of claims 1 to 11,
wherein a content of the phthalocyanine dye represented by Formula (1) is 1% by mass to 20% by mass.

13. The coloring composition according to any one of claims 1 to 12,
wherein the azaphthalocyanine dye represented by Formula (12) is an azaphthalocyanine dye represented by Formula (13-1) or (13-2): 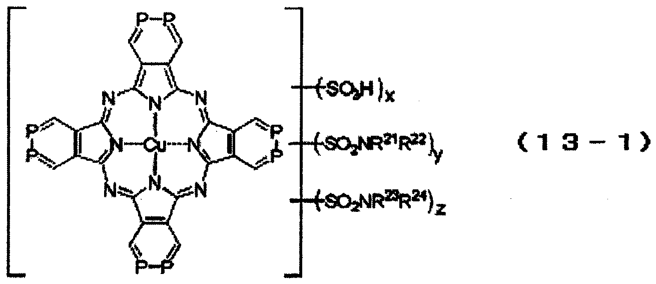 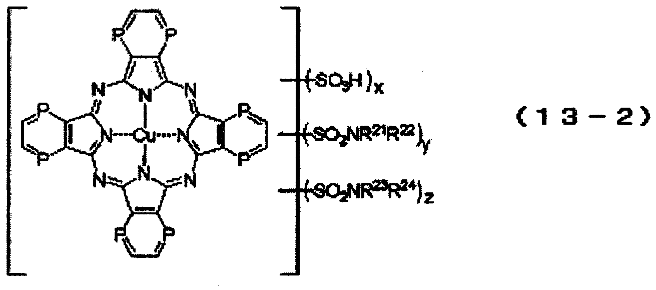 wherein in Formula (13-1) and Formula (13-2),
P's each independently represent a nitrogen atom or CH, and at least one of P's represents a nitrogen atom,
R²¹ and R²² each independently represent a hydrogen atom or a substituted or unsubstituted alkyl group,
R²³ represents a hydrogen atom, a substituted or unsubstituted alkyl group, or a substituted or unsubstituted aryl group,
R²⁴ represents a substituted or unsubstituted alkyl group, or a substituted or unsubstituted aryl group,
x, y, and z each independently represent 0 to 4, and
x + y + z is 1 to 4.

14. The coloring composition according to any one of claims 1 to 13,
wherein in Formula (12), Formula (13-1), or Formula (13-2), R²³ represents a hydrogen atom, R²⁴ is a substituted alkyl group substituted with a substituent represented by Formula (T1): 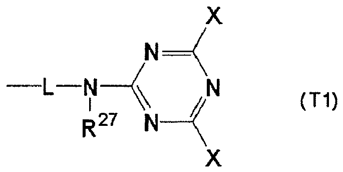 wherein, in Formula (T1),
L represents a single bond or a substituted or unsubstituted alkylene group,
X's each independently represent a substituent selected from -OR²⁵, -SR²⁵, and - NR²⁵R²⁶, R²⁵ and R²⁶ each independently represent a hydrogen atom, a substituted or unsubstituted alkyl group, a substituted or unsubstituted aryl group, or a substituted or unsubstituted heterocyclic group, and at least one of R²⁵ and R²⁶ has an ionic hydrophilic group as a substituent, and
R²⁷ represents a hydrogen atom or a substituted or unsubstituted alkyl group.

15. The coloring composition according to claim 14,
wherein a substituent represented by Formula (T1) is a substituent represented by Formula (T2): 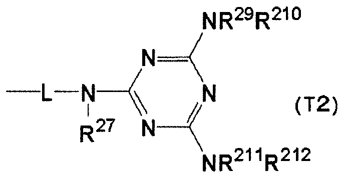 wherein, in Formula (T2),
L represents a single bond or a substituted or unsubstituted alkylene group,
R²⁹, R²¹⁰, and R²¹¹ each independently represent a hydrogen atom, or a substituted or unsubstituted alkyl group,
R²¹² represents a substituted alkyl group, a substituted aryl group, or a substituted heterocyclic group, and has at least one ionic hydrophilic group as a substituent, and
R²⁷ represents a hydrogen atom or a substituted or unsubstituted alkyl group.

16. The coloring composition according to any one of claims 1 to 15,
wherein the phthalocyanine dye represented by Formula (22) is a phthalocyanine dye represented by Formula (22-1): 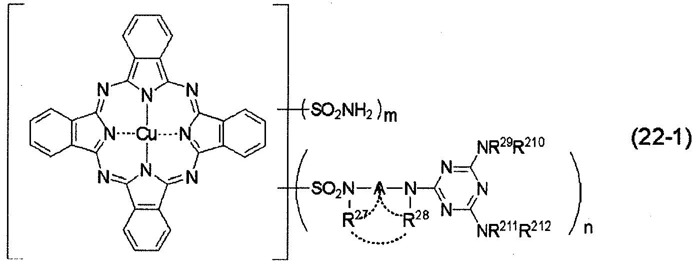 wherein, in Formula (22-1),
R²⁷ and R²⁸ each independently represent a hydrogen atom, a substituted or unsubstituted alkyl group, a substituted or unsubstituted cycloalkyl group, a substituted or unsubstituted aralkyl group, a substituted or unsubstituted aryl group, a substituted or unsubstituted heterocyclic group, or a substituted or unsubstituted alkenyl group,
A represents a divalent linking group, and adjacent R²⁷, R²⁸, and A may be bound to each other to form a ring,
R²⁹, R²¹⁰, and R²¹¹ each independently represent a hydrogen atom, or a substituted or unsubstituted alkyl group,
R²¹² represents a sulfonate group, a carboxyl group, a substituted alkyl group, a substituted aryl group, or a substituted heterocyclic group, and has at least one ionic hydrophilic group as a substituent, and
m and n are 1 to 3, and a sum of m and n is 2 to 4.

17. An ink for inkjet recording comprising the coloring composition according to any one of claims 1 to 16.

18. An inkjet recording method using the ink for inkjet recording claim according to claim 17.

19. An ink cartridge filled with the ink for inkjet recording according to claim 17.

20. An inkjet recording material which forms a color image using the ink for inkjet recording of claim 17.
